# EUROPEAN PATENT SPECIFICATION

(11) **EP 3 338 968 B1**
(45) Date of publication and mention of the grant of the patent: **13.01.2021**
(21) Application number: 17208898.1
(22) Date of filing: 20.12.2017
(51) Int. Cl.: B25J 9/16

(54) **CONTROL APPARATUS, ROBOT AND ROBOT SYSTEM**
STEUERUNGSSYSTEM, ROBOTER UND ROBOTERSYSTEM
APPAREIL DE COMMANDE, ROBOT ET SYSTÈME DE ROBOT

(30) Priority: 22.12.2016 US 201662437902 P; 24.03.2017 JP 2017059552; 27.10.2017 JP 2017207917
(43) Date of publication of application: 27.06.2018
(73) Proprietor: Seiko Epson Corporation, Tokyo 160-8801 (JP)
(72) Inventor: AISO, Seiji, Nagano, 392-8502 (JP); ISHIGE, Taro, Nagano, 392-8502 (JP); SETSUDA, Nobuyuki, Nagano, 392-8502 (JP); RUPERT, Alan, Carson, CA (US)
(74) Representative: Hoffmann Eitle

(56) References cited:
- EP-A2- 2 497 611
- EP-A2- 2 500 147
- Epson Anonymous: "EPSON RC+7.0 Option Vision Guide 7.0 Ver. 7.1 Software Rev. 3 EM158S3007F", , 24 November 2015 (2015-11-24), XP055483514, Retrieved from the Internet: URL:http://www.epson.com.cn/robots/admin/m odules/page_editor/uploads/pdf/20151124/en glish/e_VisionGuide71_Software_r3.pdf [retrieved on 2018-06-12]
- Anonymous: "AdeptSight User's Guide, v3.2.x", , 23 August 2012 (2012-08-23), XP055483538, Retrieved from the Internet: URL:http://www1.adept.com/main/ke/data/pdf _web/AdeptSight_UG.pdf [retrieved on 2018-06-12]

## Description

### [Technical Field]

This invention relates to a control apparatus, a robot and a robot system.

### [Background Art]

In related art, a robot system including a camera that captures a work, a robot that performs a job on the work based on the captured image from the camera, and a control apparatus that controls driving of the camera and the robot is known. Further, recently, to control driving of the robot with high accuracy, a method of setting a calibration between a coordinate system of the captured image and a coordinate system of the robot has been developed.

As an example of the robot system that performs the calibration, for example, JP 2016-120564 A discloses an image processing system having a robot, a robot controller that controls driving of the robot, a communication apparatus that can perform data communication with the controller, and an imaging apparatus that captures an image of a work. In the image processing system, a user determines setting details in a calibration by clicking a setting window displayed on a monitor with a mouse.

Other related art may be found in "EPSON RC+7.0 Option Vision Guide 7.0 Ver. 7.1 Software Rev. 3 EM158S3007" dated November 24, 2015 and being directed to a vision system of a robot and "AdeptSight User's Guide, v.3.2.x" dated August 23, 2012 and directed to a vision system of a robot.

### [Summary of Invention]

### [Technical Problems]

However, in the setting of the calibration in the image processing system described in JP 2016-120564 A, there are many setting details determined by a worker and determination (selection) and execution of the setting details of the calibration require skills. Further, in the case where a plurality of calibrations are desired, it is necessary to create image processing sequences with respect to each calibration, and there is a problem that the settings of the calibrations take time. Furthermore, in setting windows of related art, how to make settings is hard to understand and time and labor for the setting of the calibration are huge.

### [Solution to Problems]

The invention has been achieved for solving at least part of the above described problems and can be realized as follows.

The present invention is defined by the appendant independent claim 1. The respective dependent claims describe optional features and preferred embodiments.

A control apparatus of the invention is a control apparatus that can control driving of a robot and an imaging unit, the control apparatus includes a processing unit having an image processing sequence creation part that creates setting details on an image processing sequence containing image processing of a captured image captured by the imaging unit, and a calibration creation part that creates setting details on a calibration of correlating a robot coordinate system and an imaging unit coordinate system, in which the processing unit can call up the image processing sequence created by the image processing sequence creation part in creation of the setting details on the calibration by the calibration creation part. The processing unit has a display control part that controls driving of a display unit, and the display control part displays a plurality of image processing sequences created by the image processing sequence creation part in a calibration guide window that guides input of the setting details on the calibration, wherein the display control part displays the created plurality of image processing sequences in a dropdown list in the calibration guide window.

According to the control apparatus of the invention, in the case where a plurality of calibrations are desired, the existing (created) image processing sequences may be called up in the settings of the respective calibrations, and thereby, time and effort to create the image processing sequence at each time of the setting of the calibration may be saved. Accordingly, time and labor for the setting of the calibration may be reduced.

Thereby, in the case where settings of a plurality of calibrations are desired, time and effort to create the image processing sequences in the settings of the respective calibrations may be saved, and thereby, creation of the image processing sequence at each time of the setting of the calibration may be saved. Accordingly, the setting of the calibration becomes simpler and the user-friendliness may be significantly improved.

In the control apparatus of the invention, it is preferable that the processing unit has a control program creation part that can create a control program for driving the robot, and the control program creation part can insert a command to call up the created image processing sequence into the control program.

Thereby, for example, in a control program for allowing the robot to perform a predetermined action and perform a predetermined job, the existing (created) image processing sequence may be called up. Accordingly, time and effort to create the image processing sequence at each time of the creation of the control program may be saved.

In the control apparatus of the invention, it is preferable that the image processing sequence contains a step of inspection based on an image captured by the imaging unit.

Thereby, an object imaged by the imaging unit may be inspected using the image processing sequence.

In the control apparatus of the invention, it is preferable that the display control part allows the display unit to display calibration settings in which the setting details on the calibration have been created and image processing sequence settings in which the setting details on the image processing sequence have been created in the same window.

Thereby, a user may grasp the existing calibration settings and the existing image processing sequence settings at a glance.

In the control apparatus of the invention, it is preferable that the display control part displays the calibration settings and the image processing sequence settings in tree views.

Thereby, a user may grasp the types and number of the existing calibration settings and types and number of the existing image processing sequence settings at a glance.

In the control apparatus of the invention, it is preferable that the display control part displays the calibration settings and the image processing sequence settings correlating with each other.

Thereby, a user may easily grasp the correlated calibration settings and image processing sequence settings. Accordingly, the user may easily make a correction or the like of at least one of the calibration settings and image processing sequence settings as appropriate.

In the control apparatus of the invention, it is preferable that the image processing sequence has at least one image processing object, the display control part can display the image processing object, and a display form of the image processing object that has not been taught and a display form of the image processing object that has been taught are different.

Thereby, a user may grasp whether or not the image processing object has been taught at a glance.

A robot of the invention is controlled by the control apparatus of the invention.

According to the robot, the action with respect to the calibration may be properly performed under the control of the control apparatus.

A robot system of the invention includes the control apparatus of the invention and a robot and an imaging unit controlled by the control apparatus.

According to the robot system, the robot may properly perform the action with respect to the calibration based on the image (image data) captured by the imaging unit. Accordingly, accuracy of the calibration may be improved. As a result, accuracy of the job of the robot may be improved.

### [Brief Description of Drawings]

[Fig. 1] Fig. 1 is a network diagram of a robot vision system according to the first embodiment of the invention.
[Fig. 2] Fig. 2 is a perspective view showing an example of a robot of the robot vision system shown in Fig. 1.
[Fig. 3] Fig. 3 is a perspective view showing an example of a robot of the robot vision system shown in Fig. 1.
[Fig. 4] Fig. 4 is a system configuration diagram of the robot shown in Fig. 2 or Fig. 3.
[Fig. 5] Fig. 5 is a system configuration diagram of a computer of the robot system shown in Fig. 1.
[Fig. 6] Fig. 6 is a system configuration diagram of a robot control apparatus of the robot system shown in Fig. 1.
[Fig. 7] Fig. 7 is a system configuration diagram of an image processing apparatus of the robot system shown in Fig. 1.
[Fig. 8] Fig. 8 is a flowchart showing a flow of creation of a job program by the control system shown in Fig. 1.
[Fig. 9] Fig. 9 is a flowchart showing the flow of creation of the job program by the control system shown in Fig. 1.
[Fig. 10] Fig. 10 is a diagram for explanation of step S111 in Fig. 8.
[Fig. 11] Fig. 11 is a diagram for explanation of step S113 in Fig. 8.
[Fig. 12] Fig. 12 is a diagram for explanation of step S116 in Fig. 8.
[Fig. 13] Fig. 13 is a diagram for explanation of step S118 in Fig. 8.
[Fig. 14] Fig. 14 is a diagram for explanation of step S126 in Fig. 9.
[Fig. 15] Fig. 15 is a diagram for explanation of step S128 and step S129 in Fig. 9.
[Fig. 16] Fig. 16 is a flowchart showing a flow of execution of the job program created based on the flowcharts shown in Figs. 8 and 9.
[Fig. 17] Fig. 17 shows a main window and a sub-window for robot operation displayed on a display device shown in Fig. 1.
[Fig. 18] Fig. 18 shows a main window and a sub-window for image processing displayed on the display device shown in Fig. 1.
[Fig. 19] Fig. 19 is a flowchart showing a flow of setting of a local coordinate system shown in Fig. 8.
[Fig. 20] Fig. 20 shows a local setting window displayed on the display device shown in Fig. 1.
[Fig. 21] Fig. 21 shows a local setting window displayed on the display device shown in Fig. 1.
[Fig. 22] Fig. 22 shows a window for teaching displayed on the display device shown in Fig. 1.
[Fig. 23] Fig. 23 shows a local setting window displayed on the display device shown in Fig. 1.
[Fig. 24] Fig. 24 is a flowchart showing a flow of tool settings shown in Fig. 8.
[Fig. 25] Fig. 25 shows a tool setting window displayed on the display device shown in Fig. 1.
[Fig. 26] Fig. 26 shows a tool setting window displayed on the display device shown in Fig. 1.
[Fig. 27] Fig. 27 shows a tool setting window displayed on the display device shown in Fig. 1.
[Fig. 28] Fig. 28 is a flowchart showing a flow of a calibration shown in Fig. 9.
[Fig. 29] Fig. 29 is a flowchart showing the flow of the calibration shown in Fig. 9.
[Fig. 30] Fig. 30 shows a calibration creation window displayed on the display device shown in Fig. 1.
[Fig. 31] Fig. 31 shows a calibration creation window displayed on the display device shown in Fig. 1.
[Fig. 32] Fig. 32 shows a calibration creation window displayed on the display device shown in Fig. 1.
[Fig. 33] Fig. 33 shows a calibration creation window displayed on the display device shown in Fig. 1.
[Fig. 34] Fig. 34 shows a calibration creation window displayed on the display device shown in Fig. 1.
[Fig. 35] Fig. 35 shows a calibration creation window displayed on the display device shown in Fig. 1.
[Fig. 36] Fig. 36 shows a calibration creation window displayed on the display device shown in Fig. 1.
[Fig. 37] Fig. 37 shows a calibration creation window displayed on the display device shown in Fig. 1.
[Fig. 38] Fig. 38 shows a window for teaching displayed on the display device shown in Fig. 1.
[Fig. 39] Fig. 39 shows a state in which a property setting window is displayed in the sub-window shown in Fig. 18.
[Fig. 40] Fig. 40 shows a state in which a flow of teaching is displayed in the sub-window shown in Fig. 18.
[Fig. 41] Fig. 41 shows a state in which a flow of teaching is displayed in the sub-window shown in Fig. 18.
[Fig. 42] Fig. 42 shows a state in which a calibration execution button is displayed in the sub-window shown in Fig. 18.
[Fig. 43] Fig. 43 shows a window displayed on the display device at step S545 shown in Fig. 29.
[Fig. 44] Fig. 44 is a flowchart showing a flow of display processing in creation of an image processing sequence shown in Fig. 8.
[Fig. 45] Fig. 45 shows a sub-window displayed on the display device shown in Fig. 1.
[Fig. 46] Fig. 46 shows a list displayed on the display device shown in Fig. 1.
[Fig. 47] Fig. 47 shows a list displayed on the display device shown in Fig. 1.
[Fig. 48] Fig. 48 shows a list displayed on the display device shown in Fig. 1.
[Fig. 49] Fig. 49 shows a list displayed on the display device shown in Fig. 1.
[Fig. 50] Fig. 50 shows a list displayed on the display device shown in Fig. 1.
[Fig. 51] Fig. 51 shows a guide window in a sub-window displayed on the display device shown in Fig. 1.
[Fig. 52] Fig. 52 shows a guide window in a sub-window displayed on the display device shown in Fig. 1.
[Fig. 53] Fig. 53 shows a guide window in a sub-window displayed on the display device shown in Fig. 1.
[Fig. 54] Fig. 54 shows a sub-window displayed on the display device shown in Fig. 1 in different display from that in Fig. 45.
[Fig. 55] Fig. 55 shows a sub-window displayed on the display device shown in Fig. 1 in different display from that in Fig. 45.

### Description of Embodiments

As below, a control apparatus, a robot and a robot system of the invention will be explained in detail based on the preferred embodiments shown in the accompanying drawings.

### <Configuration of Robot Vision System (Robot System)>

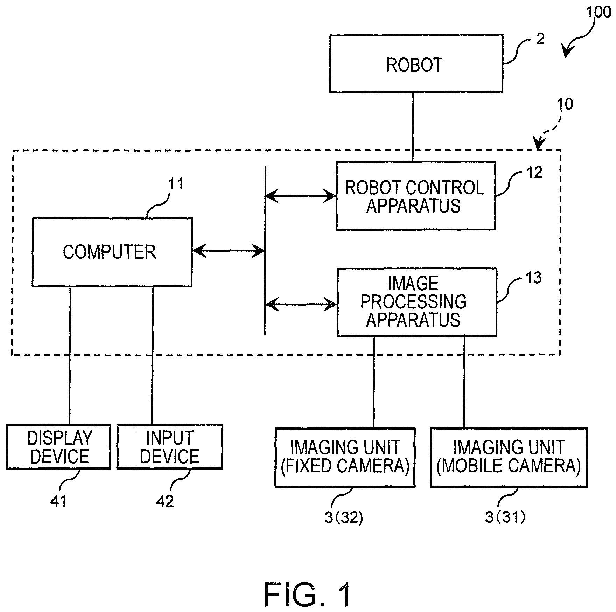

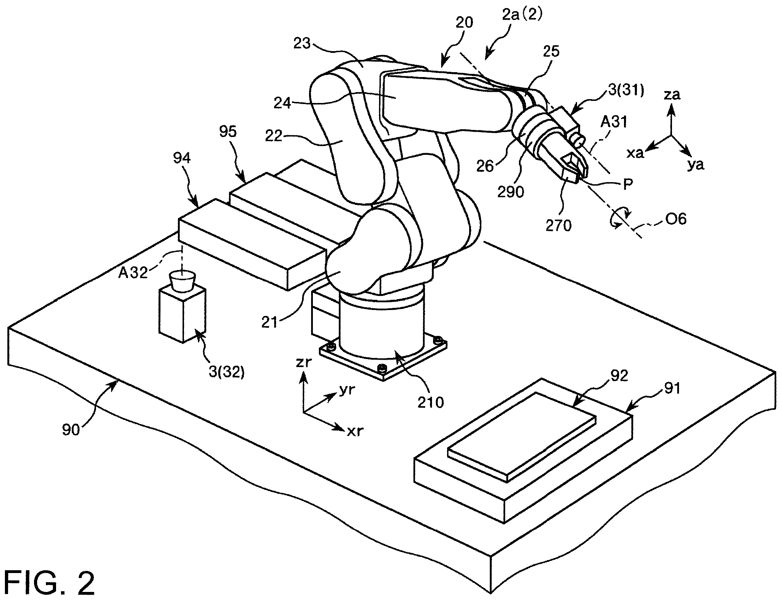

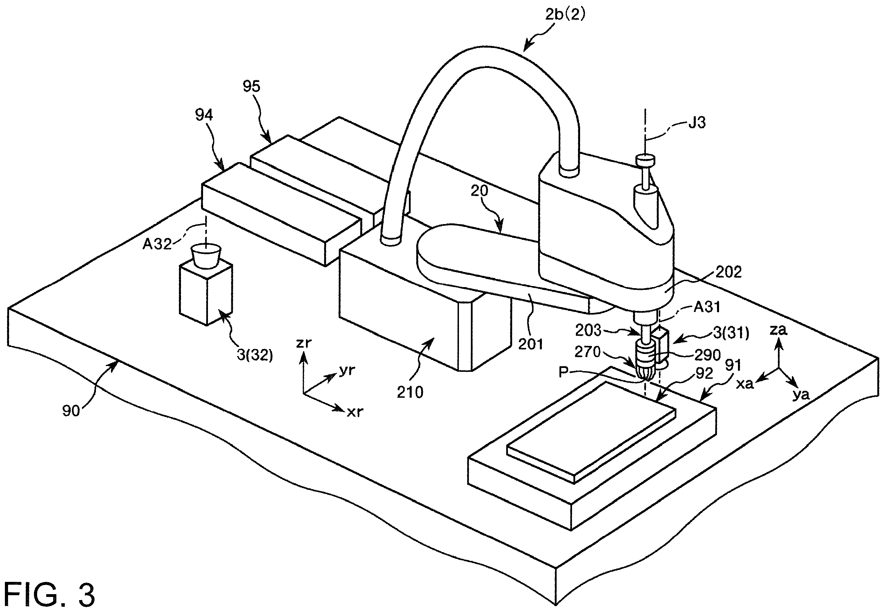

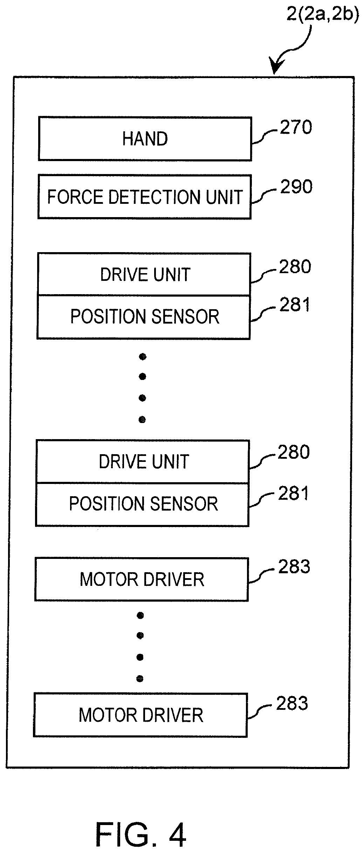

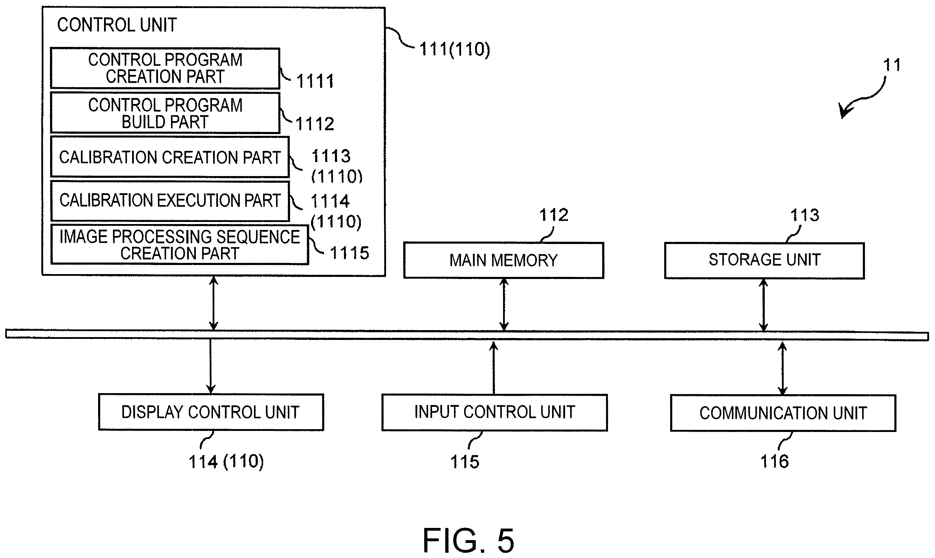

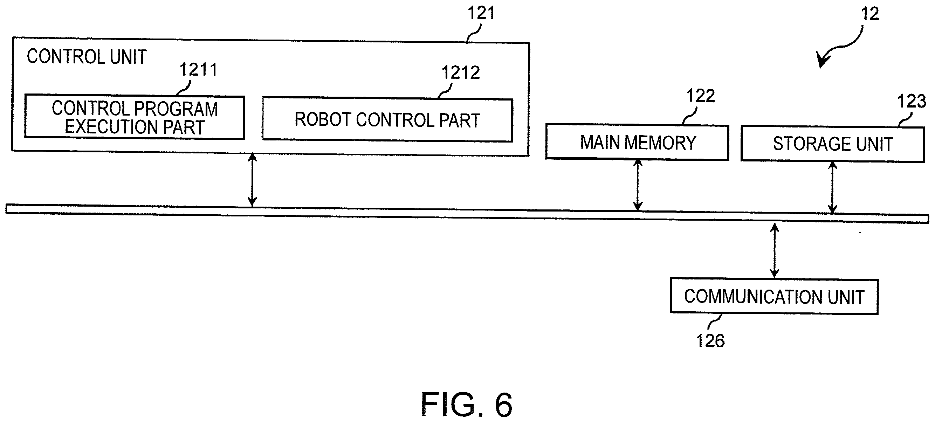

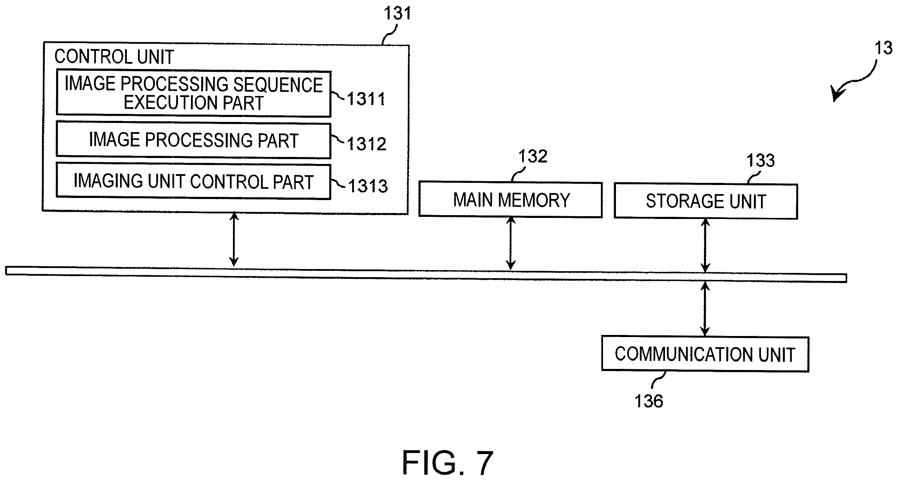

Fig. 1 is a network diagram of a robot vision system according to the first embodiment of the invention. Fig. 2 is a perspective view showing an example of a robot of the robot vision system shown in Fig. 1. Fig. 3 is a perspective view showing an example of a robot of the robot vision system shown in Fig. 1. Fig. 4 is a system configuration diagram of the robot shown in Fig. 2 or Fig. 3. Fig. 5 is a system configuration diagram of a computer of the robot system shown in Fig. 1. Fig. 6 is a system configuration diagram of a robot control apparatus of the robot system shown in Fig. 1. Fig. 7 is a system configuration diagram of an image processing apparatus of the robot system shown in Fig. 1.

Note that, hereinafter, for convenience of explanation, the upside in Figs. 2 and 3 is referred to as "upper" and the downside is referred to as "lower". Further, a base 210 side in Figs. 2 and 3 is referred to as "proximal end" and the opposite side (a hand 270 side as an end effector) is referred to as "distal end". Furthermore, upward and downward directions in Figs. 2 and 3 are referred to as "vertical directions" and leftward and rightward directions are referred to as "horizontal directions". In this specification, "horizontal" includes not only the case of being completely horizontal but also cases of being tilted within ±5° with respect to the horizontal directions. Similarly, in the specification, "vertical" includes not only the case of being completely vertical but also cases of being tilted within ±5° with respect to the vertical directions. Further, in the specification, "parallel" includes not only the case where two lines (including axes) or surfaces are completely parallel but also the cases where they are tilted within ±5°. Furthermore, in the specification, "orthogonal" includes not only the case where two lines (including axes) or surfaces are completely orthogonal but also the cases where they are tilted within ±5°.

A robot vision system (robot system) 100 shown in Fig. 1 is an apparatus used for jobs of holding, carrying, assembly, inspection, etc. of works such as an electronic part or electronic apparatus. The robot vision system 100 has a control system (control apparatus) 10, at least one robot 2, a plurality of imaging units 3 having imaging functions, a display device (display unit) 41, and an input device (input unit) 42. The control system 10 has a computer (main control apparatus, first control apparatus) 11, a robot control apparatus (second control apparatus) 12, and an image processing apparatus (third control apparatus) 13. When the robot vision system 100 has a plurality of robots 2, the system may have a plurality of the same model (type) of robots 2 (e.g. either robots 2a or robots 2b) or a plurality of different types (kinds) of robots 2 (e.g. the robot 2a and the robot 2b).

The computer 11, the robot control apparatus 12, and the image processing apparatus 13 are connected to one another via wired or wireless communication (hereinafter, also simply referred to as "connected"). Further, the respective display device 41 and input device 42 are connected to the computer 11 via wired or wireless communication. Furthermore, the robot 2 is connected to the robot control apparatus 12 via wired or wireless communication. Moreover, the respective plurality of imaging units 3 are connected to the image processing apparatus 13 via wired or wireless communication. Note that the imaging units 3, the display device 41 and the input device 42 may be respectively connected to the image processing apparatus 13.

In the robot vision system 100, for example, the imaging units 3 capture a work or the like and the robot 2 performs a job on the work or the like based on the captured images (image data) captured by the imaging units 3 under the control of the control system 10. Further, for example, the robot vision system 100 performs creation of an image processing sequence for recognition of the work using the imaging units 3 or the like and performs a calibration for correlating an imaging coordinate system and a robot coordinate system (distal end coordinate system or base coordinate system) under the control of the control system 10 so that the robot 2 can perform a job appropriately.

As below, the respective parts forming the robot vision system 100 will be explained.

### <Robot>

As shown in Fig. 1, the robot 2 is connected to the robot control apparatus 12. The type of the robot 2 that can be connected to the robot control apparatus 12 is not particularly limited. For example, the robot 2a (robot 2) as a vertical articulated robot as shown in Fig. 2 or the robot 2b (robot 2) as a horizontal articulated robot as shown in Fig. 3 may be employed. Here, "horizontal articulated robot" refers to a robot having an arm (except a spline shaft 203) acting in the horizontal directions. Further, "vertical articulated robot" refers to a robot having three or more axes (arms) and two axes of the three axes cross with (are orthogonal to) each other.

As below, the robots 2a, 2b will be briefly explained.

### (Robot 2a)

As shown in Fig. 2, the robot 2a (robot 2) is placed on e.g. a worktable 90. The robot 2a is the so-called six-axis vertical articulated robot (degree of freedom 6). The robot 2a has the base 210 attached to the worktable 90, a robot arm 20 connected to the base 210, a force detection unit 290 attached to the distal end of the robot arm 20, and a hand 270 (end effector) attached to the distal end of the force detection unit 290.

The robot arm 20 of the robot 2a has a first arm (arm) 21, a second arm (arm) 22, a third arm (arm) 23, a fourth arm (arm) 24, a fifth arm (arm) 25, and a sixth arm (arm) 26. These arms 21 to 26 are coupled in this order from the proximal end side toward the distal end side. Further, for example, the force detection unit 290 includes a force sensor (e.g. six-axis force sensor) that detects the force applied to the hand 270 (including moment) etc. Furthermore, the hand 270 has two fingers that can grasp the work and rotates with rotation of the arm 26. The hand 270 is attached so that the center axis of the hand 270 may be aligned with a rotation axis 06 of the arm 26 (distal end arm) in design. Here, the distal end center of the hand 270 is called a tool center point P. In the embodiment, the tool center point P is a center of a region between the two fingers of the hand 270. Further, the distal end center of the robot arm 20 is referred to as "distal end axis coordinates".

Further, as shown in Fig. 4, the robot 2a has drive units 280 that rotate (drive) one arm with respect to the other arm (or the base 210). The drive unit 280 has a motor (not shown) that generates a drive force and a reducer (not shown) that decelerates the drive force of the motor. As the motor of the drive unit 280, e.g. a servo motor such as an AC servo motor or DC servo motor may be used. As the reducer, e.g. a planet gear-type reducer, wave gearing device, or the like may be used. Further, in each drive unit 280, a position sensor (angle sensor) 281 that detects the rotation angle of the rotation shaft of the motor or reducer is provided. In the embodiment, the robot 2a has six drive units 280 and position sensors 281 in the same number as the six arms 21 to 26. Further, each drive unit 280 is electrically connected to a motor driver 283 and controlled by the robot control apparatus 12 via the motor driver 283.

In the robot 2a having the above described configuration, as shown in Fig. 2, as a base coordinate system with reference to the base 210, a three-dimensional coordinate system determined by an xr-axis and a yr-axis respectively parallel to the horizontal directions and a zr-axis in an upward vertical positive direction orthogonal to the horizontal directions is set. In the embodiment, the base coordinate system has the origin at the center point of the lower end surface of the base 210. A translation component with respect to the xr-axis is referred to as "component xr", a translation component with respect to the yr-axis is referred to as "component yr", a translation component with respect to the zr-axis is referred to as "component zr", a rotation component about the zr-axis is referred to as "component ur", a rotation component about the yr-axis is referred to as "component vr", a rotation component about the xr-axis is referred to as "component wr". The unit of the lengths (magnitudes) of the component xr, component yr, component zr is "mm" and the unit of the angles (magnitudes) of the component ur, component vr, component wr is "°".

Further, in the robot 2a, a distal end coordinate system with reference to the distal end portion of the hand 270 is set. The distal end coordinate system is a three-dimensional orthogonal coordinate system determined by an xa-axis, ya-axis, za-axis orthogonal to one another. In the embodiment, the distal end coordinate system has the origin at the distal end axis coordinates of the robot 2a. The base coordinate system and the distal end coordinate system have been calibrated so that the coordinates of the distal end coordinate system with reference to the base coordinate system may be calculated. Further, a translation component with respect to the xa-axis is referred to as "component xa", a translation component with respect to the ya-axis is referred to as "component ya", a translation component with respect to the za-axis is referred to as "component za", a rotation component about the za-axis is referred to as "component ua", a rotation component about the ya-axis is referred to as "component va", a rotation component about the xa-axis is referred to as "component wa". The unit of the lengths (magnitudes) of the component xa, component ya, component za is "mm" and the unit of the angles (magnitudes) of the component ua, component va, component wa is "°" .

Here, in the specification, the respective base coordinate system and distal end coordinate system are also referred to as robot coordinate systems. That is, in the specification, coordinates set with reference to any location of the robot 2 are referred to as "coordinate system of robot (robot coordinate system)" .

### (Robot 2b)

As shown in Fig. 3, the robot 2b (robot 2) is placed on e.g. a worktable 90 like the robot 2a. Like the robot 2a, the robot 2b has a base 210 attached to the worktable 90, a robot arm 20 connected to the base 210, a force detection unit 290 attached to the distal end of the robot arm 20, and a hand (end effector) 270 attached to the distal end of the force detection unit 290, which can grasp a work. Note that, regarding the robot 2b, the explanation of the same configurations as those of the robot 2a will be omitted and the explanation will be made with a focus on differences from the robot 2a.

The robot arm 20 of the robot 2b has a first arm (arm) 201, a second arm (arm) 202 provided in the distal end portion of the arm 201, and the spline shaft (arm) 203 provided in the distal end portion of the second arm 202. Further, the hand 270 is attached so that the center axis of the hand 270 may be aligned with an axis J3 of the spline shaft 203 in design. The hand 270 rotates with the rotation of the spline shaft 203.

The robot 2b has three drive units 280 and position sensors 281 in the same number as the three arms (see Figs. 3 and 4) like the robot 2a. Note that the spline shaft 203 is connected to a spline nut and a ball screw nut as a power transmission mechanism that transmits power of the drive units 280 (not shown). Accordingly, the spline shaft 203 can rotate about the axis J3 thereof and can move in the upward and downward directions (rise and fall).

Further, in the robot 2b, like the robot 2a, a base coordinate system (a three-dimensional orthogonal coordinate system determined by an xr-axis, yr-axis, zr-axis) and a distal end coordinate system (a three-dimensional orthogonal coordinate system determined by an xa-axis, ya-axis, za-axis) are set.

As above, the configurations of the robots 2 (robots 2a, 2b) are briefly explained. Note that the robots 2 controlled by the control system 10 are not limited to the configurations shown in Figs. 2 and 3. For example, the numbers of arms are not limited to the above described numbers, but arbitrary. Further, the end effector that performs jobs on the work is not limited to the hand 270, but may have any configuration.

### <Imaging Units>

As shown in Fig. 1, the plurality of imaging units 3 are respectively connected to the image processing apparatus 13. In the embodiment, as shown in Figs. 2 and 3, the robot vision system 100 has a fixed camera 32 (imaging unit 3) provided around the robot 2 and a mobile camera 31 (imaging unit 3) fixed to the robot arm 20 of the robot 2. Note that, in Figs. 2 and 3, the mobile camera 31 is attached to the distal end portion of the robot arm 20. Specifically, the mobile camera 31 is attached to the sixth arm 26 in the case of the robot 2a shown in Fig. 2 and attached to the distal end portion of the spline shaft 203 in the case of the robot 2b shown in Fig. 3.

As below, the fixed camera 32 and the mobile camera 31 will be briefly explained.

### (Fixed Camera 32)

The fixed camera 32 shown in Figs. 2 and 3 is fixed to the worktable 90 and provided within the movable range of the hand 270 of the robot 2. The fixed camera 32 has an imaging function and is placed to image the upside in the vertical direction.

The fixed camera 32 has e.g. an imaging device including a CCD (Charge Coupled Device) image sensor with a plurality of pixels and a lens (optical system) (not shown) . The fixed camera 32 forms an image of light reflected by an object to be imaged on a light receiving surface (sensor surface) of the imaging device using the lens, converts the light into an electric signal, and outputs the electric signal to the control system 10 (the image processing apparatus 13 in the embodiment). Here, the light receiving surface is a surface of the imaging device on which the image of the light is formed. Further, the fixed camera 32 is provided so that an optical axis A32 thereof (the optical axis of the lens) may be along the vertical direction of the flat surface (top surface) of the worktable 90 in design.

In the fixed camera 32, as an image coordinate system (a coordinate system of the captured image output from the fixed camera 32), a two-dimensional orthogonal coordinate system (not shown) determined by an xc-axis and a yc-axis respectively parallel to the in-plane direction of the captured image is set. Further, a translation component with respect to the xc-axis is referred to as "component xc", a translation component with respect to the yc-axis is referred to as "component yc", and a rotation component about the normal of the xc-yc plane is referred to as "component uc". The unit of the lengths (magnitudes) of the component xc and component yc is "pixel" and the unit of the angle (magnitude) of the component uc is "°". Note that the image coordinate system of the fixed camera 32 is a two-dimensional orthogonal coordinate system obtained by non-linear transform of three-dimensional orthogonal coordinates reflected in the field of view of the fixed camera 32 in consideration of the optical characteristics (focal length, distortion, etc.) of the lens and the number of pixels and the size of the imaging device.

### (Mobile Camera 31)

The mobile camera 31 shown in Figs. 2 and 3 is fixed to the robot arm 20 as described above. The mobile camera 31 has an imaging function and is placed to image the distal end side of the robot arm 20 in the embodiment.

The mobile camera 31 has e.g. an imaging device including a CCD image sensor with a plurality of pixels and a lens (optical system) (not shown) . The mobile camera 31 forms an image of light reflected by an object to be imaged on a light receiving surface (sensor surface) of the imaging device using the lens, converts the light into an electric signal, and outputs the electric signal to the control system 10 (the image processing apparatus 13 in the embodiment). Here, the light receiving surface is a surface of the imaging device on which the image of the light is formed. Further, the mobile camera 31 is provided so that an optical axis (the optical axis of the lens) A31 thereof may be along the same direction as that of the distal end axis of the robot arm 20 (the rotation axis 06 of the sixth arm 26 in the case of the robot 2a and the axis J3 of the spline shaft 203 in the case of the robot 2b) in design.

In the mobile camera 31, as an image coordinate system of the mobile camera 31 (a coordinate system of the captured image output from the mobile camera 31), a two-dimensional orthogonal coordinate system (not shown) determined by an xb-axis and a yb-axis respectively parallel to the in-plane direction of the captured image is set. Further, a translation component with respect to the xb-axis is referred to as "component xb", a translation component with respect to the yb-axis is referred to as "component yb", and a rotation component about the normal of the xb-yb plane is referred to as "component ub". The unit of the lengths (magnitudes) of the component xb and component yb is "pixel" and the unit of the angle (magnitude) of the component ub is "°". Note that the image coordinate system of the mobile camera 31 is a two-dimensional orthogonal coordinate system obtained by non-linear transform of three-dimensional orthogonal coordinates reflected in the field of view of the mobile camera 31 in consideration of the optical characteristics (focal length, distortion, etc.) of the lens and the number of pixels and the size of the imaging device.

As above, the configurations of the imaging units 3 are briefly explained. Note that the imaging units 3 controlled by the control system 10 are not limited to those illustrated. Further, the attachment locations (placement locations) of the imaging units 3 controlled by the control system 10 are not limited to the illustrated locations. For example, the attachment location of the mobile camera 31 may be in the fifth arm 25 of the robot 2a shown in Fig. 2, the second arm 202 of the robot 2b shown in Fig. 3, or the like. The fixed camera 32 may be placed on a ceiling located above the robot 2 or the like (not shown) or placed in a lateral direction on a wall, column, or the like provided around the robot 2. The imaging directions of the imaging units 3 are not particularly limited to the above described directions, but arbitrary. Further, the number of imaging units 3 is respectively two in Figs. 2 and 3, however, the number of imaging units 3 is not particularly limited, but may be one, three, or more.

### <Display device 41>

The display device (display unit) 41 shown in Fig. 1 includes a monitor including e.g. a liquid crystal display (not shown) and has a function of displaying e.g. captured images captured by the imaging units 3, various windows (e.g. operation windows and windows with respect to processing results), etc. Therefore, the user may grasp the captured images, jobs of the robot 2, etc.

### <Input Device 42>

The input device (input unit) 42 includes e.g. a mouse, keyboard, etc. Therefore, the user may give instructions of various kinds of processing etc. to the control system 10 by operating the input device 42.

Note that, in the embodiment, in place of the display device 41 and the input device 42, a display and input apparatus (not shown) including both the display device 41 and the input device 42 may be provided. As the display and input apparatus, e.g. a touch panel (electrostatic touch panel or pressure-sensitive touch panel) or the like may be used. Further, the input device 42 may be adapted to recognize sound (including voice).

### <Control System (Control Apparatus)>

As described above, the control system 10 has the computer 11, the robot control apparatus 12, and the image processing apparatus 13 (see Fig. 1). The control system 10 controls driving of the robot 2, the plurality of imaging units 3 and the display device 41. Note that, though not shown in Figs. 2 and 3, the control system 10 is placed outside of the worktable 90, for example.

As below, the control system 10, the computer 11 and the robot control apparatus 12 will be sequentially explained.

### (Computer)

The computer 11 includes e.g. a computer (e.g. a PC (Personal Computer), PLC (Programmable Logic Controller), or the like) in which a program (OS: Operating System) is installed. The computer 11 has e.g. a CPU (Central Processing Unit) and GPU (Graphics Processing Unit) as a processor, a RAM (Random Access Memory), and a ROM (Read Only Memory) in which the program is stored.

As below, the respective functions (functional parts) of the computer 11 will be explained.

As shown in Fig. 5, the computer 11 includes a control unit 111, a main memory 112, a storage unit 113, a display control unit 114, an input control unit (receiving unit) 115, and a communication unit 116 and is adapted to transmit and receive (communicate) data among these units. Here, in the specification, the control unit 111 and the display control unit 114 form a processing unit 110.

For example, the function of the control unit 111 may be realized by execution of various programs stored in the main memory 112 and the storage unit 113 by the CPU and the GPU. The control unit 111 has e.g. a control program creation part 1111, a control program build part 1112, a calibration creation part 1113, a calibration execution part 1114, and an image processing sequence creation part 1115. Note that the functional parts (elements) of the control unit 111 are not limited to these. One of the functional parts may be omitted or another functional part may be added.

The control program creation part 1111 creates a control program for driving the robot 2 (including an job program for the robot 2 to perform various jobs). That is, the control program creation part 1111 can create a control program for driving the robot 2 (including a job program the robot 2 to perform to various jobs). Further, for example, the control program creation part 1111 (computer 11) may designate various commands having predetermined augments in the control program. The control program build part 1112 builds and converts the control program into a language (data strings) that can be interpreted by the robot control apparatus 12. Note that the job program is created in the robot language. Further, creation of the control program includes creation of a new control program and rewriting of and addition to the existing control program.

The calibration creation part 1113 creates a calibration program on a calibration. That is, the calibration creation part 1113 has a function of creating setting details on the calibration. The calibration execution part 1114 executes the calibration program. Specifically, the calibration execution part 1114 transfers instructions based on the calibration program to the robot control apparatus 12 and the image processing apparatus 13 and allows the robot 1 and the imaging units 3 to perform jobs relating to the calibration. Here, in the specification, the calibration creation part 1113 and the calibration execution part 1114 form a calibration control part 1110. Note that creation of the calibration program includes creation of a new calibration program and rewriting of and addition to the existing calibration program.

The image processing sequence creation part 1115 creates an image processing program on the image processing sequence by the imaging units 3. That is, the image processing sequence creation part 1115 has a function of creating setting details on the image processing sequence. Note that creation of the image processing program includes creation of a new image processing program and rewriting of and addition to the existing image processing program.

In addition, the control unit 111 performs various calculations and determinations, and gives instructions to the respective functional parts of the computer 11, instructions to the robot control apparatus 12, instructions to the image processing apparatus 13, etc. in response to the instruction received by the input control unit 115.

The main memory 112 is a work area of the control unit 111. The function of the main memory 112 may be realized using e.g. a RAM.

The storage unit 113 has a function of recording various kinds of data (including programs). The function of the storage unit 113 may be realized by a ROM or the like or the so-called external storage device (not shown). In the storage unit 113, software (e.g. application software) including e.g. the control program for driving the robot 2, the calibration program on the calibration, the image processing program on the image processing sequence by the imaging units 3 etc. is stored. In other words, the above described software is installed in the computer 11. Further, the software includes a program on tool settings, a program on local settings (settings of local coordinate systems), programs for driving various robots 2 using various commands to execute various kinds of processing (e.g. tool settings, local settings, calibration creation and execution (calibration), image processing sequence creation and execution (creation of the image processing sequence), etc.), and programs for setting various parameters in force control based on the output from the force control unit 290. Further, the above described software may be stored in e.g. a recording medium such as a CD-ROM (not shown) and provided from the recording medium, or provided via a network.

The display control unit 114 is connected to the display device 41 and has a function of allowing the monitor of the display device 41 to display captured images and various windows (e.g. operation windows and windows relating to processing results). That is, the display control unit 114 controls driving of the display device 41. The function of the display control unit 114 may be realized by e.g. a GPU. For example, the display control unit 114 allows the display device 41 to sequentially display a plurality of guide windows relating to the image processing sequence dialogically (interactively) with the user. Further, the display control unit 114 allows the display device 41 to sequentially display a plurality of calibration creation windows relating to the calibration, a plurality of tool setting windows relating to tool settings, and a plurality of local setting windows relating to settings of local coordinate systems respectively and dialogically with the user.

The input control unit 115 is connected to the input device 42 and has a function of receiving the input from the input device 42. The function of the input control unit 115 may be realized by e.g. an interface circuit. Note that, in the case of using a touch panel, the input control unit 115 has a function as an input sensing unit that senses contact of a finger of the user with the touch panel or the like.

The communication unit 116 has a function of transmitting and receiving data to and from outside, the robot control apparatus 12, the image processing apparatus 13, etc. The function of the communication unit 116 may be realized using e.g. an interface circuit or the like.

### (Robot Control Apparatus)

The robot control apparatus 12 controls the driving of the robot 2 according to the instructions from the computer 11, for example. The robot control apparatus 12 is a computer in which programs (OS etc.) are installed. The robot control apparatus 12 has e.g. a CPU as a processor, RAM, and ROM in which the programs are stored.

As below, the respective functions (functional units) of the robot control apparatus 12 will be explained.

As shown in Fig. 6, the robot control apparatus 12 has a control unit (robot control unit) 121, a main memory 122, a storage unit 123, and a communication unit 126, and is adapted to transmit and receive (communicate) data among these units.

For example, the function of the control unit 121 may be realized by execution of various programs stored in the main memory 122 and the storage unit 123 by the CPU. The control unit 121 has e.g. a control program execution part 1211 and a robot control part 1212. Note that the functional parts (elements) of the control unit 121 are not limited to these. One of the functional parts may be omitted or another functional part may be added.

The control program execution part 1211 executes the control program for driving the robot 2 according to the instruction from the computer 11. For example, the control program execution part 1211 executes various kinds of processing (e.g. execution instructions of tool settings, local settings, calibration processing (calibration) and image processing sequence etc.) on the robot 2 by various commands. The robot control part 1212 controls driving of the respective drive units 280 to drive and stop the robot arm 20. For example, the control unit 121 derives target values of the motors (not shown) of the respective drive units 280 for moving the hand 270 to a target position based on the information output from the position sensors 281 and the force detection unit 290. In addition, the control unit 121 has a function of performing processing of various calculations and determinations, a function of giving instructions of the robot control apparatus 12, etc.

The main memory 122 is a work area of the control unit 121. The function of the main memory 122 may be realized using e.g. a RAM. The storage unit 123 has a function of recording various kinds of data (including programs) . The storage unit 123 records e.g. the control program etc. The function of the storage unit 123 may be realized by a ROM or the like or the so-called external storage device (not shown). The communication unit 126 has a function of transmitting and receiving data to and from outside, the robot 2, the computer 11, the image processing apparatus 13, etc. The function of the communication unit 126 may be realized using e.g. an interface circuit or the like.

### (Image Processing Apparatus)

The image processing apparatus 13 controls driving of the imaging units 3 and performs processing of the captured images captured by the imaging units 3 (image processing) according to the instructions from the computer 11, for example. The image processing apparatus 13 is a computer in which programs (OS etc.) are installed. The image processing apparatus 13 has e.g. a CPU and GPU as processors, RAM, and ROM in which the programs are stored.

As below, the respective functions (functional units) of the image processing apparatus 13 will be explained.

As shown in Fig. 7, the image processing apparatus 13 has a control unit (imaging unit control unit) 131, a main memory 132, a storage unit 133, and a communication unit 136, and is adapted to transmit and receive (communicate) data among these units.

For example, the function of the control unit 131 may be realized by execution of various programs stored in the main memory 132 and the storage unit 133 by the CPU and GPU. The control unit 131 has e.g. an image processing sequence execution part 1311, an image processing part 1312, and an imaging unit control part 1313. Note that the functional parts (elements) of the control unit 131 are not limited to these. One of the functional parts may be omitted or another functional part may be added.

The image processing sequence execution part 1311 has a function of executing the image processing sequence according to the instructions (commands) from the computer 11. The image processing part 1312 has a function of performing image processing of extracting various kinds of information from the captured images, for example. Specifically, the image processing part 1312 performs e.g. processing of various calculations, various determinations, etc. based on the captured images (image data) from the imaging units 3 etc. For example, the image processing part 1312 calculates the coordinates (components xb, yb, ub or components xc, yc, uc) of the object to be imaged in the image coordinate system based on the captured images. Further, for example, the image processing part 1312 converts the coordinates in the image coordinate system (image coordinates) into coordinates in the distal end coordinate system of the robot 2 (distal end coordinates) or coordinates in the base coordinate system of the robot 2 (base coordinates). The correction parameters used for the conversions are obtained by the computer 11 or robot control apparatus 12, for example. Note that the image processing apparatus 13 may obtain the correction parameters used for the conversions. Further, for example, the imaging unit control part 1313 has a function of controlling driving of the imaging units 3 and acquiring the captured images (image data) from the imaging units 3.

In addition, the control unit 131 has a function of performing various calculations and determinations, a function of giving instructions to the respective functional units of the image processing apparatus 13, etc. in response to the instructions from the computer 11.

The main memory 132 is a work area of the control unit 131. The function of the main memory 132 may be realized using e.g. a RAM.

The storage unit 133 has a function of recording various kinds of data (including programs) . The storage unit 133 records e.g. the programs on the image processing sequence etc. The function of the storage unit 133 may be realized by a ROM or the like or the so-called external storage device (not shown).

The communication unit 136 has a function of transmitting and receiving data to and from outside, the imaging units 3, the robot control apparatus 12, the computer 11, etc. The function of the communication unit 136 may be realized using e.g. an interface circuit or the like.

As above, the configurations and the functions of the control system 10 are explained. Note that any of the computer 11, the robot control apparatus 12, and the image processing apparatus 13 may have the respective functions that the above described computer 11, the robot control apparatus 12, and the image processing apparatus 13 respectively have. Or, the computer 11, the robot control apparatus 12, and the image processing apparatus 13 may be integrated. For example, the control unit 111 of the computer 11 may have the image processing sequence execution part 1311, the image processing part 1312, and the imaging unit control part 1313 of the image processing apparatus 13. The image processing apparatus 13 may have the display control unit 114 and the input control unit 115 of the computer 11. Or, the control system 10 does not necessarily include the image processing apparatus 13. In this case, the computer 11 may have the respective functions of the image processing apparatus 13. Or, the control unit 121 of the robot control apparatus 12 may have the calibration execution part 1114 of the computer 11.

As above, the basic configuration of the robot vision system 100 is briefly explained.

Next, examples of job program creation and teaching will be explained. Note that, as below, the case where the robot 2a shown in Fig. 2 is used as the robot 2 will be explained as an example.

### <Creation of Job Program>

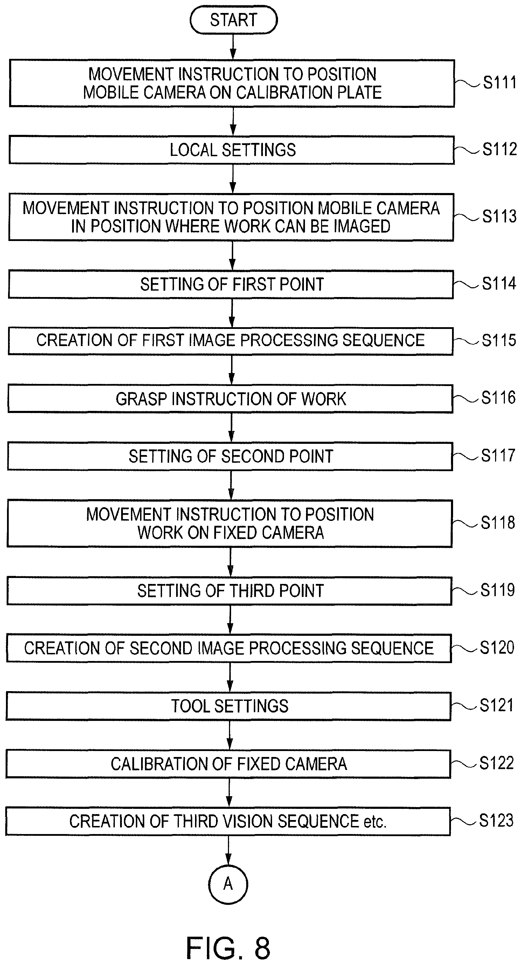

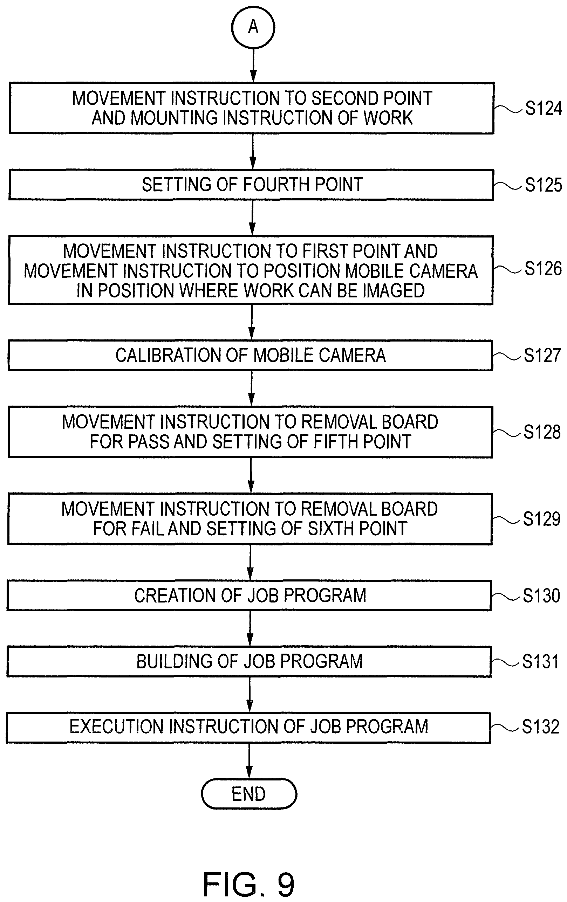

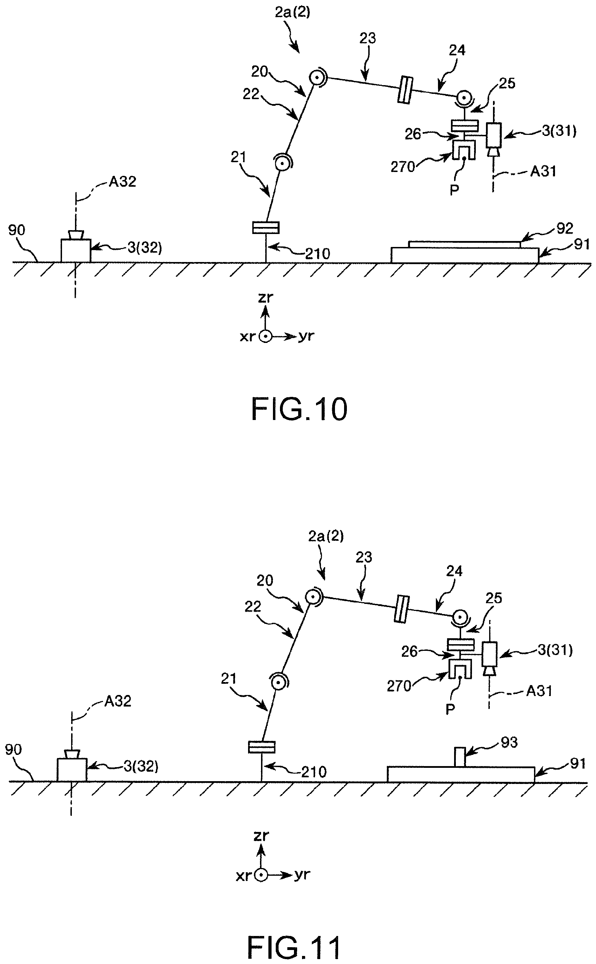

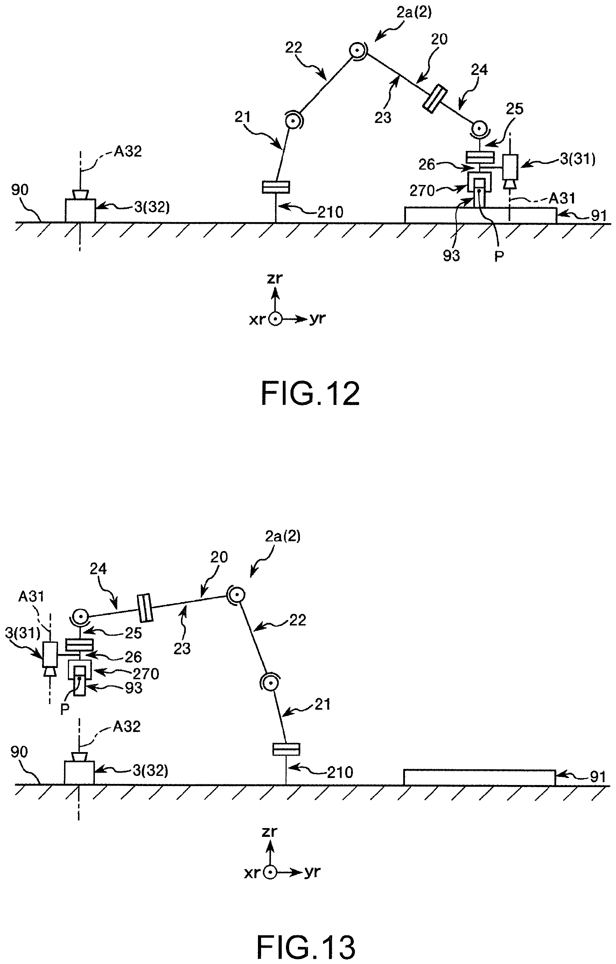

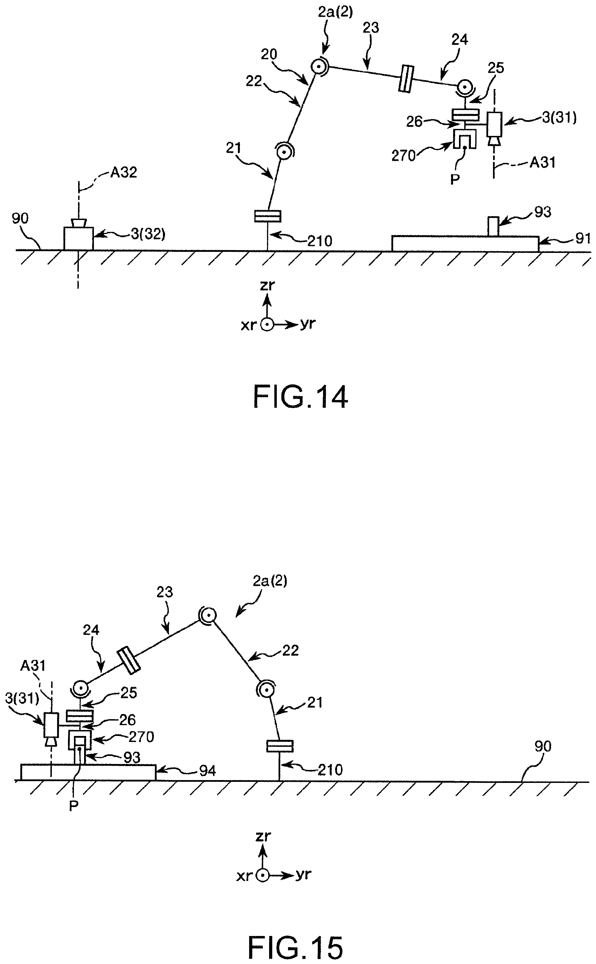

Figs. 8 and 9 are respectively flowcharts showing a flow of creation of a job program by the control system shown in Fig. 1. Fig. 10 is a diagram for explanation of step S111 in Fig. 8. Fig. 11 is a diagram for explanation of step S113 in Fig. 8. Fig. 12 is a diagram for explanation of step S116 in Fig. 8. Fig. 13 is a diagram for explanation of step S118 in Fig. 8. Fig. 14 is a diagram for explanation of step S126 in Fig. 9. Fig. 15 is a diagram for explanation of step S128 and step S129 in Fig. 9.

As below, for example, a job program of a job by the robot 2a shown in Fig. 2 grasping a work (not shown in Fig. 2) on a feed board 91 placed on the worktable 90, performing an inspection (e.g. appearance inspection) of the work on the fixed camera 32, and mounting the work on a removal board for pass 94 or removal board for fail 95 based on the inspection result is generated. Further, various kinds of processing necessary for creation of the job program is performed. As the various kinds of processing, for example, a calibration between the image coordinate system of the mobile camera 31 and the robot coordinate system of the robot 2a (distal end coordinate system or base coordinate system) and a calibration between the image coordinate system of the fixed camera 32 and the robot coordinate system of the robot 2a (distal end coordinate system or base coordinate system) are performed. For example, teaching of the respective locations to the robot 2a is performed. For example, tool settings of obtaining offset at the tool center point P and the distal end axis coordinate (offset of one with respect to the other of the tool center point P and the distal end axis coordinate) of the robot 2a is performed. Further, settings of a local coordinate system (local settings) different from the robot coordinate system is performed. Furthermore, creation of an image processing sequence such as image processing sequence creation, execution and reflection of results (image processing sequence) is performed.

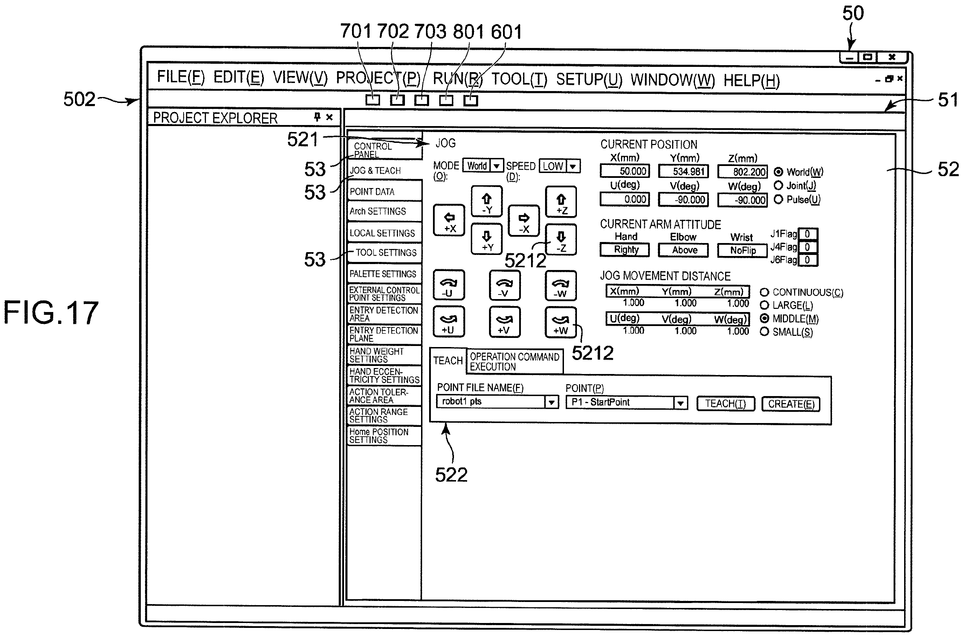

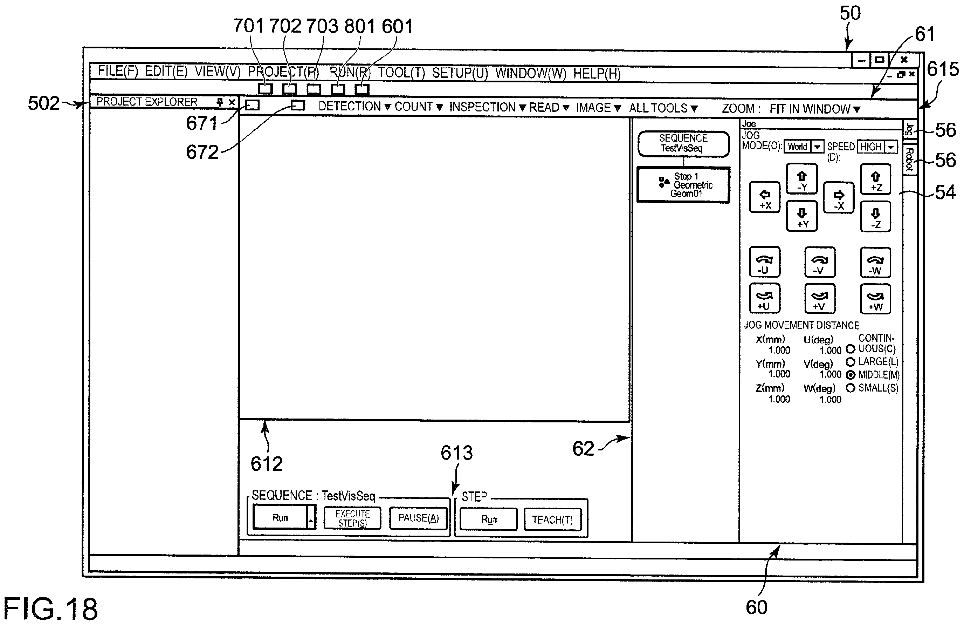

Here, before execution of the creation of the job program, as shown in Fig. 2, the user mounts a calibration plate (calibration member) 92 on the feed board 91 placed on the worktable 90. Further, the display control unit 114 allows the display device 41 to display a main window (instruction window) 50 (see Fig. 17 or 18). The main window 50 will be described later in detail.

Afterward, the user gives instructions to the control system 10 by operations of clicking various windows displayed on the display device 41 using the mouse of the input device 42 and operations of inputting characters, numerals, etc. to the instruction windows displayed on the display device 41 using the keyboard of the input device 42. That is, the control (processing) by the control system 10 in the following creation of the job program is performed according to the instructions by the user using the input device 42. Hereinafter, the instructions by the user using the input device 42 (i.e., input by the input device 42) are referred to as "operation instructions". The operation instructions include operation instructions including selection operations of selecting desired contents from the contents displayed on the instruction windows, input instructions of inputting characters, numerals, etc. on the instruction windows by the input device 42, etc.

As below, the job program creation will be explained based on the flowchart shown in Figs. 8 and 9.

First, the computer 11 issues a movement instruction of positioning the mobile camera 31 on the calibration plate 92 to the robot control apparatus 12 (Fig. 8: step S111). In response to the movement instruction, the robot control apparatus 12 drives the robot arm 20 to position the mobile camera 31 on the calibration plate 92 (see Fig. 10). In the embodiment, the mobile camera 31 is opposed to the calibration plate 92 so that the optical axis A31 of the mobile camera 31 may be roughly orthogonal to the calibration plate 92. Further, the mobile camera 31 is positioned to focus on a marker (not shown) attached to the calibration plate 92 of the mobile camera 31.

Then, the computer 11 performs settings of the local coordinate system, i.e., local settings (Fig. 8: step S112). The local coordinate system is a coordinate system different from the robot coordinate system (base coordinate system or distal end coordinate system) and three-dimensional coordinate system determined by an origin, xd-axis, yd-axis, zd-axis defined in the robot coordinate system. In the embodiment, as a plane parallel to the worktable 90, a local plane (virtual plane) containing the xd-axis and the yd-axis of the local coordinate system is set to a plane parallel to the upper surface of the calibration plate 92 using the mobile camera 31. Thereby, for example, even in the case where the upper surface of the feed board 91 is inclined with respect to the horizontal plane, the robot 2a may perform a precise job on the upper surface of the feed board 91. Note that, in the case where the robot 2b shown in Fig. 3 is used, the settings of the local coordinate system may be omitted. Further, the above described local settings refer to settings of the above described local coordinate systems and include settings of the local coordinate system by various kinds of settings in the local settings (including display processing in the local settings), execution of the processing of the local settings, and reflection of the local setting results.

The specific setting method of the local settings is not particularly limited, but a method of obtaining the settings based on captured images formed by imaging at least three markers (not shown) attached to the calibration plate 92 one by one and the distal end coordinates of the tool center point P at imaging, for example.

Further, the local settings are performed by display processing using the instruction windows, which will be described later. Note that the display processing in the local settings will be explained later.

When the settings of the local coordinate system end, the user takes off the calibration plate 92 from the feed board 91 and mounts a work 93 on the feed board 91 (see Fig. 11).

Then, the computer 11 issues a movement instruction to position the mobile camera 31 to a position where the camera may image the work 93 to the robot control apparatus 12 (Fig. 8: step S113) . In response to the movement instruction, the robot control apparatus 12 drives the robot arm 20 to position the mobile camera 31 to the position where the camera may image the work 93 (see Fig. 11). The movement is performed by moving the mobile camera 31 to an attitude in which the optical axis A31 (the distal end axis of the robot 2a) may be orthogonal to the local plane, and then, moving the mobile camera 31 into the local plane without changing the attitude of the mobile camera 31. Further, to focus on the upper surface of the work 93, the camera may be also moved in a direction orthogonal to the local plane.

Then, the computer 11 sets the distal end axis coordinates (components xr, yr, zr, ur, vr, wr) of the robot 2a at step S113 as a first point and stores the point in the storage unit 113 (Fig. 8: step S114).

Then, the computer 11 issues instructions (commands) to the robot control apparatus 12 and the image processing apparatus 13 and creates a first image processing sequence on a marker (not shown) attached to the center of the upper surface of the work 93 (Fig. 8: step S115).

Here, the image processing sequence contains a method and a procedure of capturing images from the imaging units 3, processing the captured images, and performing detections, inspections, etc. of predetermined parts on the captured images. The creation of the image processing sequence includes various settings of the image processing sequence, teaching of the parts, and execution and reflection of the image processing sequence. Further, the first image processing sequence refers to the image processing sequence with respect to the marker attached to the center of the upper surface of the work 93 as a part.

Further, the creation of the first image processing sequence etc. are performed by the display processing using the instruction window, which will be described later. Note that the display processing in the first image processing sequence will be explained later.

Then, the computer 11 issues a grasp instruction to grasp the work 93 to the robot control apparatus 12 (Fig. 8: step S116) . In response to the grasp instruction, the robot control part 1212 allows the robot 2a to drive the robot arm 20 and the hand 270 to grasp the work 93 (see Fig. 12). Then, the computer 11 sets the distal end axis coordinates (components xr, yr, zr, ur, vr, wr) of the robot 2a at step S116 as a second point and stores the point in the storage unit 113 (Fig. 8: step S117) . Here, for the position of the tool center point P (component za), the position where the work 93 is grasped is used.

Then, the computer 11 issues a movement instruction to position the work 93 on the fixed camera 32 to the robot control apparatus 12 (Fig. 8: step S118). In response to the movement instruction, the robot control apparatus 12 drives the robot arm 20 and positions the work 93 to a position focused on the work 93 within the field of view of the fixed camera 32 (see Fig. 13) . Then, the computer 11 sets the distal end axis coordinates (components xr, yr, zr, ur, vr, wr) of the robot 2a at step S118 as a third point and stores the point in the storage unit 113 (Fig. 8: step S119).

Then, the computer 11 issues instructions (commands) to the robot control apparatus 12 and the image processing apparatus 13 and creates a second image processing sequence (second vision sequence) of a marker (not shown) attached to the center of the lower surface of the work 93 (Fig. 8: step S120) . Here, the second image processing sequence refers to the image processing sequence with respect to the marker attached to the center of the lower surface of the work 93 as a part.

Note that it is difficult to respectively provide the markers in completely the same position at the upper surface center and the lower surface center of the work 93, and accordingly, the same target such as a through hole provided in the work 93 is recognized from above and below the work 93, for example.

Further, the creation of the second image processing sequence etc. are performed by the display processing using the instruction windows, which will be described later. Note that the display processing in the second image processing sequence will be explained later.

Then, the computer 11 issues instructions to the robot control apparatus 12 and the image processing apparatus 13 and makes the tool settings (Fig. 8: step S121). Here, the tool settings include obtaining offset (position and attitude relationships) between the axis coordinates of the distal end axis of the robot etc. and coordinates of a predetermined part of the tool, and various kinds of settings in the tool settings (including display processing), execution of the processing of the tool settings, and reflection of tool setting results. Thereby, robot coordinates of the predetermined part of the tool are known. Further, the tool may be any object as long as the object is provided in the robot 2a including e.g. the imaging unit 3 and the work 93. At step S121, with the work 93 as the tool, the offset between the distal end axis coordinates of the robot 2a and the center of the work 93 of the robot 2a is obtained. Thereby, robot coordinates of the center of the work 93 in various robot attitudes may be calculated, and grasping of another work 93 and movement, inspection, etc. of the grasped work 93 may be precisely performed.

The method of obtaining the offset is not particularly limited, but includes e.g. a method of fixing one position of the distal end axis coordinates of the robot 2a and the center of the work 93 and moving (rotating, for example) the other position and obtaining the offset based on the distal end coordinates and amounts of movement (e.g. rotation angles) of the tool center point P and the center of the work 93 before and after the movement.

Further, the tool settings are performed by display processing using the instruction windows, which will be described later. Note that the display processing in the tool settings will be explained later.

Then, the computer 11 issues instructions to the robot control apparatus 12 and the image processing apparatus 13 and performs a calibration for correlating the image coordinate system of the fixed camera 32 with the local coordinates (robot coordinate system) using the marker attached to the center of the lower surface of the work 93 (Fig. 8: step S122). Here, the calibration is to correlate the image coordinate system with the robot coordinate system, and includes various settings in the calibration (including the display processing), i.e., calibration creation, teaching of camera points, execution of a calibration, and correlation of the image coordinate system with the robot coordinate system by reflection of a calibration result. Here, of the robot coordinate system, the local coordinates set in parallel to the worktable 90 are correlated with the image coordinate system.

The specific method of the calibration is not particularly limited, but includes e.g. a method of positioning targets (objects to be imaged) such as single marker at at least three or more camera points within the captured image and using the image coordinates based on the captured images at the respective camera points and a transformation matrix for image coordinates obtained based on the robot coordinates of the targets such as markers at imaging and the robot coordinates. The robot coordinates of the markers or the like at the respective camera points may be calculated using positions and attitudes of the axis coordinates of the distal axis of the robot etc. and the above described tool settings (offset) . Thereby, the image coordinate system may be correlated with the robot coordinate system and the image coordinates may be converted into the robot coordinates. Accordingly, the robot coordinates of the object to be imaged on the captured image may be obtained. Note that, at step S122, nine of the camera points are set.

The calibration of the fixed camera 32 is performed by the display processing using the instruction windows, which will be described later. Note that the display processing in the calibration will be explained later.

Then, the computer 11 issues instructions to the robot control apparatus 12 and the image processing apparatus 13 and performs creation of a third image processing sequence (third vision sequence) for detection of two points A (not shown) and a point B (not shown) attached to the lower surface of the work 93 (Fig. 8: step S123) etc. Here, the third image processing sequence refers to the image processing sequence with respect to the detection of the points A (parts) and the point B (part) attached to the lower surface of the work 93. Further, at step S123, an inspection is performed by correlation of the third image processing sequence and the calibration result of the fixed camera 32 and execution of image processing using the created image processing sequence. Here, as the inspection, an inspection of measuring the distances between the points A and the point B and, if the distance is within a predetermined threshold value, determining as pass and, if not, determining as fail. Here, the calibration (calibration result) using the image coordinates and the robot coordinates is correlated, and thereby, the distances between the points A and the point B may be determined not by the unit of the length on the image (pixel), but by the unit of the robot coordinates (mm or the like).

The creation of the third image processing sequence is performed by the display processing using the instruction windows, which will be described later. Note that the display processing in the third image processing will be explained later.

Then, the computer 11 issues a movement instruction to the second point set at step S117 to the robot control apparatus 12, and issues a mounting instruction to mount the work 93 on the feed board 91 (Fig. 9: step S124). In response to the movement instruction, the robot control apparatus 12 allows the robot 2a to drive the robot arm 20 and positions the distal end axis coordinates (components xr, yr, zr, ur, vr, wr) of the robot 2a at the second point and the hand 270 to mount the work 93 on the feed board 91 (see Fig. 14). Then, the computer 11 sets the position of the center of the work 93 (components xr, yr, zr, ur, vr, wr) as a fourth point based on the tool settings at step S121 and stores the point in the storage unit 113 (Fig. 9: step S125) .

Then, the computer 11 allows the robot control apparatus 12 to separate the work 93 from on the feed board 91, then, moves the work to the first point obtained at step S114, and issues a movement instruction to position the mobile camera 31 to a position where the work 93 mounted on the feed board 91 may be imaged (Fig. 9: step S126) . In response to the movement instruction, the robot control apparatus 12 allows the robot 2a to separate the work 93 on the feed board 91 by the hand 270, then, position the tool center point P to the first points, and position the mobile camera 31 to a position where the work 93 mounted on the feed board 91 may be imaged.

Then, the computer 11 issues instructions to the robot control apparatus 12 and the image processing apparatus 13 and performs a calibration of the image coordinate system of the mobile camera 31 and the robot coordinate system using the marker attached to the center of the upper surface of the work 93 and the robot coordinates saved as the fourth point (at the fourth point) (Fig. 9: step S127).

In the calibration at step S127, the marker attached to the center of the upper surface of the work 93 is used as one target (object to be imaged), and the mobile camera 31 is moved with respect to the work 93 to image the marker at nine camera points within the captured image. Then, a transformation matrix for image coordinates and distal end coordinates is obtained using the image coordinates based on the captured images at the nine camera points and the robot coordinates of the marker attached to the upper surface of the work 93 saved as the fourth point (at the fourth point). Thereby, the image coordinates of the mobile camera 31 may be converted into the robot coordinates.

In the calibration at step S127, for the robot 2a to properly grasp the work 93, the first image processing sequence and the calibration result of the mobile camera 31 are correlated.

The calibration of the mobile camera 31 is performed by the display processing using the instruction windows, which will be described later. Note that the display processing in the calibration will be explained later.

Then, the computer 11 issues a movement instruction to position the tool center point P onto the removal board for pass 94 to the robot control apparatus 12, mounts the work 93, sets the distal end axis coordinates (components xr, yr, zr, ur, vr, wr) of the robot 2a as a fifth point and stores the point in the storage unit 113 (Fig. 9: step S128) . In response to the movement instruction, the robot control part 1212 allows the robot 2a to drive the robot arm 20 and position the distal end axis of the robot 2a onto the removal board for pass 94, and then, mount the work 93 onto the removal board for pass 94 (see Fig. 15).

Then, the computer 11 issues a movement instruction to position the distal end axis of the robot 2a onto the removal board for fail 95 to the robot control apparatus 12, mounts the work 93, sets the distal end axis coordinates (components xr, yr, zr, ur, vr, wr) of the robot 2a as a sixth point and stores the point in the storage unit 113 (Fig. 9: step S129). In response to the movement instruction, the robot control part 1212 allows the robot 2a to drive the robot arm 20 and position the distal end axis of the robot 2a onto the removal board for fail 95, and then, mount the work 93 onto the removal board for fail 95 (see Figs. 2, 15).

Then, the computer 11 (control program creation part 1111) creates a job program of the robot 2a based on steps S111 to S129 (Fig. 9: step S130) . Then, the computer 11 (control program build part 1112) builds the job program created at step S113 and converts (compiles) the program into a language (data strings) that can be interpreted by the robot control apparatus 12 (Fig. 9: step S131) . Then, the computer 11 transfers the compiled job program to the robot control apparatus 12, the image processing apparatus 13, and issues an execution instruction of the job program to the robot control apparatus 12 and the image processing apparatus 13 (Fig. 9: step S132).

This is the end of the creation of the job program.

Here, in related art, when teaching of normal job coordinates is performed, the work 93 is grasped by the hand 270, then, the user jog-feeds the hand 270, inserts and places the work 93 in an assembly position of the object for job or the like, and teaches the job coordinates. However, the teaching job has the following problems (1), (2).
(1) When it is necessary to insert and place the work 93 in a job position with high accuracy, the user takes a long time to manually jog-feed the work 93 to the location and insert and place the work with high accuracy.
(2) When many job positions are taught, in the method of related art, the user manually jog-feeds and inserts and places the work 93 from start to finish with respect to all teaching points, and thereby, automation is difficult.

In order to solve the above described problems, of the processing from step S116 to step S125, processing except step S122, step S123 may be respectively used in the teaching of the job positions (job coordinates) where the jobs are performed. In the teaching job, the work 93 that has been manually and accurately grasped by the user is grasped and pulled by the hand 270 afterward, and thereby, the jog-feeding of the hand 270 that takes time for accurate positioning may be omitted and the teaching time may be significantly shortened. In the case where many job coordinates are taught, the works 93 are placed in the respective job positions in advance and the coordinates at which the respective works 93 are grasped are taught, and thereby, subsequent acquisition processing of the job coordinates may be easily automated.

Or, in the case where teaching is repeatedly performed, of the processing from step S116 to step S125, step S119, step S120 are executed (performed) at the initial time only, and the initial values may be used for the subsequent teachings. Further, step S124, step S125 are not absolutely necessary, and the coordinates of the fourth point may be calculated from the coordinates set at the second point and the tool offset acquired in the tool settings.

Next, the execution of the job program by the robot control apparatus 12 and the image processing apparatus 13 based on the execution instruction at step S132 will be explained.

### <Execution of Job Program>

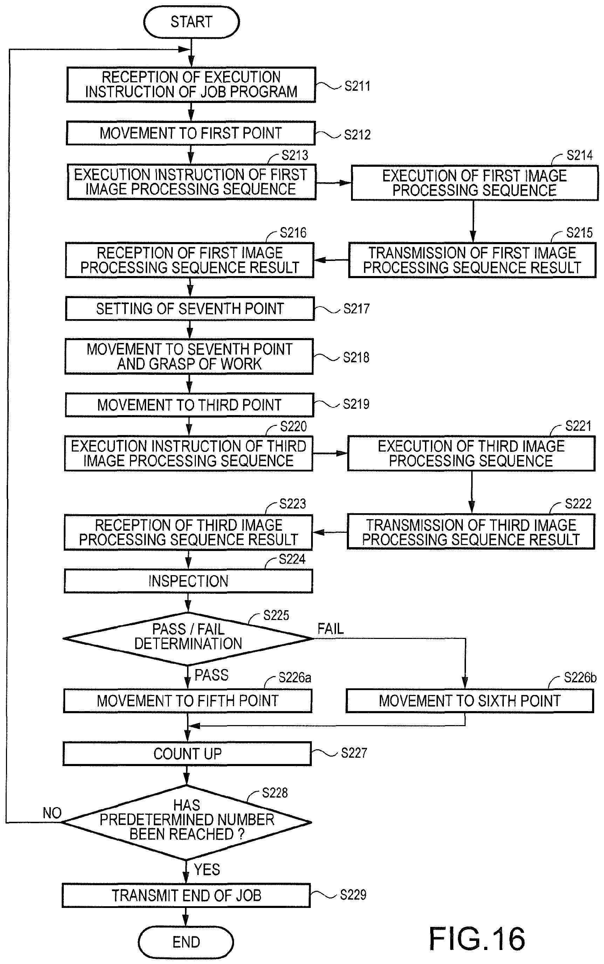

Fig. 16 is a flowchart showing a flow of execution of the job program created based on the flowcharts shown in Figs. 8 and 9.

First, for execution of the job program, the work 93 is mounted on the feed board 91.

As shown in Fig. 16, the robot control apparatus 12 receives an execution instruction of a job program (step S211), drives the robot arm 20, and moves the distal end axis of the robot 2a to the first point (step S212).

Then, the robot control apparatus 12 issues an execution instruction of the first image processing sequence to the image processing apparatus 13 (step S213). The image processing apparatus 13 receives the execution instruction and executes the first image processing sequence for detection of the work 93 by the mobile camera 31 (step S214). At step S214, the image processing apparatus 13 executes the first image processing sequence, performs image processing based on the captured image (image data) obtained by imaging of the work 93 using the mobile camera 31, and detects the center position of the work 93. Further, the image processing apparatus 13 converts the center position of the work 93 on the captured image into local coordinates (components xd, yd, ud) using the calibration of the mobile camera 31.

Then, the image processing apparatus 13 transmits a first image processing sequence result (robot coordinates of the image detection point etc.) to the robot control apparatus 12 (step S215) . When receiving the first image processing sequence result (step S216), the robot control apparatus 12 sets the position of the center of the work 93 according to the local coordinate system (components xd, yd, zd, ud) as a seventh point based on the result, and records the point in the storage unit 113 (step S217) . Here, for the position (component zd) of the work 93, the position (component zd) of the second point is used.

Then, the robot control apparatus 12 drives the robot arm 20 and moves the tool center point P to the seventh point based on the tool settings to grasp the work 93 by the hand 270 (step S218) . Then, the robot control apparatus 12 drives the robot arm 20 and moves the distal end axis of the robot 2a to the third point (step S219). Then, the robot control apparatus 12 issues an execution instruction of the third image processing sequence to the image processing apparatus 13 (step S220). The image processing apparatus 13 receives the execution instruction and executes the third image processing sequence for detection of the work 93 by the fixed camera 32 (step S221) . At step S221, the image processing apparatus 13 executes the third image processing sequence, performs image processing based on the captured image (image data) obtained by imaging of the work 93 using the fixed camera 32, and detects the points A, point B of the work 93. Further, the image processing apparatus 13 converts the positions of the points A and point B of the work 93 on the captured image into robot coordinates (base coordinates) using the calibration result of the fixed camera 32. Then, the image processing apparatus 13 transmits a third image processing sequence result (the respective robot coordinates of the points A and point B etc.) to the robot control apparatus 12 (step S222) . When receiving the third image processing sequence result (step S223), the robot control apparatus 12 performs an inspection of measuring the distances between the points A and point B of the work 93 according to the local coordinate system based on the result (step S224).

Then, the robot control apparatus 12 performs a pass/fail determination of pass if the distances between the points A and point B are within the predetermined threshold value and fail if the distances are beyond the predetermined threshold value (step S225). If the work passes, the robot control apparatus 12 moves to step S226a, drives the robot arm 20 and moves the distal end axis of the robot 2a to the fifth point. On the other hand, if the work fails, the robot control apparatus 12 moves to step S226b, drives the robot arm 20 and moves the distal end axis of the robot 2a to the sixth point.

Then, the robot control apparatus 12 counts up (step S227), and determines whether or not the works 93 has reached a predetermined number (step S228) . If the predetermined number has been reached, the robot control apparatus 12 moves to step S229, transmits that the job has ended to the computer 11 (step S229), and ends the job. On the other hand, if the predetermined number has not been reached, the apparatus returns to step S211 and repeats steps S211 to S228 until the predetermined number is reached.

This is the end of the job. Further, the computer 11 recreates the above described job program based on the job result (e.g. whether or not the work 93 has been successfully grasped, variations of the grasp position, whether or not the image sequence has been successfully executed, or the like). For example, if determining that the grasping of the work 93 is frequently unsuccessful, the computer 11 recreates (rewrites) the job program and performs the job again. In this manner, creation (updating) of the job program and the job based on the job program are performed until the grasping of the work 93 becomes stable, and thereby, the job accuracy by the robot 2a may be improved. Or, the computer 11 may recreate only a part of the job program, not the whole job program. For example, if the accuracy of the grasping of the work 93 is not within a predetermined threshold value, only the calibration of the mobile camera 31 (Fig. 9: step S127) can be recreated again. In this manner, only a part of the job program is recreated, and thereby, resetting (creation) of the job program may be efficiently performed.

The creation of the job program for the job and settings of necessary various kinds of processing are executed by the control system 10 based on operation instructions using the various instruction windows (input using the input device 42) by the user as described above. As below, the various instruction windows, the operations of the instruction windows (input using the input device 42) by the user, the display processing by the computer 11 (display control unit 114), etc. will be explained. Note that, hereinafter, various settings by the control system 10 based on the operation instructions (input using the input device 42) by the user using the various instruction windows etc. are referred to as "display processing".

### <Main Window and Display Processing>

Fig. 17 shows a main window and a sub-window for robot operation displayed on the display device shown in Fig. 1. Fig. 18 shows a main window and a sub-window for image processing displayed on the display device shown in Fig. 1.

As shown in Fig. 17, a main window 50 has at least a toolbar 502. The toolbar 502 has an icon for tool setting 701, an icon for local setting 702, an icon for calibration creation 703, an icon 601 used for displaying a sub-window for image processing 61, and a command input icon 801. The display of these icons (in figures or the like) is not particularly limited, but it is preferable that the usages are easily recognized from the display by the user. The usages of the respective icons will be explained later.

The display control unit 114 may display a sub-window for robot operation 51 shown in Fig. 17 and the sub-window for image processing 61 shown in Fig. 18 on the display device 41 at the same time with the main window 50. In addition, the display control unit 114 may display a sub-window for command input and a sub-windows for setting various parameters in force control (not shown) on the display device 41 at the same time with the main window 50. The display control unit 114 displays a desired sub-window of these sub-windows (including the sub-windows 51, 61) on the top according to an operation instruction by the user. Note that these sub-windows may be displayed side by side.

The sub-window for robot operation 51 shown in Fig. 17 includes a panel 52 having a jog motion group (area) 521 and a teach group 522. Further, the sub-window 51 includes a plurality of other panels than the panel 52 including a panel for setting various parameters (e.g. movement velocity etc.) of the robot 2 (not shown). Furthermore, the sub-window 51 has a plurality of tabs 53 used for displaying a predetermined panel on the top.

The jog motion group 521 has a plurality of buttons 5212 that receive operation instructions for jog motion of predetermined parts of the robot 2 by the user. The jog motion group 521 has the visually recognizable buttons 5212 as described above, and thereby, the user may easily instruct jog feed of the robot 2. The jog motion group 521 is used at steps S111, S113, S116, S118, S124, S126, S128, S129 in the above described creation of the job program. Specifically, for example, at step S111, when the input control unit 115 receives operation instructions to the plurality of the buttons 5212 from the user, the control unit 111 issues a movement command to position the mobile camera 31 on the calibration plate 92 to the robot control apparatus 12 (Fig. 8: step S111).

Further, the teach group 522 is used for setting of the teaching point by the user. The teach group 522 is used at steps S114, S117, S119, S125, S128, S129 in the above described creation of the job program. Specifically, for example, at step S114, when the input control unit 115 gives an operation instruction to the teach button by the user, the control unit 111 sets the first point and allows the storage unit 113 to record the first point (Fig. 8: step S114).

The sub-window for image processing 61 shown in Fig. 18 has a toolbar 615, a picture image display part 612, an execution group 613, and a flowchart display part 62. The sub-window for image processing 61 is displayed when the user gives an operation instruction of the icon 601 in the main window 50.

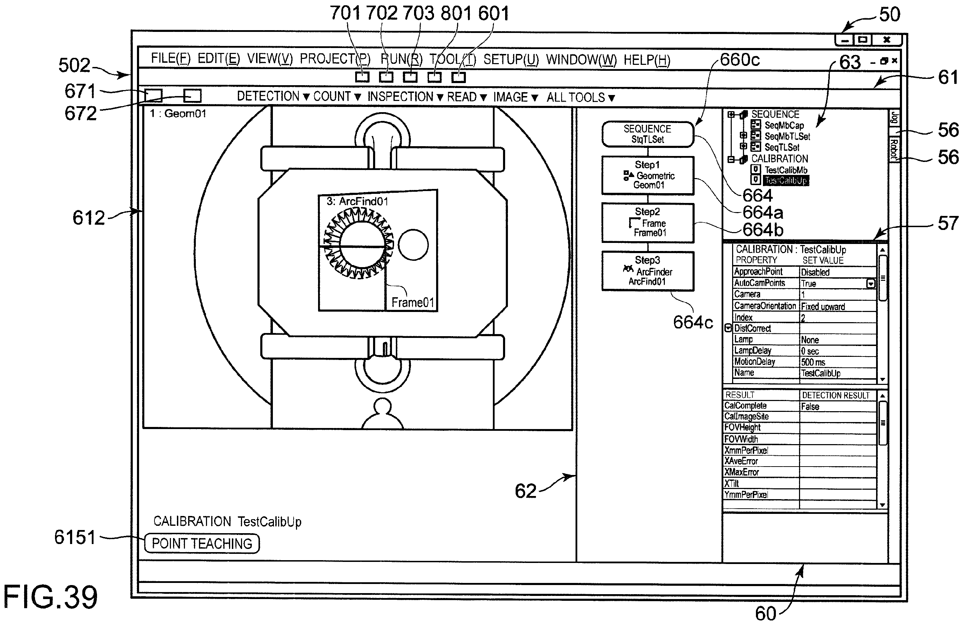

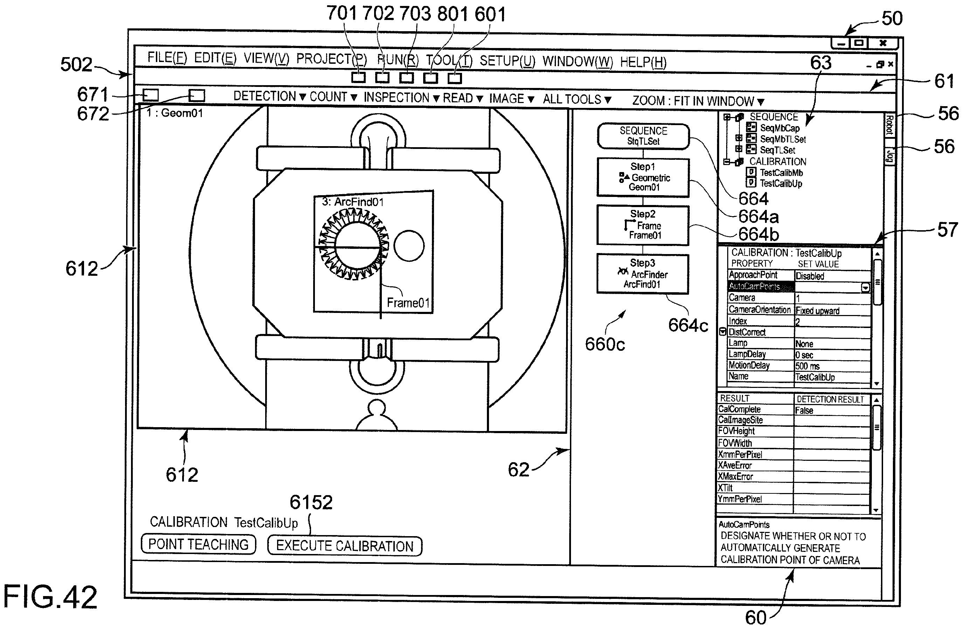

The toolbar 615 has an icon 671 used for displaying a group of windows for creation of the image processing sequence. The picture image display part 612 displays captured images imaged by the imaging units 3, image processing results. The execution group 613 has various buttons that receive operation instructions to execute the image processing sequence by the user. The flowchart display part 62 displays the image processing procedure of the image processing sequence (flowchart 660c) (see Figs. 39 and 42), the teaching procedure of the calibration, etc.

Further, the sub-window 61 has a jog panel 54 having the same configuration as the jog motion group 521, and a panel (not shown) for setting various parameters (e.g. movement velocity etc.) of the robot 2. The sub-window 61 has two tabs 56 used for displaying one of the panel for setting various parameters of the robot 2 and the jog panel 54 on the top. Note that these panels may be displayed side by side.

As described above, the sub-window 61 has the jog panel 54, and thereby, the user may perform a robot operation using the sub-window for image processing 61. Further, similarly, the sub-window 61 has the panel for setting various parameters of the robot 2, and thereby, the user may set various parameters of the robot 2 using the sub-window for image processing 61.

Further, though not shown in Fig. 18, the sub-window 61 has a property setting window 60 for displaying and creating calibration settings (the name of the created calibration and various setting details) and image processing sequence settings (the name of the created image processing sequence and various setting details) (see Fig. 39). The property setting window 60 is displayed in an area in which the jog panel 54 is displayed (see Fig. 18) . The property setting window 60 will be described later in detail.

As described above, the display control unit 114 may display the plurality of kinds of sub-windows (including the sub-windows 51, 61) in superimposition or side by side at the same time with the one main window 50 under the control of the control unit 111, and the user may efficiently perform a plurality of kinds of jobs. Particularly, as described above, in the embodiment, the sub-window for robot operation 51, the sub-window for image processing 61, the sub-window for command input, and the sub-window relating to force control may be displayed on the display device 41, and the convenience is especially high.

Further, as described above, the display control unit 114 may display the panel for setting various parameters of the robot 2 (not shown) and the jog panel 54 for jog motion of the robot 2 in the sub-window for image processing 61 in superimposition or side by side. Accordingly, the user may properly and efficiently perform the operation of the robot 2 when the image processing sequence is executed.

Further, after teaching of the camera point (it refer to teaching of the position of the robot such that the marker falls within the field vision of the camera), for example, by executing the image processing sequence (flowchart 660c) shown in Figs. 39 and 42, the marker can be detected accurately. Note that, in the image processing sequence described above, it is shown that the marker detection is performed according to the procedures described below. The top flow 664 shows the selected image processing sequence (sequence name)

First, "Geometric" of a flow 664a of step 1 in the drawing finds a geometric pattern. Next, "Frame" of a flow 664b of step 2 brings an origin of Frame to the center of the geometric pattern found by Geometric. And then, "ArcFinder" of a flow 664c of step 3 finds the center of the geometric pattern with higher accuracy than "Frame"

Next, the local settings in the above described job program and the display processing in the local settings will be explained.

### <Local Settings and Display Processing>

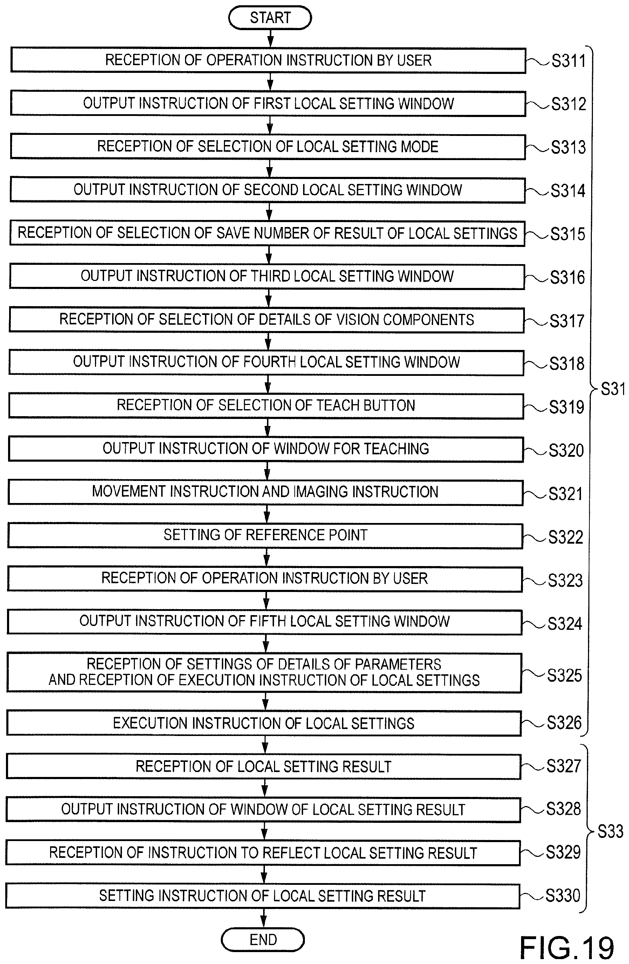

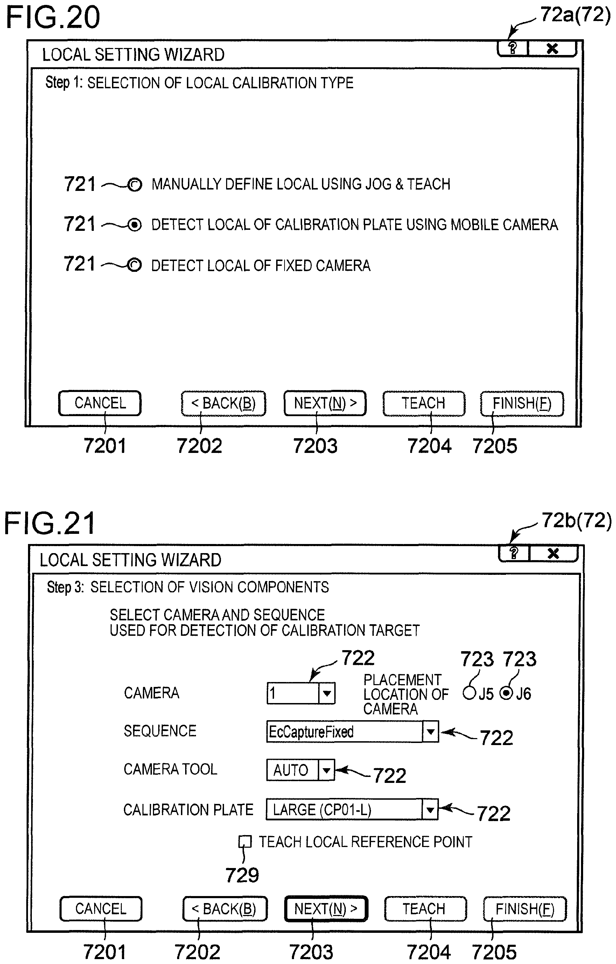

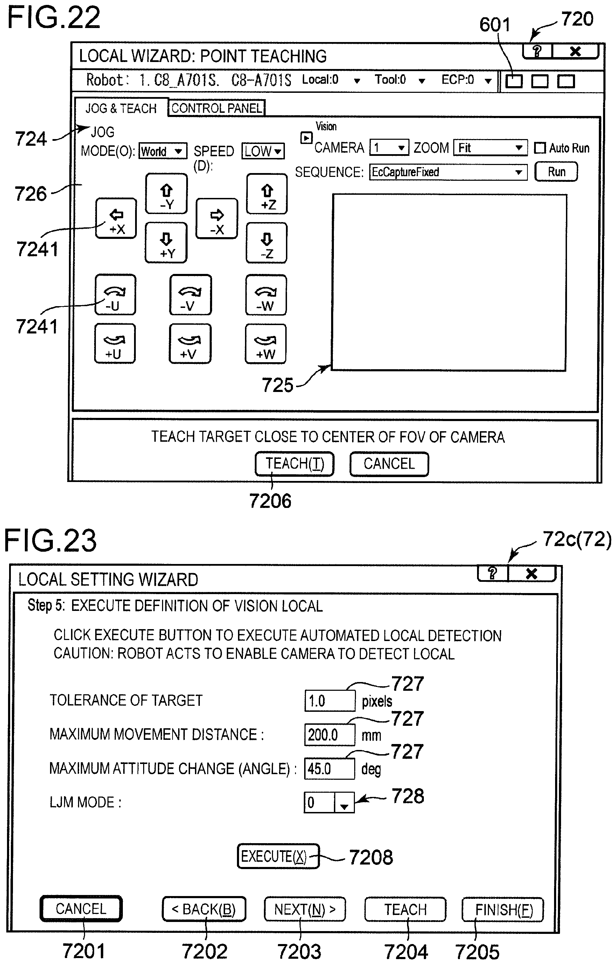

Fig. 19 is a flowchart showing a flow of setting of the local coordinate system shown in Fig. 8. Figs. 20, 21, and 23 respectively show local setting windows displayed on the display device shown in Fig. 1. Fig. 22 shows a window for teaching displayed on the display device shown in Fig. 1.

As below, settings of the local coordinate system (step S112) in the above described creation of the job program will be explained with reference to the flowchart shown in Fig. 19. The settings of the local coordinate system (local settings) have [1A] various settings in local settings (step S31), [2A] execution of processing of local settings (step S32 (not shown)), and [3A] reflection of local setting result (step S33). Here, as described above, the local settings include settings of the local coordinate system by various settings (including display processing) in the local settings, execution of processing of the local settings, and reflection of the local setting result.

### [1A] Various Settings in Local Settings (Step S31)

First, the control system 10 executes various settings in the local settings based on the input by the input device 42.

Specifically, first, when the user gives an operation instruction to (clicks) the icon for local settings 702 of the main window 50 shown in Fig. 17, the input control unit 115 receives the operation instruction (instruction to start the local settings) (Fig. 19: step S311). Thereby, the control unit 111 starts display processing of a group of windows for local settings of dialogically displaying a plurality of (five in the embodiment) local setting windows 72 (instruction windows) with the user, and issues an output instruction of the first local setting window 72a (local setting window 72) shown in Fig. 20 to the display control unit 114 (Fig. 19: step S312) . In response to the output instruction, the display control unit 114 allows the display device 41 to display the first local setting window 72a.

### (First Local Setting Window)

As shown in Fig. 20, the first local setting window 72a is a window for selection of a local setting mode (local calibration type) . The local setting mode refers to a method of setting the local coordinate system. That is, the local setting mode indicates what means to take to make local settings or what kind of local settings (e.g. manual local settings or local settings parallel to the fixed camera 32). In the embodiment, the local setting window 72a has a plurality of radio buttons 721 and is adapted to receive one of three local setting modes shown in Fig. 20. As described above, the local setting window 72a has a configuration of guiding one selection from the plurality of modes, and thereby, the user may prevent selection of two or more kinds of mode. Note that the kinds of local setting modes are not limited to the three modes shown in Fig. 20, but another mode may be further added or one of the three modes shown in Fig. 20 may be omitted.

Further, the local setting window 72a has a button 7201 labeled "Cancel", a button 7202 labeled "Back", a button 7203 labeled "Next", a button labeled "Teach" (teach button) 7204, and a button 7205 labeled "Finish". The button 7201 is used for cancelling a local setting wizard. The button 7202 is used for returning to the previous local setting window 72 in the sequentially displayed local setting windows 72. The button 7203 is used for proceeding to the next local setting window 72 in the sequentially displayed local setting windows 72. Note that the local setting window 72a is the first one of the sequentially displayed local setting windows 72, and the button 7202 is grayed out. Also, the buttons 7204, 7205 are grayed out.

With respect to the local setting window 72a, when the user gives an operation instruction to select a desired mode (click or touch desired one radio button 721) and gives an operation instruction to the button 7203 labeled "Next", the input control unit 115 receives the selection of the local setting mode (Fig. 19: step S313) . Thereby, the control unit 111 allows the storage unit 113 to store the selected local setting mode, and issues an output instruction of the second local setting window (not shown) to the display control unit 114 (Fig. 19: step S314) . In response to the output instruction, the display control unit 114 allows the display device 41 to display the second local setting window (not shown).

### (Second Local Setting Window)

The second local setting window is a window for selection (setting) of a save number (local number) for saving the local setting result (not shown). Note that the second local setting window is in nearly the same display form as that of the first local setting window 72a except that the selection of the save number is displayed in place of the display of the selection of the local setting mode.

For the display for selecting the save number in the second local setting window, e.g. a listbox or the like may be used. The second local setting window has a configuration of receiving the selectin of the save number, and thereby, input errors by the user may be prevented. Note that what to select may be a save name in place of the save number. In addition, the second local setting window also has the same buttons (not shown) as the buttons 7201 to 7205 of the first local setting window 72a.

When the user gives an operation instruction to select a desired save number to the second local setting window, and then, gives an operation instruction to the button labeled "Next" (the button corresponding to the button 7203), the input control unit 115 receives the selection of the save number of the result of the local settings (Fig. 19: stepS315) . Thereby, the control unit 111 allows the storage unit 113 to store the selected save number, and issues an output instruction of the third local setting window 72b (local setting window 72) shown in Fig. 21 to the display control unit 114 (Fig. 19: step S316) . In response to the output instruction, the display control unit 114 allows the display device 41 to display the third local setting window 72b.

### (Third Local Setting Window)

As shown in Fig. 21, the third local setting window 72b is a window for selection of details of various vision components. The vision components in the local settings refer to elements relating to image processing including types of the imaging units 3 used in settings of the local coordinate system, placement positions (camera tools), image processing methods, etc. In the embodiment, as shown in Fig. 21, the local setting window 72b is adapted to select the respective details of the five vision components of the imaging unit 3, the placement location of the imaging unit 3, the image processing sequence, the camera tool, and the calibration plate. Specifically, the local setting window 72b has pluralities of dropdown lists 722 and radio buttons 723 for selection of one detail of the plurality of details (information) relating to the vision components. Note that the lists of the dropdown lists 722 are not shown (this applies to the other drawings) . The vision components in the local settings are not limited to the above described five vision components, but another vision component may be added or one of the above described vision components may be omitted.

Further, the local setting window 72b has a checkbox 729 for selecting whether or not to teach a local reference point. When receiving the selection, the control unit 111 sets the local plane containing the local coordinate system to a position passing through the designated teaching point. Thereby, the convenience when using the set local coordinates in the robot 2a is improved.

Here, the display contents of the third local setting window 72b change according to the type (selection) of the imaging unit 3 of the first local setting window 72a. Specifically, the display contents of the dropdown list 722 change according to the type (selection) of the imaging unit 3 of the first local setting window 72a. For example, at step S112 in the above described generation of the job program, local settings are made using the mobile camera 31. Therefore, when the input control unit 115 receives the selection of the second radio button 721 from the top in the drawing of the first local setting window 72a by the user, the display control unit 114 allows the display device 41 to display the local setting window 72b having the dropdown list 722 with the display contents relating to the mobile camera 31. Further, for example, when the input control unit 115 receives the selection of the third radio button 721 from the top in the drawing of the first local setting window 72a, the display control unit 114 allows the display device 41 to display the local setting window 72b having the dropdown list 722 with the display contents relating to the fixed camera 32.

In the above described manner, the limited contents according to the selection in the previously displayed local setting window 72a are displayed on the subsequently displayed local setting window 72b, and selection errors by the user may be reduced.

With respect to the third local setting window 72b, when the user gives an operation instruction to select the details of the respective vision components and gives an operation instruction to the button 7203 labeled "Next", the input control unit 115 receives the selection of the details of the respective vision components (Fig. 19: step S317) . Thereby, the control unit 111 allows the storage unit 113 to store the selected vision components, and issues an output instruction of the fourth local setting window (not shown) to the display control unit 114 (Fig. 19: stepS318) . In response to the output instruction, the display control unit 114 allows the display device 41 to display the fourth local setting window (not shown).

### (Fourth Local Setting Window)

The fourth local setting window is a window for setting the camera point (start position) at which the local settings are started and the local reference point (not shown). The local reference point is set only when the selection of teaching the local reference point is made in the third local setting window. Note that the fourth local setting window is in nearly the same display form as that of the first local setting window 72a except that the selection details (setting details) are different. Further, the fourth local setting window also has the same buttons as the buttons 7201 to 7205 of the first local setting window 72a.

With respect to the fourth local setting window, when the user gives an operation instruction to the teach button (the ungrayed-out button corresponding to the button 7204), the input control unit 115 receives the operation instruction (Fig. 19: step S319) . Thereby, the control unit 111 issues an output instruction of a window for teaching 720 to the display control unit 114 (Fig. 19: step S320) . In response to the output instruction, the display control unit 114 allows the display device 41 to pop-up display the window for teaching 720.

### [Window for Teaching]

As shown in Fig. 22, the window for teaching 720 is a window used for teaching of the camera point at which the local settings are started and the position of the local reference point for determination of the height of the local plane to be set. The window 720 has at least a jog & teach panel 726 and a teach button 7206. The jog & teach panel 726 has a job group 724 with a plurality of buttons 7241 that receive operation instructions for jog motion of predetermined parts of the robot 2a, and a picture image display part 725 that displays the captured images of the imaging units 3.

Using the window 720, the user gives an instruction (operation instruction) to move a predetermined part of the robot 2a using the plurality of buttons 7241 so that the calibration plate may be positioned at the center of the picture image display part 725 (the center of the captured image) . When the input control unit 115 receives the operation instruction of the user, the control unit 111 issues a movement instruction to move the hand 270 based on the operation instruction to the robot control apparatus 12. Further, with the movement instruction, the unit issues an imaging instruction to capture the images of the imaging units 3 to the image processing apparatus 13 and displays the images in the picture image display part 725, and thereby, the user moves the imaging unit to a position in which the object to be imaged is appropriately taken and teaches the camera point at which the local settings are started (Fig. 19: step S321) . Then, in the case where the selection of teaching the local reference point is made in the third local setting window, when the hand 270 or the like of the robot 2a is moved to the point through which the local plane to be set should pass, and then, the user gives an operation instruction to the teach button 7206, the input control unit 115 receives the operation instruction of the teach button 7206 by the user. Thereby, the control unit 111 sets the local reference point (reference point) through which the local plane to be local-set passes (Fig. 19: step S322) . Further, the control unit 111 allows the storage unit 113 to store the camera point and the local reference point. Then, the control unit 111 gives an instruction to erase the window for teaching 720 to the display control unit 114, and the display control unit 114 erases the window for teaching 720 from the display device 41.

Then, when the user gives an operation instruction to the button labeled "Next" (corresponding to the button 7203) in the above described fourth local setting window (not shown), the input control unit 115 receives the operation instruction by the user (Fig. 19: step S323) . Then, the control unit 111 issues an output instruction of the fifth local setting window 72c to the display control unit 114 (Fig. 19: step S324). Thereby, the display control unit 114 allows the display device 41 to display the fifth local setting window 72c.

### (Fifth Local Setting Window)

As shown in Fig. 23, the fifth local setting window 72c is a window for selection of details of various parameters for automated execution of the local settings. In the embodiment, as shown in Fig. 23, the local setting window 72c is adapted to select the respective details of four parameters of an allowance of the target, the maximum movement distance, the maximum amount of attitude change (angle) and an LJM mode. Specifically, the local setting window 72c has textboxes 727 for inputting details on the parameters and a dropdown list 728 for selection of one detail from the plurality of details (information) on the parameters. Note that the parameters are not limited to the above described four parameters, but another parameter may be further added or one of the above described parameters may be omitted.

Further, the local setting window 72c has buttons 7201 to 7205 like the first local setting window 72a, and the buttons 7203 to 7205 are grayed out. The fifth local setting window 72c is the final local setting window of the group of windows for local settings, and the button 7203 is grayed out.

Furthermore, the local setting window 72c has a button 7208 labeled "EXECUTE".

With respect to the local setting window 72c, when the user gives an operation instruction to select the details of the various parameters and gives an operation instruction to the button 7208 labeled "EXECUTE", the input control unit 115 receives the selection of the details of the respective parameters and the execution instruction of the local settings from the user (Fig. 19: step S325) . Thereby, the control unit 111 allows the storage unit 113 to store the selected details of the parameters, and issues execution instructions to make local settings to the robot control apparatus 12 and the image processing apparatus 13 (Fig. 19: step S326). In the above described manner, various settings of the local settings by the display processing of the local settings are completed.

### [2A] Execution of Processing of Local Settings (Step S32)

Next, the control system 10 executes the processing of the local settings.

Specifically, the robot control apparatus 12 and the image processing apparatus 13 execute the processing of the local settings based on the execution instructions from the control unit 111 at step S326.

First, when receiving the execution instruction, the robot control apparatus 12 acquires the status of the robot 2a (e.g. whether or not the motor of the drive unit 280 is ON or the like) from the robot 2a. Then, the robot control apparatus 12 issues a movement instruction to the robot 2a so that the calibration plate may enter the field of view of the mobile camera 31 and the mobile camera 31 may move to the camera point taught as the start position of the local settings. In this regard, the robot 2a returns information on the movement of the robot arm 20 (values of the position sensor) or the like to the robot control apparatus 12 at each time. Then, the robot control apparatus 12 issues an execution instruction of the image processing sequence to the image processing apparatus 13. The image processing apparatus 13 receives the execution instruction and executes the image processing sequence for detection of the calibration plate using the mobile camera 31 (imaging unit 3) . As the image processing sequence, the image processing sequence received by the above described local setting window 72b is executed. The image processing apparatus 13 executes the image processing sequence, performs image processing based on the captured image (image data) obtained by imaging of the calibration plate using the mobile camera 31, and detects the relative position and attitude of the calibration plate with respect to the mobile camera 31. Then, when the image processing ends, the image processing apparatus 13 transmits an execution result of the image processing sequence (the position and attitude of the calibration plate) to the robot control apparatus 12. Then, the robot control apparatus 12 calculates the local coordinate system based on the acquired position and attitude of the calibration plate and the robot coordinates (base coordinates) of the mobile camera 31 at imaging. Then, the robot control apparatus 12 transmits a setting result (local setting result) of the local coordinate system to the computer 11. Note that, as described above, the specific methods for the execution details of the local settings etc. are not particularly limited. The processing (program) is stored with respect to each of various settings in the storage unit 113, and the control unit 111 executes the processing (program) according to the selected settings.

### [3A] Reflection of Local Setting Result (Step S33)

Next, the control system 10 reflects the local setting result.

Specifically, first, when the communication unit 116 of the computer 11 receives the local setting result (Fig. 19: step S327), the control unit 111 issues an output instruction of a window for displaying the local setting result to the display control unit 114 (Fig. 19: step S328). Thereby, the display control unit 114 allows the display device 41 to display the window in which the local setting result is displayed (not shown). The window is adapted for the user to select whether or not to reflect the local setting result (not shown).

When the input control unit 115 receives the selection of reflecting the local setting result by the user (Fig. 19: step S329) , the control unit 111 issues an instruction to set the local setting result to the robot control apparatus 12 (Fig. 19: step S330). In response to the instruction, the robot control apparatus 12 sets and stores the local settings. Thereby, the local settings are reflected.

On the other hand, when the user makes the selection not to reflect the result of the local settings, though not shown in Fig. 19, the control unit 111performs e.g. [1A] various settings in local settings (step S31) and [2A] execution of processing of local settings (step S32) again. Note that it is only necessary to perform at least [2A] execution of processing of local settings (step S32) again. In this manner, [2A] execution of processing of local settings (step S32) etc. are repeatedly performed as appropriate, and thereby, the accuracy of the local setting result may be improved.

In the above explained local settings, as described above, in [1A] various settings in local settings, the display control unit 114 outputs the group of windows for local settings of dialogically displaying the plurality of (five in the embodiment) local setting windows 72 with the user. Then, the user gives instructions of various settings to the control system 10 using the plurality of local setting windows 72. Thereby, the user may dialogically select the setting details (information) along a predetermined sequence, and thereby, various settings in the local settings may be easily and readily completed without complex operations. Accordingly, time and effort of programing of various settings as in related art may be saved. Further, the setting details necessary in local settings are displayed, and thereby, even a beginner may reduce insufficient settings of the setting details necessary for local settings and occurrence of e.g. an error in the execution of the local settings may be reduced.

Note that, as described above, the group of windows for local settings have the five local setting windows 72, however, the number of local setting windows 72 is not limited to that. Another local setting window may be further added or one of the five local setting windows 72 may be omitted. Further, the sequence of display of the five local setting windows 72 is not limited to the above described sequence, but arbitrary. Note that it is preferable that the display contents of the local setting window 72 to be subsequently displayed change according to the selected details of the local setting window 72 previously displayed. That is, it is preferable that the display contents of the local setting window 72 to be subsequently displayed may be limited contents according to the selected details of the previously displayed local setting window 72. Therefore, it is preferable to set so that the local setting window 72b may be displayed after the above described local setting window 72a. Further, the above described five local setting windows 72 are displayed in the above explained order, and thereby, the user particularly easily grasp the setting details and the convenience for the user may be improved.

Next, the tool settings and the display processing in the tool settings in the above described job program will be explained.

### <Tool Settings and Display Processing>

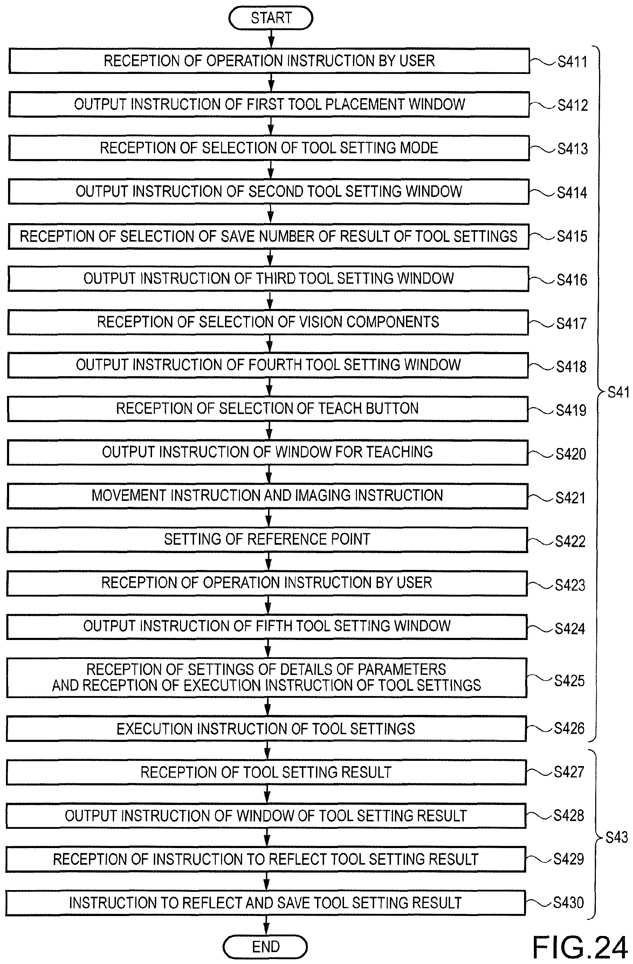

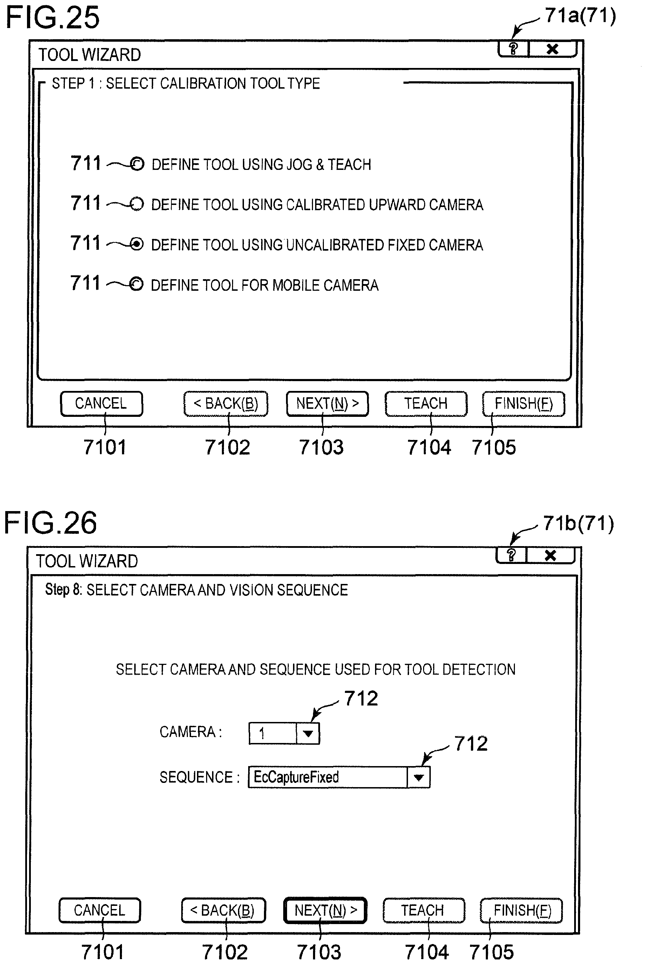

Fig. 24 is a flowchart showing a flow of tool settings shown in Fig. 8. Figs. 25, 26 and 27 respectively show tool setting windows displayed on the display device shown in Fig. 1.

As below, the tool settings (step S121) in the creation of the above described job program will be explained with reference to the flowchart shown in Fig. 24. The tool settings have [1B] various settings in tool settings (step S41), [2B] execution of processing of tool settings (step S42 (not shown)), and [3B] reflection of tool setting result (step S43). Here, the tool settings include various settings (including display processing) in the tool settings, execution of processing of the tool settings, and reflection of a tool setting result.

### [1B] Various Settings in Tool Settings (Step S41)

First, the control system 10 executes various settings in the tool settings based on operation instructions by the user.

Specifically, first, when the user gives an operation instruction to the icon 701 for tool settings of the main window 50 shown in Fig. 17, the input control unit 115 receives the operation instruction (instruction to start the tool settings) (Fig. 24: step S411) . Thereby, the control unit 111 starts display processing of a group of windows for tool settings of dialogically displaying a plurality of (five in the embodiment) tool setting windows 71 (instruction windows) with the user, and issues an output instruction of the first tool setting window 71a (tool setting window 71) shown in Fig. 25 to the display control unit 114 (Fig. 24: step S412). Thereby, the display control unit 114 allows the display device 41 to display the first tool setting window 71a.

### (First Tool Setting Window)

As shown in Fig. 25, the first tool setting window 71a is a window for selection of a tool setting mode (calibration tool type) . The tool setting mode refers to a type and method of tool settings. That is, the tool setting mode indicates a tool for which to set offset and what means to take to make tool settings. In the embodiment, the tool setting window 71a has a plurality of radio buttons 711 and is adapted to receive one of four tool setting modes shown in Fig. 25. As described above, the tool setting window 71a has a configuration of guiding one selection from the plurality of modes, and thereby, the user may prevent selection of two or more kinds of modes. Note that the kinds of tool setting modes are not limited to the four modes shown in Fig. 25, but another mode may be further added or one of the four modes shown in Fig. 25 may be omitted.

Further, the tool setting window 71a has a button 7101 labeled "Cancel", a button 7102 labeled "Back", a button 7103 labeled "Next", a button 7104 labeled "Teach" (teach button), and a button 7105 labeled "Finish" like the above described local setting window 72a.

With respect to the tool setting window 71a, when the user gives an operation instruction to select a desired mode and gives an operation instruction to the button 7103, the input control unit 115 receives the selection of the tool setting mode (Fig. 24: step S413) . Thereby, the control unit 111 allows the storage unit 113 to store the selected tool setting mode, and issues an output instruction of the second tool setting window (not shown) to the display control unit 114 (Fig. 24: step S414) . In response to the output instruction, the display control unit 114 allows the display device 41 to display the second tool setting window (not shown).

### (Second Tool Setting Window)

The second tool setting window is a window for selection (setting) of a save number (tool number) for saving the tool setting result (not shown) . Note that the second tool setting window is in nearly the same display form as that of the first tool setting window 71a except that the selection details (setting details) are different.

For the display for selection of the save number in the second tool setting window, e.g. a listbox or the like may be used. The second tool setting window has a configuration of receiving the selection of the save number, and thereby, input errors by the user may be prevented. Note that what to select may be a save name in place of the save number. In addition, the second tool setting window also has the same buttons (not shown) as the buttons 7101 to 7105 of the first tool setting window 71a.

When the user gives an operation instruction to select a desired save number to the second tool setting window, and then, gives an operation instruction to the button labeled "Next" (the button corresponding to the button 7103), the input control unit 115 receives the selection of the save number of the result of the tool settings (Fig. 24: step S415) . Thereby, the control unit 111 allows the storage unit 113 to store the selected save number, and issues an output instruction of the third tool setting window 71b (tool setting window 71) shown in Fig. 26 to the display control unit 114 (Fig. 24: step S416). In response to the output instruction, the display control unit 114 allows the display device 41 to display the third tool setting window 71b.

### (Third Tool Setting Window)

As shown in Fig. 26, the third tool setting window 71b is a window for selection of details of various vision components. The vision components in the tool settings refer to elements including types of the imaging units 3 used for detection of the tool in the tool settings, subjects, methods of image processing, etc. In the embodiment, as shown in Fig. 26, the tool setting window 71b is adapted to select the imaging unit 3 used for detection of the tool and the respective details of the two vision components of the image processing sequence used for detection of the tool. Specifically, the tool setting window 71b has a plurality of dropdown lists 712 for selection of one detail of the plurality of details (information) relating to the vision components. Note that the vision components in the tool settings are not limited to the above described two vision components, but another vision component may be added or one of the above described vision components may be omitted.

Here, the display contents of the third tool setting window 71b change according to the type (selection) of the imaging unit 3 of the first tool setting window 71a. Specifically, the display contents of the dropdown list 712 change according to the type (selection) of the imaging unit 3 of the first tool setting window 71a. For example, at step S121 in the above described generation of the job program, tool settings are performed using the fixed camera 32 that has not been calibrated. Therefore, when the input control unit 115 receives the selection of the third radio button 711 from the top in the drawing of the first tool setting window 71a, the display control unit 114 allows the display device 41 to display the tool setting window 71b having the dropdown list 712 with the display contents relating to the fixed camera 32.

In the above described manner, the limited details according to the selection in the previously displayed tool setting window 71a are displayed on the subsequently displayed tool setting window 71b, and selection errors by the user may be reduced.

With respect to the third tool setting window 71b, when the user gives an operation instruction to select the details of the respective vision components and gives an operation instruction to the button 7103 labeled "Next", the input control unit 115 receives the selection of the details of the respective vision components (Fig. 24: step S417). Thereby, the control unit 111 allows the storage unit 113 to store the selected vision components, and issues an output instruction of the fourth tool setting window (not shown) to the display control unit 114 (Fig. 24: step S418) . In response to the output instruction, the display control unit 114 allows the display device 41 to display the fourth tool setting window (not shown).

### (Fourth Tool Setting Window)

The fourth tool setting window is a window for receiving teaching of the camera point at which the tool settings are started (not shown) . Note that the fourth tool setting window is in nearly the same display form as that of the first tool setting window 71a except that the selection details (setting details) are different. Further, the fourth tool setting window also has the same buttons as the buttons 7101 to 7105 of the first tool setting window 71a.

With respect to the fourth tool setting window (not shown), when the user gives an operation instruction to the teach button (the ungrayed-out button corresponding to the button 7104), the input control unit 115 receives the operation instruction (Fig. 24: step S419). Thereby, the control unit 111 issues an output instruction of a window for teaching (not shown) to the display control unit 114 (Fig. 24: step S420) . In response to the output instruction, the display control unit 114 allows the display device 41 to pop-up display the window for teaching. Note that the window for teaching is in the same display form as that of the window for teaching 720 in the above described local settings (see Fig. 24) .

Using the window for teaching, the user gives an instruction (operation instruction) to position e.g. the marker (target) attached to the work 93 grasped by the hand 270 as the tool close to the center of the captured image. When the input control unit 115 receives the operation instruction of the user, the control unit 111 issues a movement instruction to move the hand 270 to the robot control apparatus 12 based on the instruction, and issues an imaging instruction to image the marker using the imaging unit 3 to the image processing apparatus 13 (Fig. 24: step S421) . Then, after the marker is positioned close to the center of the captured image, the input control unit 115 receives an operation instruction of the teach button (the button corresponding to the teach button 7104) by the user. Thereby, the control unit 111 sets the distal end axis coordinates of the robot 2a when the marker is located at the center of the captured image as the camera point when the tool settings are started (Fig. 24: step S422). Further, the control unit 111 allows the storage unit 113 to store the camera point. Then, the control unit 111 gives an instruction to erase the window for teaching to the display control unit 114, and the display control unit 114 erases the window for teaching from the display device 41.

Then, when the user gives an operation instruction to the button labeled "Next" (corresponding to the button 7103) in the above described fourth tool setting window (not shown), the input control unit 115 receives the selection by the user (Fig. 24: step S423). Then, the control unit 111 issues an output instruction of the fifth tool setting window 71c to the display control unit 114 (Fig. 24: step S424). Thereby, the display control unit 114 allows the display device 41 to display the fifth tool setting window 71c.

### (Fifth Tool Setting Window)

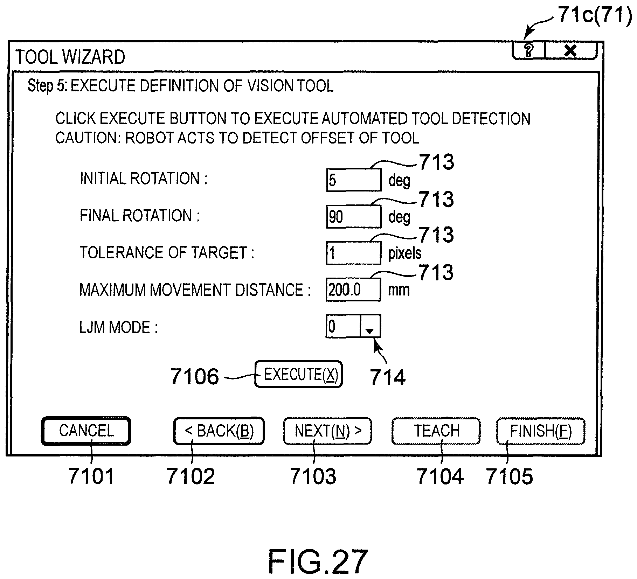

As shown in Fig. 27, the fifth tool setting window 71c is a window for selection of details of various parameters for automated execution of the tool settings. In the embodiment, as shown in Fig. 27, the tool setting window 71c is adapted to select the respective details of five parameters of initial rotation, final rotation, an allowance of the target, the maximum movement distance, and an LJM mode. Specifically, the tool setting window 71c has textboxes 713 for input of details on the parameters and a dropdown list 714 for selection of one detail from the plurality of details (information) on the parameters. Note that the parameters are not limited to the above described five parameters, but another parameter may be further added or one of the above described parameters may be omitted.

Further, the tool setting window 71c has buttons 7101 to 7105 like the first tool setting window 71a. Furthermore, the tool setting window 71c has a button 7106 labeled "EXECUTE".

With respect to the tool setting window 71c, when the user gives an operation instruction to select the details of the various parameters and gives an operation instruction to the button 7106 labeled "EXECUTE", the input control unit 115 receives the selection of the details of the respective parameters and the execution instruction of the tool settings from the user (Fig. 24: step S425) . Thereby, the control unit 111 allows the storage unit 113 to store the selected details of the parameters, and issues execution instructions to make tool settings to the robot control apparatus 12 and the image processing apparatus 13 (Fig. 24: step S426) . In the above described manner, various settings of the tool settings by the display processing of the tool settings are completed.

### [2B] Execution of Processing of Tool Settings (Step S42)

Next, the control system 10 executes the processing of the tool settings.

Specifically, the robot control apparatus 12 and the image processing apparatus 13 execute the processing of the tool settings based on the execution instructions from the control unit 111 at step S425.

First, when receiving the execution instruction, the robot control apparatus 12 acquires the status of the robot 2a from the robot 2a. Then, the robot control apparatus 12 issues a movement instruction to the robot 2a so that the marker attached to the work 93 may be imaged by the fixed camera 32 for tool settings. Here, for example, the apparatus issues the movement instruction so that the marker is located at the center of the captured image. In this regard, the robot 2a returns information on the movement of the robot arm 20 (values of the position sensor) or the like to the robot control apparatus 12 at each time. Then, the robot control apparatus 12 issues an execution instruction of the image processing sequence to the image processing apparatus 13. The image processing apparatus 13 receives the execution instruction, detects the marker using the fixed camera 32, and executes the image processing sequence. Here, the image processing sequence received by the above described tool setting window 71b is executed. The image processing apparatus 13 executes the image processing sequence, and performs image processing based on the captured image (image data) obtained by imaging of the marker using the fixed camera 32. Then, the robot control apparatus 12 issues a movement instruction to the robot 2a so that the axis coordinates may be rotated about the center of the captured image as another center, for example. Then, the image processing apparatus 13 receives the execution instruction, detects the marker using the fixed camera 32, and executes the image processing sequence. Note that the robot control apparatus 12 may perform e.g. an operation of rotating the marker with respect to the axis coordinates or further rotate the axis coordinates in addition to the above described processing, for example. Then, the image processing apparatus 13 transmits an execution result of the image processing sequence (the detection result of the marker) to the robot control apparatus 12. Then, the robot control apparatus 12 calculates offset based on the acquired detection result of the marker, the robot coordinates at imaging, etc. Then, the robot control apparatus 12 transmits a result of tool settings to the computer 11. Note that, as described above, the specific methods for the execution details of the tool settings etc. are not particularly limited. The processing (program) is stored with respect to each of various settings in the storage unit 113, and the control unit 111 executes the processing (program) according to the selected settings.

### [3B] Reflection of Tool Setting Result (Step S43)

Next, the control system 10 reflects the tool setting result and executes the settings.

Specifically, first, when the communication unit 116 of the computer 11 receives the tool setting result (Fig. 24: step S427), the control unit 111 issues an output instruction of a window for displaying the tool setting result to the display control unit 114 (Fig. 24: step S428) . Thereby, the display control unit 114 allows the display device 41 to display a window in which the tool setting result is displayed. The window is adapted for the user to select whether or not to reflect the tool setting result (not shown).

If the input control unit 115 receives the selection of reflecting the tool setting result by the user (Fig. 24: step S429), the control unit 111 issues an instruction to reflect and store the tool setting result to the robot control apparatus 12 (Fig. 24: step S430) . In response to the instruction, the robot control apparatus 12 reflects and stores the tool settings.

On the other hand, when the user makes the selection not to reflect the tool setting result, though not shown in Fig. 24, the control unit 111 performs e.g. [1B] various settings in tool settings (step S41) and [2B] execution of processing of tool settings (step S42) again. Note that it is only necessary to perform at least [2B] execution of processing of tool settings again (step S42). In this manner, [2B] execution of processing of tool settings (step S42) etc. are repeatedly performed as appropriate, and thereby, the accuracy of the tool setting result may be improved.

In the above explained tool settings, as described above, in [1B] various settings in tool settings, the display control unit 114 outputs the group of windows for tool settings of dialogically displaying the plurality of (five in the embodiment) tool setting windows 71 with the user. Then, the user gives instructions of various settings to the control system 10 using the plurality of tool setting windows 71. Thereby, the user may dialogically select the setting details (information) along a predetermined sequence, and thereby, various settings in the tool settings may be easily and readily completed without complex operations. Accordingly, time and effort of programing of various settings as in related art may be saved. Further, the setting details necessary for tool settings are displayed, and thereby, even a beginner may reduce insufficient settings of the setting details necessary for tool settings and occurrence of e.g. an error in the execution of the tool settings may be reduced.

Note that, as described above, the group of windows for tool settings have the five tool setting windows 71, however, the number of tool setting windows 71 is not limited to that. Another tool setting window may be further added or one of the five tool setting windows 71 may be omitted. Further, the sequence in which the five tool setting windows 71 are displayed is not limited to the above described sequence, but arbitrary. Note that it is preferable that the display contents of the tool setting window 71 to be subsequently displayed change according to the selected details of the tool setting window 71 previously displayed. That is, it is preferable that the display contents of the tool setting window 71 to be subsequently displayed may be limited contents according to the selected details of the previously displayed tool setting window 71. Therefore, it is preferable to set so that the tool setting window 71b may be displayed after the above described tool setting window 71a. Further, the above described five tool setting windows 71 are displayed in the above explained order, and thereby, the user particularly easily grasp the setting details and the convenience for the user may be improved.

Next, the calibration in the above described job program and the display processing in the calibration will be explained.

### <Calibration Creation and Display Processing>

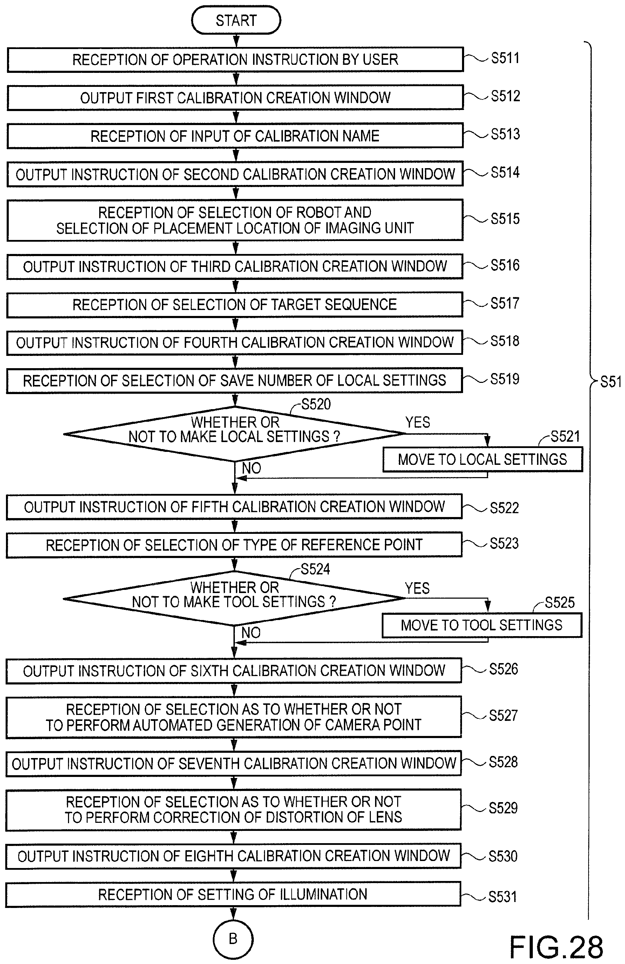

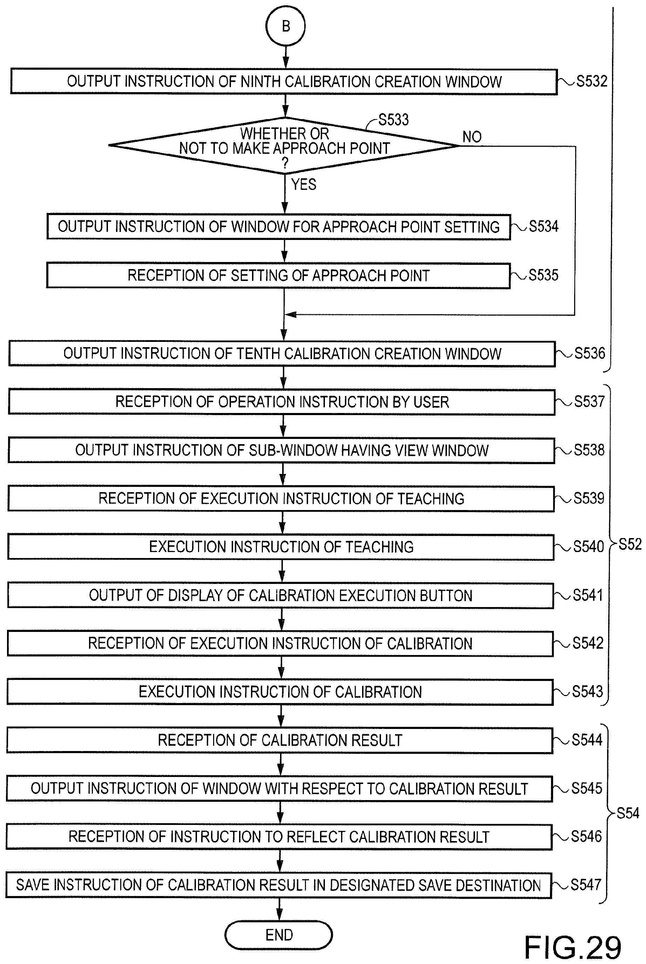

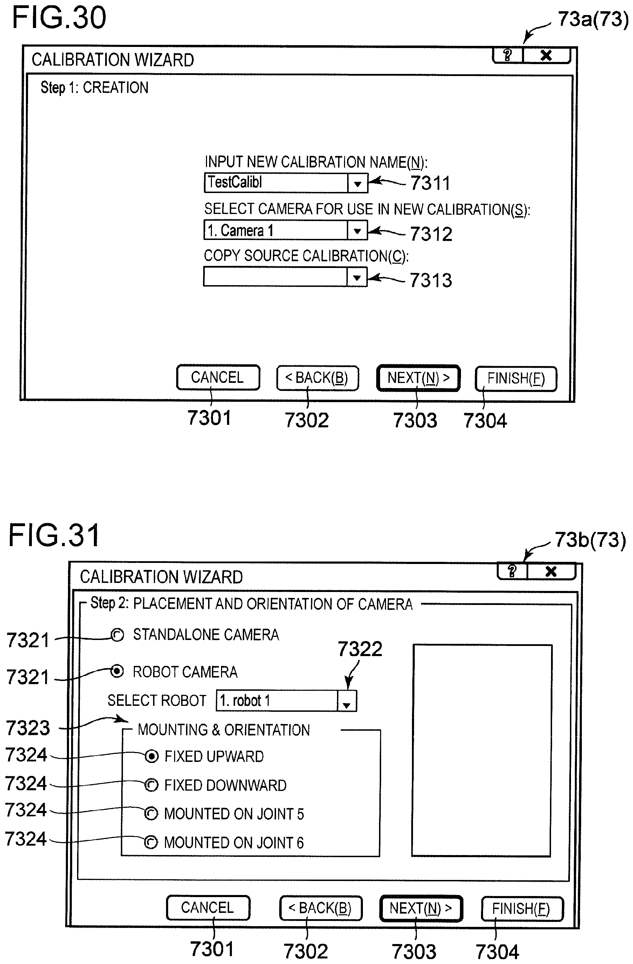

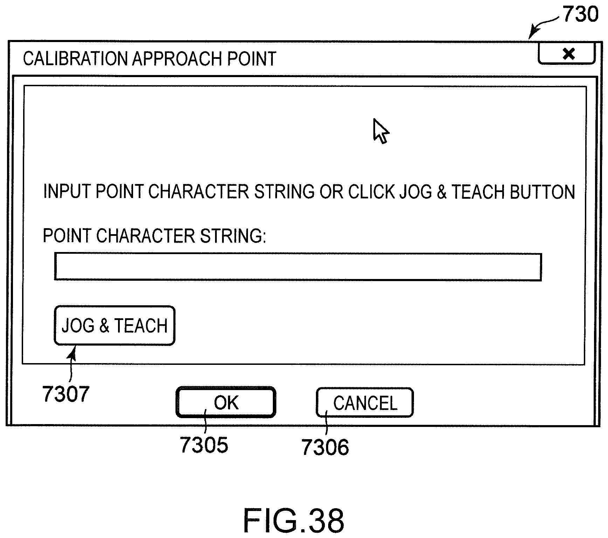

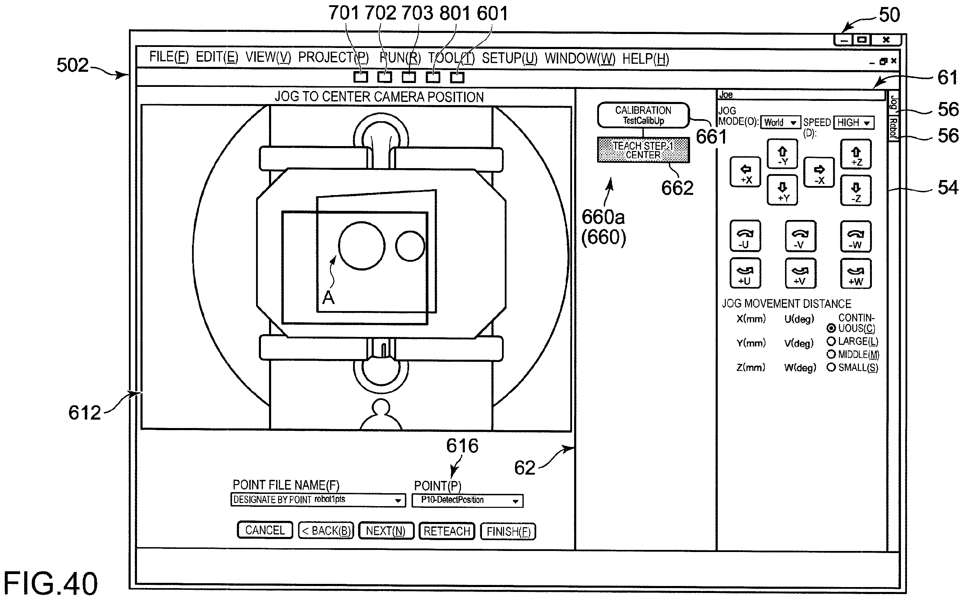

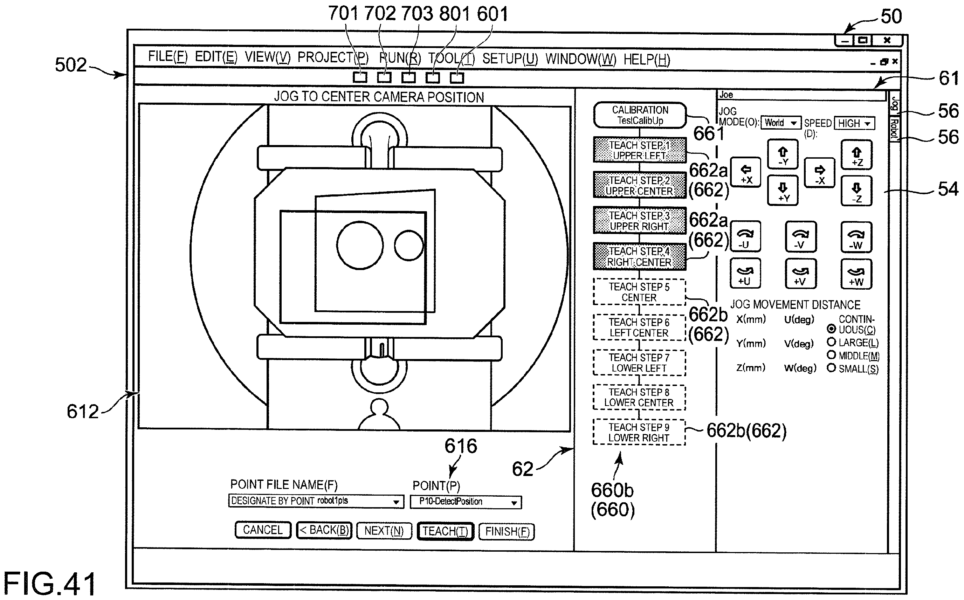

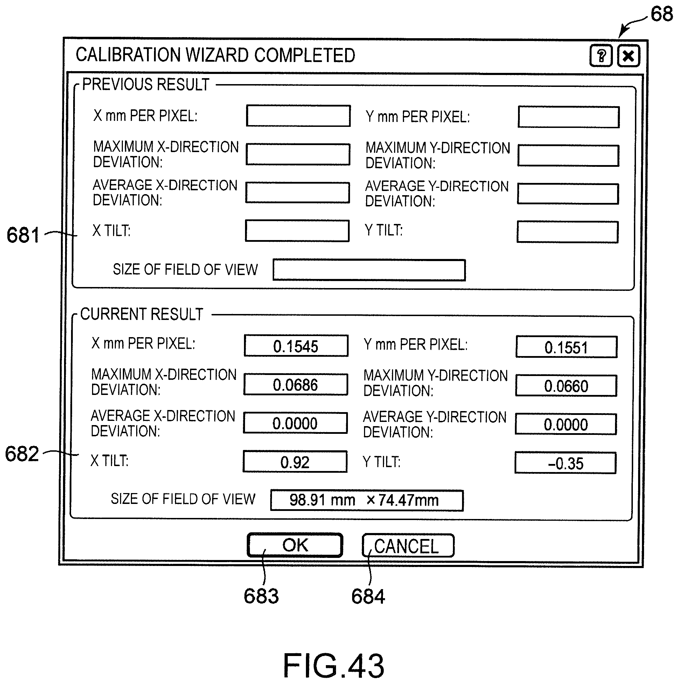

Figs. 28 and 29 are flowcharts respectively showing a flow of a calibration shown in Figs. 8 and 9. Figs. 30 to 37 respectively show calibration creation windows (calibration guide window) displayed on the display device shown in Fig. 1. Fig. 38 shows a window for teaching displayed on the display device shown in Fig. 1. Fig. 39 shows a state in which a property setting window is displayed in the sub-window shown in Fig. 18. Figs. 40 and 41 show states in which a flow of teaching is displayed in the sub-window shown in Fig. 18. Fig. 42 shows a state in which a calibration execution button is displayed in the sub-window shown in Fig. 18. Fig. 43 shows a window displayed on the display device at step S545 shown in Fig. 29.

As below, the calibration (steps S122, S127) in the above described creation of the job program will be explained with reference to the flowcharts shown in Figs. 28 and 29. The calibration mainly has [1C] various settings in calibration (step S51), [2C] teaching of camera points (step S52), [3C] execution of calibration (step S53 (not shown)), and [4C] reflection of calibration result (step S54). Here, as described above, the calibration includes various settings (including display processing) in the calibration, i.e., calibration creation, teaching of the camera point and the reference point, execution of the calibration, and correlation of the coordinate system (image coordinate system) of the imaging unit 3 and the robot coordinate system by reflection of the calibration result.

### [1C] Various Settings in Calibration (Step S51)

First, the control system 10 executes various settings in a calibration, i.e., creation of a calibration based on the operation instructions by the user.

Specifically, first, when the user gives an operation instruction to the icon 703 for calibration creation of the main window 50 shown in Fig. 17, the input control unit 115 receives the operation instruction (instruction to start the creation of the calibration) (Fig. 28: step S511). Thereby, the control unit 111 starts display processing of a group of windows for calibration creation of dialogically displaying a plurality of (ten in the embodiment) calibration creation windows (instruction windows) 73 with the user, and issues an output instruction of the first calibration creation window 73a (calibration creation window 72) shown in Fig. 30 to the display control unit 114 (Fig. 28: step S512) . Thereby, the display control unit 114 allows the display device 41 to display the first calibration window 73a.

### (First Calibration creation window)

As shown in Fig. 30, the first calibration creation window 73a is a window for setting of a calibration name to be set and selection of the type of the imaging unit 3 to be calibrated. In the embodiment, the calibration creation window 73a has a dropdown list 7311 for selection of the calibration name, a dropdown list 7312 for selection of the imaging unit 3, and a dropdown list 7313 for selection of a calibration of a copy source.

In the case where the calibration that has been already set is saved, the settings of the calibration of the copy source may be copied using the dropdown list 7313. Thereby, the setting details of the calibration of the copy source are displayed in the plurality of calibration creation windows 73 to be displayed after the calibration creation window 73a. Therefore, in the case where the user desires to create a new calibration by slightly altering the various details of the calibration that has been already set, the user may easily perform alteration by designating the calibration of the copy source.

Further, the calibration creation window 73a has a button 7301 labeled "Cancel", a button 7302 labeled "Back", a button 7303 labeled "Next", a button 7304 labeled "Finish".

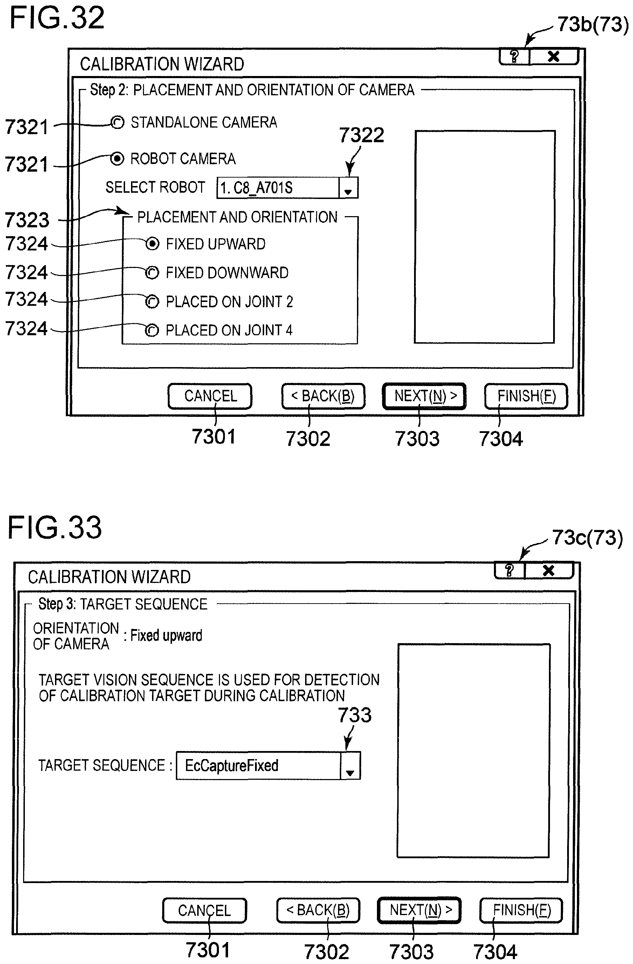

With respect to the calibration creation window 73a, when the user gives an operation instruction to input of the calibration name or the like and gives an operation instruction to the button 7303, the input control unit 115 receives the input of the calibration name or the like (Fig. 28: step S513) . Thereby, the control unit 111 allows the storage unit 113 to store the calibration name or the like, and issues an output instruction of the second calibration creation window shown in Fig. 31 or 32 to the display control unit 114 (Fig. 28: step S514) . In response to the output instruction, the display control unit 114 allows the display device 41 to display the second calibration creation window 73b (calibration creation window 73).

### (Second Calibration Creation Window)

As shown in Fig. 31 or 32, the second calibration creation window 73b is a window for selection of a stand alone camera or a robot camera and has two radio buttons 7321 that receive selection of one of the stand alone camera and the robot camera. "Selection of stand alone camera" is to perform a calibration of correlating a coordinate system in the real space and the coordinate system (image coordinate system) of the imaging unit 3. "Selection of robot camera" is to execute a calibration of correlating the coordinate system (image coordinate system) of the imaging unit 3 and the coordinate system of the robot 2.

Further, the calibration creation window 73b has a dropdown list 7322 for selection of one robot 2 from the plurality of kinds of robots 2, and a group (area) 7323 that receives selection of an attachment location of the imaging unit 3. Here, in the specification, the attachment location of the imaging unit 3 includes a placement location in which the imaging unit 3 is placed and an imaging direction (orientation) of the imaging unit 3.

In the embodiment, the display content of the dropdown list 7322 is the robot 2a as the vertical articulated robot and the robot 2b as the horizontal articulated robot. The calibration creation window 73b is adapted to select one of these robots 2a, 2b. Further, in the embodiment, the group 7323 has four radio buttons 7324 and is adapted to receive one of the four attachment locations of of the imaging unit 3 shown in Fig. 31 or 32. Thereby, the user may prevent selection of two or more kinds of attachment locations. Note that the selection of the type of the robot 2 and the selection of the attachment location of the imaging unit 3 are used when the robot camera is selected.

Here, the display details of the second calibration creation window 73b change according to the selected detail (type) of the robot 2. Specifically, the attachment locations of the group 7323 of the second calibration creation window 73b change according to the selected detail of the robot 2 (see Figs. 31 and 32). For example, when the input control unit 115 receives the selection of the robot 2a as the vertical articulated robot, the display control unit 114 allows the display device 41 to display the group 7323 having the attachment locations relating to the robot 2a (see Fig. 31). Further, for example, when the input control unit 115 receives the selection of the robot 2b as the horizontal articulated robot, the display control unit 114 allows the display device 41 to display the group 7323 having the attachment locations relating to the robot 2b (see Fig. 32).

For example, at step S122 in the above described generation of the job program, a calibration between the robot coordinate system of the robot 2a as the vertical articulated robot and the image coordinate system of the fixed camera 32 is performed. Therefore, when the input control unit 115 receives the selection of the robot 2a, the display control unit 114 allows the display device 41 to display the group 7323 having the attachment locations relating to the robot 2a as shown in Fig. 31 in the calibration creation window 73b.

In the above described manner, the display contents of the group 7323, i.e., the information including the placement locations of the imaging unit 3 is displayed in a limited extent depending on the type of the robot 2, and selection errors by the user may be reduced.

With respect to the second calibration creation window 73b, as described above, when the user gives an operation instruction to select the desired robot 2 and attachment location of the imaging unit 3 and gives an operation instruction to the button 7303 labeled "Next", the input control unit 115 receives the selection of the robot 2 and the attachment location of the imaging unit 3 (Fig. 28: step S515) . Thereby, the control unit 111 allows the storage unit 113 to store the selected placement location of the imaging unit 3, and issues an output instruction of the third calibration creation window 73c shown in Fig. 33 to the display control unit 114 (Fig. 28: step S516) . In response to the output instruction, the display control unit 114 allows the display device 41 to display the third calibration creation window 73c.

Here, as below, the explanation will be made with a focus on the settings of the calibration at step S122. That is, the explanation will be made with a focus on the calibration with respect to the fixed camera 32. Accordingly, as below, the explanation will be made assuming that the robot 2a is selected and the upwardly fixed camera (Fixed upward) 32 is selected in the above described calibration creation window 73b in Fig. 31 by the user. Further, in the third to tenth calibration creation windows 73 to be explained, details according to the selected details of the calibration creation windows 73a, 73b are displayed. Therefore, in the third to tenth calibration creation windows 73, the details corresponding to the upwardly fixed fixed camera 32 are displayed.

### (Third Calibration Creation Window)

As shown in Fig. 33, the third calibration creation window 73c is a window for selection of details of a target sequence. The target sequence refers to an image processing sequence relating to a target such as a marker imaged by the imaging unit at execution of the calibration. In the embodiment, the calibration creation window 73c has a dropdown list 733 for selection of one target sequence from the plurality of kinds of target sequences.

The display details of the dropdown list 733 change according to the type (selection) of the imaging unit 3 in the first calibration creation window 73a. For example, when the input control unit 115 receives the selection of the fixed camera 32 in the first calibration creation window 73a, the display control unit 114 allows the display device 41 to display the calibration creation window 73c having the dropdown list 733 with the display contents relating to the fixed camera 32. Note that, when the mobile camera 31 is selected in the first calibration creation window 73a, the details on the mobile camera 31 are displayed in the dropdown list 733. As described above, the display contents of the dropdown list 733 of the subsequently displayed calibration creation window 73c are limited contents corresponding to the selection in the previously displayed calibration creation window 73a, and thereby, selection errors by the user may be reduced.

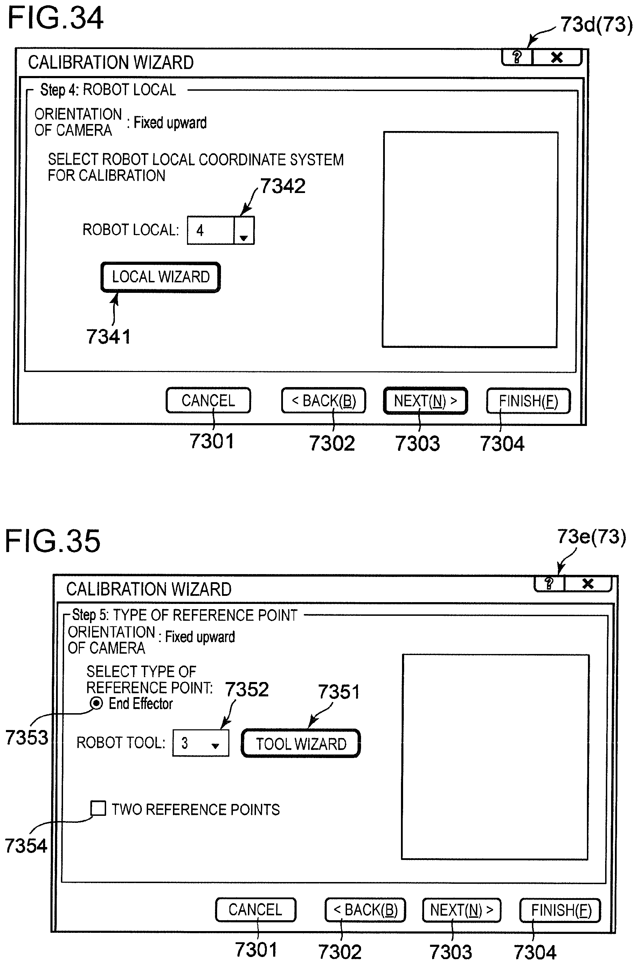

With respect to the calibration creation window 73c, when the user gives an operation instruction to select the target sequence and gives an operation instruction to the button 7303 labeled "Next", the input control unit 115 receives the selection of the target sequence (Fig. 28: step S517) . Thereby, the control unit 111 allows the storage unit 113 to store the selected target sequence. Further, in this regard, the control unit 111 correlates the selected target sequence and the currently set calibration and stores them in the storage unit 113. Further, the control unit 111 issues an output instruction of the fourth calibration creation window 73d (calibration creation window 73) shown in Fig. 34 to the display control unit 114 (Fig. 28: step S518) . In response to the output instruction, the display control unit 114 allows the display device 41 to display the fourth calibration creation window 73d (not shown).

### (Fourth Calibration Creation Window)

As shown in Fig. 34, the fourth calibration creation window 73d is a window for selection of a local coordinate system (robot local) to be correlated with the image coordinates in the calibration. In the embodiment, the calibration creation window 73d has a dropdown list 7342 for selection of a save number of the local settings and a local wizard button 7341.

In the dropdown list 7342, the save number of the local settings that have been already set and save numbers of local settings to be set and saved (save numbers of local settings not yet set) are displayed. Further, the local wizard button 7341 is used for starting the group of windows for local settings having the above described plurality of local setting windows 72.

With respect to the calibration creation window 73d, for example, when the user does not give an operation instruction to the local wizard button 7341, but gives an operation instruction to select the save number of the local settings that have been set from the dropdown list 7342, and gives an operation instruction to the button 7303 labeled "Next", the input control unit 115 receives the selection of the save number of the local settings (Fig. 28: step S519). Thereby, the control unit 111 determines not to make the local settings (Fig. 28: step S520) and allows the storage unit 113 to store the selected local coordinate system, and issues an output instruction of the fifth calibration creation window 73e (calibration creation window 73) shown in Fig. 35 to the display control unit 114 (Fig. 28: step S522). In response to the output instruction, the display control unit 114 allows the display device 41 to display the fifth calibration creation window 73e.

On the other hand, with respect to the calibration creation window 73d, when the user selects the save number of the local settings that have not been set from the dropdown list 7342 and gives an operation instruction to the local wizard button 7341, the input control unit 115 receives the operation instruction by the user (Fig. 28: step S519) . Thereby, when determining to make the local settings (Fig. 28: step S520), the control unit 111 moves to the above described local settings and starts the group of windows for local settings having the plurality of local setting windows 72 (Fig. 28: step S521). Then, after the above described local settings end, when the input control unit 115 receives an operation instruction to the button 7303 labeled "Next" of the calibration creation window 73d by the user, the control unit 111 allows the storage unit 113 to store the set local settings, and issues an output instruction of the fifth calibration creation window 73e shown in Fig. 35 to the display control unit 114 (Fig. 28: step S522).

### (Fifth Calibration Creation Window)

As shown in Fig. 35, the fifth calibration creation window 73e is a window for receiving setting (selection) of an acquisition type of the reference point used at execution of the calibration. In the case of the calibration of the upward camera (fixed camera 32), only the end effector may be selected as the acquisition type of the reference point. That is, in the upward calibration, the local coordinates (robot coordinates) of the target such as a marker attached to the end effector and the image coordinates at which the target is detected are correlated. The calibration creation window 73e is a window for receiving settings of the tool settings (robot tool) that hold the offset of the target attached to the end effector at the distal end axis coordinates of the robot 2a.

The calibration creation window 73e has a radio button 7353 that receives the selection of the end effector, a dropdown list 7352 for selection of the save number of the tool settings, a tool wizard button 7351, and a checkbox 7354 that receives use of two reference points.

The radio button 7353 is displayed when the calibration with respect to the fixed camera 32 is performed. In the dropdown list 7352, the save number of the tool settings that have been already set and the save number of the tool settings to be set and saved (save number of the tool settings that have not been set). In the embodiment, not only the target provided on the hand 270 as the end effector but also e.g. a target attached to the work grasped by the hand 270 may be set as the reference point. In the dropdown list 7352, the save number of the tool settings that hold the offset of the reference point as the target at the distal end axis coordinates of the robot 2a is selected. The tool wizard button 7351 is used for tool settings by starting the group of windows for tool settings having the above described plurality of tool setting windows 71 in the case where the tool settings of the above described reference point as the target have not yet been set.

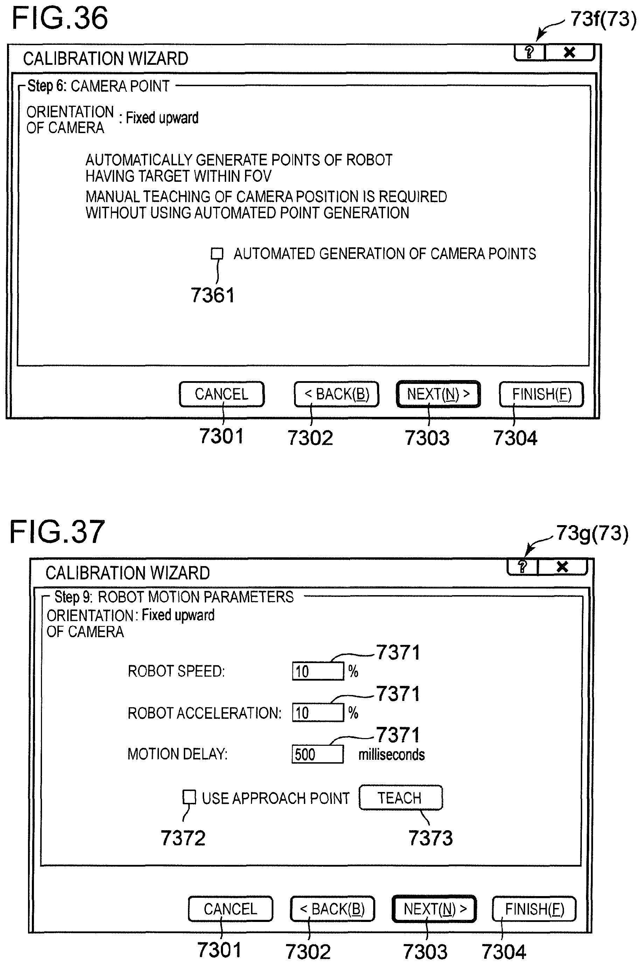

With respect to the calibration creation window 73e, for example, when the user does not give an operation instruction to the tool wizard button 7351, but gives an operation instruction to select the acquisition type of the reference point (the end effector and the save number of the tool settings) that has been set from the dropdown list 7352, and gives an operation instruction to the button 7303 labeled "Next", the input control unit 115 receives the selection of the acquisition type of the reference point (the end effector and the save number of the tool settings) (Fig. 28: step S523). Thereby, the control unit 111 determines not to make the tool settings (Fig. 28: step S524) and allows the storage unit 113 to store the selected tool settings, and issues an output instruction of the sixth calibration creation window 73f (calibration creation window 73) shown in Fig. 36 to the display control unit 114 (Fig. 28: step S526) . In response to the output instruction, the display control unit 114 allows the display device 41 to display the sixth calibration creation window 73f.

On the other hand, with respect to the calibration creation window 73e, when the user selects the save number of the tool settings that have not been set from the dropdown list 7352 and gives an operation instruction to the local wizard button 7351, the input control unit 115 receives the operation instruction by the user (Fig. 28: step S523) . Thereby, when determining to make the tool settings (Fig. 28: step S524), the control unit 111 moves to the above described tool settings and starts the group of windows for tool settings having the plurality of tool setting windows 71 (Fig. 28: step S525). Then, after the above described tool settings end, when the input control unit 115 receives an operation instruction to the button 7303 labeled "Next" of the calibration creation window 73e by the user, the control unit 111 allows the storage unit 113 to store the set tool settings, and issues an output instruction of the sixth calibration creation window 73f shown in Fig. 36 to the display control unit 114 (Fig. 28: step S526) .

### (Sixth Calibration Creation Window)

As shown in Fig. 36, the sixth calibration creation window 73f is a window for selection as to whether or not to perform automated generation of camera points and has a checkbox 736. The camera point is a point within the captured image at which the target (reference point) or the imaging unit 3 is positioned at execution of the calibration. The number of the camera points is not particularly limited, but preferably three or more. In the embodiment, nine points are set.

With respect to the calibration creation window 73f, when the user checks the checkbox 7361 and gives an operation instruction to the button 7303 labeled "Next", the input control unit 115 receives the selection to perform automated generation of the camera points (Fig. 28: step S527) . On the other hand, when the user does not check the checkbox 7361 and gives an operation instruction to the button 7303 labeled "Next", the input control unit 115 receives the selection not to perform automated generation of the camera points (Fig. 28: step S527) . Then, the control unit 111 allows the storage unit 113 to store whether or not to perform the automated generation of the camera points, and issues an output instruction of the seventh calibration creation window (not shown) to the display control unit 114 (Fig. 28: step S528) . In response to the output instruction, the display control unit 114 allows the display device 41 to display the seventh calibration creation window.

### (Seventh Calibration Creation Window)

The seventh calibration creation window is a window for selection as to whether or not to perform distortion correction of the lens of the imaging unit 3 and setting of an image processing sequence when the distortion correction is performed (not shown) . Note that the seventh calibration creation window has nearly the same configuration as the first calibration creation window 73a except the selection details (setting details) are different.

With respect to the seventh calibration creation window (not shown), when the user selects whether or not to perform the distortion correction of the lens and, if performing the distortion correction, selects the image processing sequence, and gives an operation instruction to the button 7303 labeled "Next", the input control unit 115 receives whether or not to perform the distortion correction of the lens (Fig. 28: step S529) . The control unit 111 allows the storage unit 113 to store whether or not to perform the distortion correction of the lens, and issues an output instruction of the eighth calibration creation window (not shown) to the display control unit 114 (Fig. 28: step S530) . In response to the output instruction, the display control unit 114 allows the display device 41 to display the eighth calibration creation window.

### (Eighth Calibration Creation Window)

The eighth calibration creation window is a window for setting of an illumination at execution of the calibration (not shown) . In the eighth calibration creation window, for example, a wait time until the illumination is turned on, an output bit that turns on the illumination, etc. may be set. Note that the eighth calibration creation window has nearly the same configuration as the first calibration creation window 73a except the selection details (setting details) are different.

With respect to the eighth calibration creation window (not shown), when the illumination is set and an operation instruction to the button 7303 labeled "Next" is given, the input control unit 115 receives the setting of the illumination (Fig. 28: step S531) . The control unit 111 allows the storage unit 113 to store the setting of the illumination, and issues an output instruction of the ninth calibration creation window 73g (calibration creation window 73) shown in Fig. 37 to the display control unit 114 (Fig. 29: step S532) . In response to the output instruction, the display control unit 114 allows the display device 41 to display the ninth calibration creation window.

### (Ninth Calibration Creation Window)

As shown in Fig. 37, the ninth calibration creation window 73g is a window for selection of details of various parameters relating to a robot action during the calibration. In the embodiment, as shown in Fig. 37, the calibration creation window 73g is adapted to select the respective details of three parameters of a robot speed (a movement velocity of a predetermined part of the robot 2), a robot acceleration (a movement acceleration of the predetermined part of the robot 2), and a motion delay (at the number of seconds of imaging after the predetermined part of the robot 2 stops) . Specifically, the calibration creation window 73g has a plurality of textboxes 7371 for inputting details (information) on the parameters. Note that the parameters are not limited to the above described three parameters, but another parameter may be further added or one of the above described parameters may be omitted.

Further, the calibration creation window 73g has a checkbox 7372 for selection as to whether or not to use an approach point and a teach button 7373. The approach point refers to a location as a base point of movement of the camera point at execution of the calibration. The approach point is used, and thereby, the predetermined part of the robot 2 is constantly moved from the approach point to the camera point at execution of the calibration. Accordingly, stability of the position of the robot 2 at the camera point may be improved and, as a result, the accuracy of the calibration result may be further improved.

With respect to the calibration creation window 73g, for example, when the user checks the checkbox 7372 and gives an operation instruction to the teach button 7373, the input control unit 115 receives the operation instruction by the user. Thereby, the control unit 111 determines to set the approach point (Fig. 29: step S533), and issues an output instruction of a window for setting approach point 730 to the display control unit 114 (Fig. 29: step S534) . Thereby, the display control unit 114 allows the display device 41 to pop-up display the window 730.

As shown in Fig. 38, the window 730 is a window for input of a character string (robot coordinates) of the approach point. Further, the window 730 has an OK button 7305, a cancel button 7306, a button 7307 used for display of a window (not shown) that receives an operation instruction of a jog motion (jog & teach button). When the input control unit 115 receives the selection of the button 7307, the display control unit 114 allows the display device 41 to display a window (not shown) that receives the operation instruction of the jog motion (the window corresponding to the window 720 shown in Fig. 22) under the control of the control unit 111. Thereby, the user may set the approach point by giving the operation instruction of the jog motion in stead of inputting the character string.

Using the window 730 and the window (not shown) that receives the operation instruction of the jog motion, when the user sets the approach point and gives an operation instruction to the OK button 7305 in the window 730, the input control unit receives the setting of the approach point (Fig. 29: step S535) . Thereby, the control unit 111 allows the storage unit 113 to store the approach point and issues an instruction to erase the window 730 to the display control unit 114, and the display control unit 114 erases the window 730 from the display device 41.

Then, when the user gives an operation instruction to the button 7303 labeled "Next" of the calibration creation window 73g shown in Fig. 37, the input control unit 115 receives the operation instruction. Thereby, the control unit 111 issues an output instruction of the tenth calibration creation window (not shown) to the display control unit 114 (Fig. 29: step S536) . In response to the output instruction, the display control unit 114 allows the display device 41 to display the tenth calibration creation window.

Note that, with respect to the calibration creation window 73g, when the user does not check the checkbox 7372 and gives an operation instruction to the button 7303 labeled "Next", the input control unit 115 receives the operation instruction by the user. Thereby, the control unit 111 determines not to make the setting of the approach point (Fig. 29: step S533), and issues an output instruction of the tenth calibration creation window (not shown) to the display control unit 114 (Fig. 29: step S536).

### (Tenth Calibration Creation Window)

The tenth calibration creation window (not shown) is a window in which the details set in the first to ninth calibration creation windows are listed. Note that the tenth calibration creation window has nearly the same configuration as the first calibration creation window 73a except the selection details (setting details) are different. By visually recognizing the tenth calibration creation window, the user may confirm the setting details of the calibration at a glance.

Further, the tenth calibration creation window has buttons corresponding to the buttons 7301 to 7304 like the first calibration creation window 73a. Therefore, when the input control unit 115 receives an operation instruction to the button labeled "Back", the control unit 111 makes resetting. Or, when the input control unit 115 receives an operation instruction to the button labeled "Cancel", the control unit 111 cancels the set calibration. Or, when the input control unit 115 receives an operation instruction to the button labeled "Finish", the control unit 111 allows the storage unit 113 to store the calibration set by the display processing using the first to tenth calibration creation windows.

Note that, when the input control unit 115 receives an operation instruction to the button labeled "Cancel" or the button labeled "Finish", the control unit 111 ends the display processing of the group of windows for calibration creation and issues an instruction to erase the calibration creation window 73 from the display device 41 to the display control unit 114. Thereby, the display control unit 114 erases the calibration creation window 73 from the display device 41.

In the above described manner, the various settings (creation of calibration) of the calibration by the display processing of calibration are completed.

### [2C] Teaching of Camera Points (Step S52)

Next, the control system 10 executes teaching of a plurality of camera points.

As described above, when the input control unit 115 receives an operation instruction to the button labeled "Finish" by the user (Fig. 29: step S537), the control unit 111 issues an instruction to erase the calibration creation window 73 from the display device 41 and issues an output instruction of a sub-window 61 having a property setting window 60 to the display control unit 114 (Fig. 29: step S538). Thereby, the display control unit 114 allows the display device 41 to display the sub-window 61 having the property setting window 60 shown in Fig. 39.

### (Sub-window)

When the various settings of the calibration are completed, the property setting window 60, a teach button 6151, and a picture image display part 612 are displayed in the sub-window 61. Note that, in the picture image display part 612 shown in Fig. 39, an example of the work 93 is shown (the same applies to Figs. 40 to 42) .

The property setting window 60 has a view part 63 and a list (property list) 57.

The view part 63 is an area that displays the created calibration settings (calibration name) and the image processing sequence created by display processing to be described (image processing sequence name) together. In the embodiment, the display form of the view part 63 is a tree view in which the calibration settings and the image processing sequence settings are respectively hierarchically displayed. Thereby, the user may easily grasp the plurality of calibration settings and the plurality of image processing sequences at a glance. Accordingly, the desired calibration settings and image processing sequence are easily selected. Note that the display form of the view part 63 is not limited to that, but may be e.g. a list view in which the calibration settings and the image processing sequence settings are respectively displayed in parallel or the like.

The list 57 is an area that displays various setting details of the calibration settings and the image processing sequence selected in the view part 63. The property list is adapted to receive operation instructions (input) by the user. Accordingly, the user may set (change) the specific setting details of the calibration settings using the property list.

With respect to the sub-window 61, when the user gives an operation instruction to the teach button 6151, the input control unit 115 receives the operation instruction (execution instruction of teaching) (Fig. 29: step S539). Thereby, the control unit 111 gives execution instructions to perform teaching of one or more camera points and the reference point to the robot control apparatus 12 and the image processing apparatus 13 (Fig. 29: step S540). Further, the control unit 111 issues an output instruction of a teach group 616 to the display control unit 114. Thereby, the display control unit 114 allows the display device 41 to display the sub-window 61 having the teach group 616 shown in Fig. 40 or 41.

For example, when receiving the selection to perform automated generation of the camera point at the above described step S527, the computer 11 issues execution instructions to teach one camera point to the robot control apparatus 12 and the image processing apparatus 13. Further, in this case, the control unit 111 issues an output instruction to display a flowchart 660a (flowchart 660) and a jog panel 54 to the display control unit 114 (see Fig. 40). Thereby, in a flowchart display part 62 of the sub-window 61, the flowchart 660a for setting one camera point is displayed (see Fig. 40). Then, with respect to the sub-window 61 shown in Fig. 40, when the user gives operation instructions to various buttons of the teach group 616, various buttons of the jog panel 54, etc., the computer 11 receives the operation instructions by the user. Then, the robot control apparatus 12 and the image processing apparatus 13 drive the imaging unit 3 and the robot 2 to position the target (arrow A in the drawing) attached to the work grasped by the hand 270 at the center (camera point) of the picture image display part 612 shown in Fig. 40, for example.

On the other hand, when receiving the selection not to perform automated generation of the camera point in the above described step S527, the computer 11 issues execution instructions to teach predetermined all camera points (nine camera points in the embodiment) to the robot control apparatus 12 and the image processing apparatus 13. Further, in this case, the control unit 111 issues an output instruction to display a flowchart 660b (flowchart 660) and the jog panel 54 to the display control unit 114 (see Fig. 41). Thereby, in the flowchart display part 62 of the sub-window 61, the flowchart 660b for setting the nine camera points is displayed (see Fig. 41). Then, with respect to the sub-window 61 shown in Fig. 41, when the user gives operation instructions to various buttons of the teach group 616, various buttons of the jog panel 54, etc., the computer 11 receives the operation instructions by the user. Then, the robot control apparatus 12 and the image processing apparatus 13 drive the imaging unit 3 and the robot 2 to position the target attached to the work grasped by the hand 270 in the predetermined nine locations (camera points) within the picture image display part 612 shown in Fig. 41.

Here, the flowcharts 660a, 660b respectively show the flows of the processing of teaching, and the top flow 661 shows the selected calibration settings (calibration name). Further, the second and subsequent flows 662 from the top in the drawings show teaching steps contained in the selected calibration settings.

For example, as shown in Fig. 41, the display form of the flow 662a (flow 662) that has been taught and the display form of the flow 662b (flow 662) that has not yet been taught are different. In the embodiment, the background colors are changed between the flow 662a and the flow 662b. Thereby, the user may distinguish the reference point that has been taught and the reference point that has not yet been taught at a glance.

When the teaching of all flows 662 of the flowchart 660a or flowchart 660b is completed, in other words, teaching of all reference points is completed, the control unit 111 issues an output command of display of a calibration execution button 6152 shown in Fig. 42 to the display control unit 114 (Fig. 29: step S541). Thereby, the display control unit 114 allows the sub-window 61 to display the calibration execution button 6152 (see Fig. 42).

Then, when the user gives an operation instruction to the calibration execution button 6152, the input control unit 115 receives the operation instruction (execution instruction of the calibration) (Fig. 29: step S542) . Thereby, the control unit 111 gives execution instructions to perform teaching of the calibration to the robot control apparatus 12 and the image processing apparatus 13 (Fig. 29: step S543).

In the above described manner, teaching of the camera points is completed.

### [3C] Execution of Calibration (Step S53)

Next, the control system 10 executes the calibration.

Specifically, the robot control apparatus 12 and the image processing apparatus 13 execute the calibration based on the execution instructions from the control unit 111 at step S543.

First, when receiving the execution instruction, the robot control apparatus 12 acquires the status of the robot 2a from the robot 2a. Then, the robot control apparatus 12 issues a movement instruction to the robot 2a so that the target is positioned at the first camera point. In this regard, the robot 2a returns information on the movement of the robot arm 20 (values of the position sensor) or the like to the robot control apparatus 12 at each time. Then, the robot control apparatus 12 issues an execution instruction of the image processing sequence to the image processing apparatus 13. The image processing apparatus 13 receives the execution instruction, detects the target (e.g. a marker) using the fixed camera 32 (imaging unit 3), and executes the image processing sequence. The image processing apparatus 13 executes the image processing sequence and performs image processing based on the captured image (image data) obtained by imaging of the target using the fixed camera 32. Then, when the image processing ends, the image processing apparatus 13 transmits an execution result of the image processing sequence (a detection result of the target) to the robot control apparatus 12. Thereby, the robot control apparatus 12 acquires the execution result of the image processing sequence at the first camera point. Then, the robot control apparatus 12 performs the same processing as the series of processing to the above described acquisition of the execution result of the image processing sequence at the first camera point on the remaining second to ninth camera points . Then, the robot control apparatus 12 calculates a calibration result obtained by correlation of the image coordinate system of the fixed camera 32 (imaging unit 3) and the local coordinates (robot coordinates) of the robot 2a (robot 2) based on the execution results of the image processing sequences at the first to ninth reference points and the local coordinates (robot coordinates) of the target at the first to ninth camera points. Then, the robot control apparatus 12 transmits the calculated calibration result to the computer 11. Note that, as described above, the specific methods for the execution details of the calibration etc. are not particularly limited. The processing (program) is stored with respect to each of various settings in the storage unit 113, and the control unit 111 executes the processing (program) according to the selected settings.

In the above described manner, the execution of the calibration is completed.

### [4C] Reflection of Calibration Result (Step S54)

Next, the control system 10 executes reflection and settings of the calibration result.

Specifically, first, when the communication unit 116 of the computer 11 receives the calibration result (Fig. 29: step S544), the control unit 111 issues an output instruction of a window 68 for displaying the calibration result to the display control unit 114 (Fig. 29: step S545). Thereby, the display control unit 114 allows the display device 41 to display the window 68.

The window 68 has an area 681 that displays the previous calibration result, an area 682 that displays the current calibration result, an OK button 683, and a cancel button 684. The OK button 683 and the cancel button 684 are provided, and thereby, the user may select the OK button 683 when desiring reflection of the calibration result and select the cancel button 684 when not desiring the reflection. As described above, the window 68 is adapted for the user to select whether or not to reflect the calibration result. Further, the areas 681, 682 are provided, and thereby, the user may select whether or not to reflect the current calibration result in comparison with the details of the previous calibration result.

With respect to the window 68, when the input control unit 115 receives the selection to reflect the calibration result by the user, i.e., an operation instruction to the OK button 683 (Fig. 29: step S546), the control unit 111 issues an instruction to reflect and store the calibration result to the robot control apparatus 12 (Fig. 29: step S547) . In response to the instruction, the computer 11 reflects and stores the calibration result. Note that the robot control apparatus 12 may reflect and store the calibration result.

On the other hand, when the user makes the selection not to reflect the calibration result, though not shown in Fig. 29, the control unit 111 performs e.g. [1C] various settings in calibration (step S51), [2C] teaching of camera points (step S52), and [3C] execution of calibration (step S53) again. Note that it is only necessary to perform at least [3C] execution of calibration (step S53) again. In this manner, [3C] execution of calibration (step S53) etc. are repeatedly performed as appropriate, and thereby, the accuracy of the calibration result may be improved. Further, as described above, the previous calibration result and the current calibration result may be compared using the window 68, and thereby, whether or not to reflect may be easily determined.

As described above, in [1C] various settings in calibration, the display control unit 114 allows the display device 41 as "display unit" to display the calibration creation windows 73 as "guide windows for calibration" that guides input of information for calibration. Thereby, the user selects information (setting details) according to the details displayed in the calibration creation windows 73, and thereby, may easily and readily complete the settings of the calibration without complex operations. Accordingly, even a beginner may easily make settings of the calibration.

Further, as described above, the control system 10 of the embodiment has the input device 42 as "receiving unit" that receives input. Further, based on the input received by the input device 42, the display control unit 114 allows the display device 41 as "display unit" to sequentially display the calibration creation windows 73 as the plurality of "guide windows for calibration". In the embodiment, the display control unit 114 displays the group of windows for local settings for dialogically displaying the plurality of (ten in the embodiment) local setting windows 72 with the user. Thereby, the user may select information (setting details) in the dialogic form (wizard form) according to the sequentially displayed calibration creation windows (wizard windows) 73. As described above, the user may dialogically select the setting details along a predetermined sequence, and thereby, may easily and readily complete settings of the calibration without complex operations. Accordingly, input errors, insufficient input, etc. may be reduced. Further, time and effort of programing of various settings as in related art may be saved. Furthermore, the setting details necessary in calibration creation are displayed to a limited extent, and thereby, even a beginner may reduce insufficient settings of the setting details necessary for calibration creation. Accordingly, occurrence of e.g. an error in the execution of the calibration may be reduced.

Note that, as described above, the group of windows for calibration creation have the ten calibration creation windows 73, however, the number of calibration creation windows 73 is not limited to that. Another calibration creation window may be further added or one of the ten calibration creation windows 73 may be omitted. Further, the sequence of display of the ten calibration creation windows 73 is not limited to the above described sequence, but arbitrary. Note that it is preferable that the display contents of the calibration creation window 73 to be subsequently displayed change according to the selected details of the previously displayed calibration creation window 73. That is, it is preferable that the display contents of the calibration creation window 73 to be subsequently displayed may be limited contents according to the selected details of the calibration creation window 73 previously displayed. Especially, the above described ten calibration creation windows 73 are displayed in the above explained order, and thereby, the user particularly easily grasp the setting details and the convenience for the user may be improved.

Here, as described above, the control system 10 is "control apparatus" that can control driving of the robot 2, the imaging unit 3 and the display device 41 as "display unit" based on the input of the input device 42 as "input unit". Further, as described above, the control system 10 includes the display control unit 114 that allows the display device 41 to display the calibration creation window 73b as "input window" for input of the robot 2 as an object to be controlled and allows the display device 41 to display the group (area) 7323 as "imaging unit input part" that guides the input of the attachment position (placement position) of the imaging unit 3 corresponding to the input robot 2 (e.g. robot 2a), and the calibration creation part 1113 and the calibration execution part 1114 as "calibration control unit" that performs a calibration of correlating the coordinate system (robot coordinate system) of the robot 2 and the coordinate system (image coordinate system) of the imaging unit 3 based on the input attachment position of the imaging unit 3. That is, the above described respective processing (steps S51 to S54) of the calibration are mainly performed by the calibration creation part 1113 and the calibration execution part 1114 of the control unit 111.

According to the control system 10, the attachment position of the imaging unit 3 corresponding to the input (selected) robot 2 is displayed on the display device 41. That is, the attachment position of the imaging unit 3 not corresponding to the input robot 2a is undisplayed. For example, as described above, in the group 7323 of the calibration creation window 73b, only the attachment position of the imaging unit 3 corresponding to the robot 2 selected using the dropdown list 7322 is displayed, but the attachment position of the imaging unit 3 not corresponding thereto is undisplayed. Thereby, the user may easily make the selection of the attachment position of the imaging unit 3 corresponding to the input robot 2. As a result, various settings for calibration may be easily and appropriately made.

Here, "input" includes "selection". Further, in the input of the robot 2, for example, the user may input the robot 2 using a keyboard or the like or select the robot 2.

Especially, as described above, the display control unit 114 can display the vertical articulated robot and the horizontal articulated robot on the calibration creation window 73b as "input window", and the display form of the group (area) 7323 as "imaging unit input part" differs between the case where the robot 2a as an example of "vertical articulated robot" is input and the case where the robot 2b as an example of "horizontal articulated robot" is input. Thereby, the selection of the attachment position of the imaging unit 3 corresponding to the robot 2a and the selection of the attachment position of the imaging unit 3 corresponding to the robot 2b may be respectively easily made. According to the control system 10 (application software installed in the control system 10), calibrations with respect to the plurality of kinds of robots 2 may be performed using the single control system (single application software) 10 without preparing control systems (application software) respectively corresponding to the robot 2a and the robot 2b, and the convenience is excellent.

Especially, as described above, the display control unit 114 displays the local wizard button 7341 as "local setting call-up part" for calling up the local setting window 72 as "guide window for local settings" that guides input of the information for setting the local coordinate system different from the coordinate system of the robot 2 (robot coordinate system) in the calibration creation window 73d as "guide window for calibration". Thereby, the user may easily call up the local setting window 72 by giving an operation instruction to call up the local setting window 72 via the local wizard button 7341 (by clicking or touching). Accordingly, for example, time and effort to once cancel the settings by the calibration creation window 73 for local settings, make the local settings, and then, remake the settings of the calibration again from the start may be omitted. Therefore, the time and effort of the user may be significantly omitted.

Especially, in the embodiment, the display control unit 114 allows the display device 41 to sequentially display the plurality of local setting windows 72 based on the operation instructions to the local wizard button 7341 received by the input control unit 115. Thereby, the user may easily and readily make the local settings without complex operations by dialogically selecting information (setting details) according to the sequentially displayed local setting windows 72.

Further, as described above, the display control unit 114 displays the tool wizard button 7351 as "tool setting call-up part" for calling up the tool setting window 71 as "guide window for tool settings" for guiding input of the information for obtaining offset of the tool (e.g. work 93) attached to the robot 2 (information for tool settings for obtaining offset) in the calibration creation window 73e as "guide window for calibration" . Thereby, the user may easily call up the tool setting window 71 by giving an operation instruction to call up the tool setting window 71 via the tool wizard button 7351. Accordingly, for example, time and effort to once cancel the settings by the calibration creation window 73 for tool settings, make the tool settings, and then, remake the settings of the calibration again from the start may be omitted. Therefore, the time and effort of the user may be significantly omitted.

Especially, in the embodiment, the display control unit 114 allows the display device 41 to sequentially display the plurality of tool setting windows 71 based on the operation instructions to the tool wizard button 7351 received by the input control unit 115. Thereby, the user may easily and readily make the tool settings without complex operations by dialogically selecting information (setting details) according to the sequentially displayed tool setting windows 71.

Further, as described above, the display control unit 114 displays the check box 7361 as "calibration point selection part" for selecting whether or not to perform automated generation of the camera points as "calibration points" used in calibration in the calibration creation window 73f as "guide window for calibration". Thereby, the user may select whether or not to perform automated generation of the camera points easily via the checkbox 7361 according to the purpose of the user. For example, the user may reduce time and effort to make settings of the plurality of camera points by automated generation of the camera points. On the other hand, for example, in the case where the drive range of the robot arm 20 is limited, it is effective not to perform automated generation of the camera points. Without the automated generation of the camera points, the user may make settings of the respective camera points in a region in which the robot arm 20 does not interfere with peripherals. Therefore, the calibration creation window 73f has the checkbox 7361, and thereby, settings according to the purpose of the user may be easily made.

Further, as described above, the display control unit 114 displays the check box 7372 as "approach point selection part" for selecting whether or not to perform automated generation of the approach point as the base point of the movement to the camera points as "calibration points" of the predetermined part (e.g. tool center point P) of the robot 2 in the calibration creation window 73g as "guide window for calibration". Thereby, the user may select whether or not to perform automated generation of the approach point easily and according to the purpose of the user by giving the operation instruction via the checkbox 7372. For example, the user may improve the stability of the position of the robot 2 at the camera points because the robot 2 constantly moves from the approach point to the camera points by the automated generation of the approach point. As a result, the accuracy of the calibration result may be further improved. On the other hand, in the case where the automated generation of the approach point is not performed, the execution of the calibration may be performed more quickly. Therefore, the calibration creation window 73g has the checkbox 7372, and thereby, settings according to the purpose of the user may be easily made.

Especially, as described above, the processing unit 110 has the display control unit 114 that controls driving of the display device 41 as "display unit" and the display control unit 114 calls up (displays) the plurality of image processing sequences created by the image processing sequence creation part 1115 in the calibration creation window 73c as "guide window for calibration" that guides input of the setting details on the calibration. In the embodiment, the display control unit 114 displays the created (existing) plurality of image processing sequences in the dropdown list 733 in the calibration creation window 73c. Thereby, the user may select a desired image processing sequence from the plurality of image processing sequences via the dropdown list 733. That is, in the settings of the calibration using the calibration creation windows 73, the user may display the created existing image processing sequences. Accordingly, for example, when settings of a plurality of calibrations are desired, time and effort to create the image processing sequences in the settings of the respective calibrations may be omitted, and thereby, creation of the image processing sequence at each time when the calibration is set may be omitted. As a result, settings of the calibration may be simple and the user-friendliness may be significantly improved.

As described above, in the embodiment, the desired image processing sequence may be selected (changed) also in the list 57 of the property setting window 60 shown in Fig. 39. Accordingly, even after the calibration creation using the plurality of calibration creation windows 73, the user may change the image processing sequence in the calibration.

As described above, the control system 10 is "control apparatus" that can control driving of the robot 2 and the imaging unit 3 and includes the processing unit 110 having the image processing sequence creation part 1115 that creates the setting details on the image processing sequence containing image processing of the captured image (image data) imaged by the imaging unit 3 and the calibration creation part 1113 that creates the setting details on the calibration of correlating the coordinate system of the robot 2 (robot coordinate system) and the coordinate system of the imaging unit 3 (image coordinate system), and the processing unit 110 can call up the image processing sequence created by the image processing sequence creation part 1115 in (at) creation (calibration creation) of the setting details on the calibration by the calibration creation part 1113. According to the control system 10, when a plurality of calibrations are desired, the existing (created) image processing sequences may be called up in the settings of the respective calibrations, and thereby, time and effort to create the image processing sequence at each time when the calibration is set may be omitted. Accordingly, time and labor taken for the settings of the calibration may be reduced. Further, the created image processing sequence may be called up also in processing using commands, which will be described later. Note that, in the specification, "call up image processing sequence" includes displaying the image processing sequence on the display unit and making the image processing sequence feasible in the control program.

Further, the processing unit 110 has the display control unit 114 that controls driving of the display device 41 as "display unit" and the display control unit 114 allows the display device 41 to display the calibration settings in which the setting details on the calibration have been created and the image processing sequence settings in which the setting details on the image processing sequence have been created in the property setting window 60 as the same "window" (see the view part 63 in Figs. 39 and 42). Thereby, the user may grasp the existing calibration settings and the existing image processing sequence settings at a glance.

Especially, the display control unit 114 displays the calibration settings and the image processing sequence settings in the tree view (see the view part 63 in Figs. 39 and 42). Thereby, the user may grasp the types and the number of the existing calibration settings and the types and the number of the existing image processing sequence settings at a glance.

Furthermore, the display control unit 114 displays the calibration settings and the image processing sequence settings correlating with each other (see the view part 63 in Figs. 39 and 42) . Thereby, the user may easily grasp the correlated calibration settings and image processing sequence settings. Accordingly, correction or the like of at least either of the calibration settings and the image processing sequence settings may be easily performed as appropriate.

Next, the creation of the image processing sequence (vision processing sequence) will be explained.

### <Creation of Image Processing Sequence>

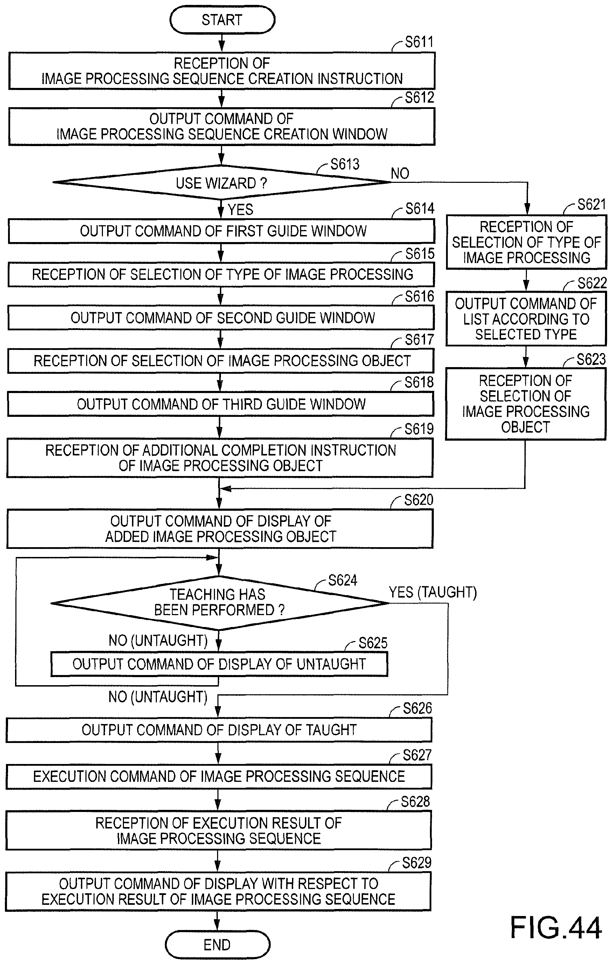

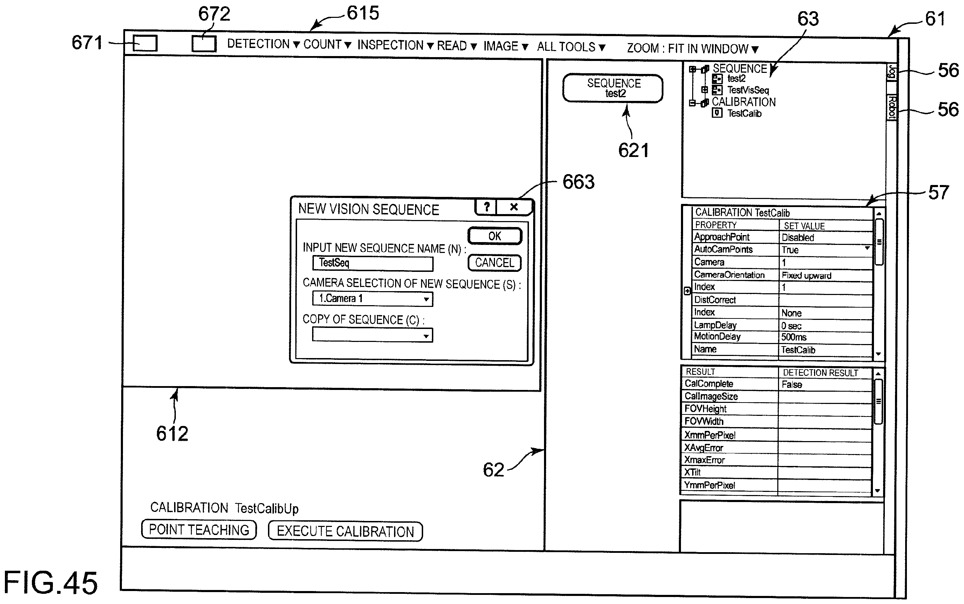

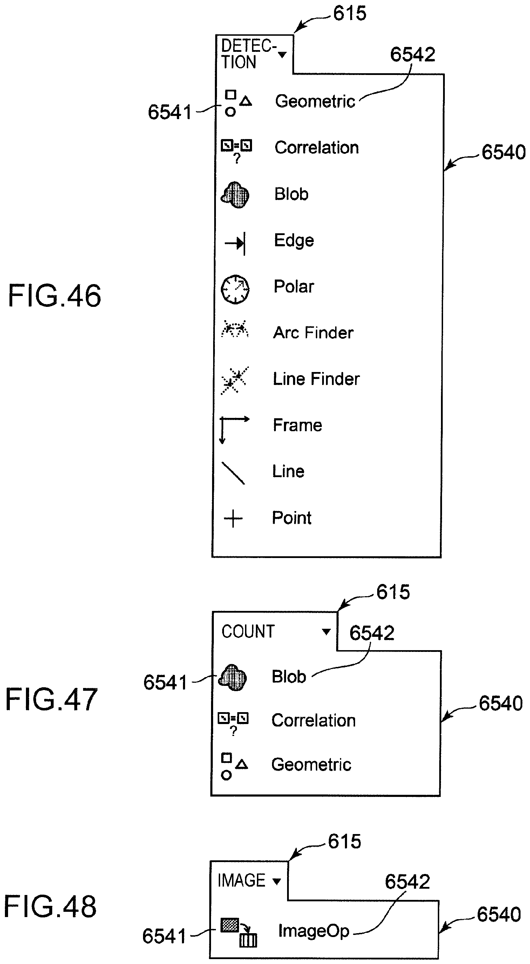

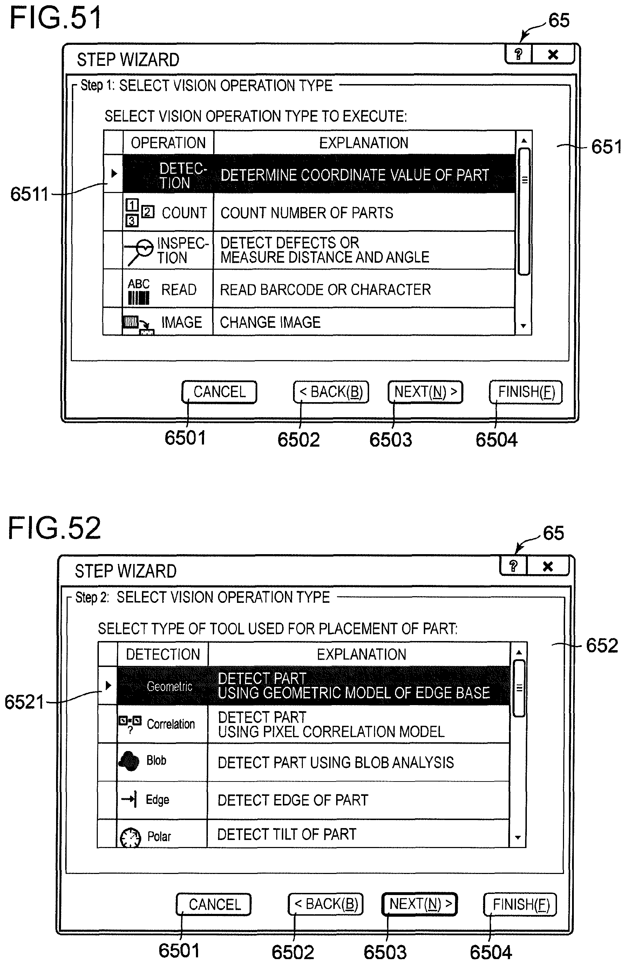

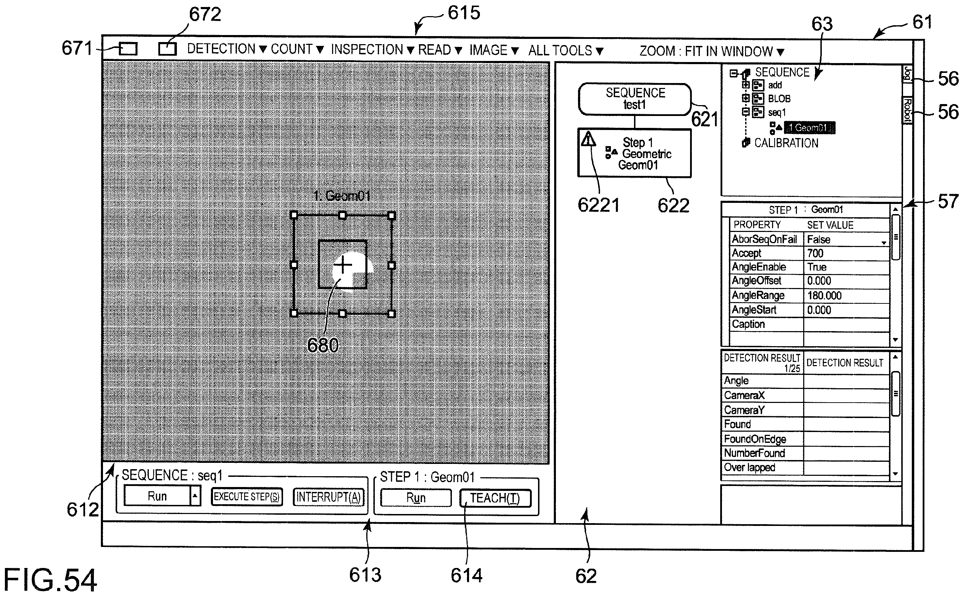

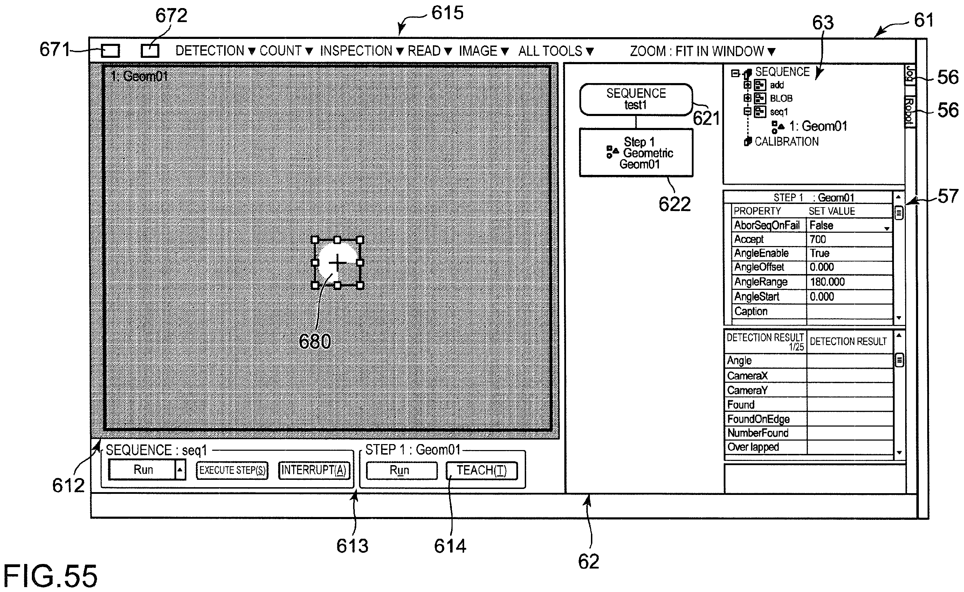

Fig. 44 is a flowchart showing a flow of display processing in the creation of the image processing sequence shown in Fig. 8. Fig. 45 shows a sub-window displayed on the display device shown in Fig. 1. Figs. 46 to 50 respectively show lists displayed on the display device shown in Fig. 1. Figs. 51 to 53 respectively show guide windows in sub-windows displayed on the display device shown in Fig. 1. Figs. 54 and 55 respectively show sub-windows displayed on the display device shown in Fig. 1 in different display from that in Fig. 45.

Hereinafter, for convenience of explanation, the upside in Figs. 45 to 55 is referred to as "upper" and the downside is referred to as "lower".

In the creation of the image processing sequence, input of items of the image processing sequence, addition of an image processing object to the image processing sequence, execution of the image processing sequence, and reflection of the execution result (detection result) of the image processing sequence are sequentially executed. The input of items of the image processing sequence and the addition of the image processing object to the image processing sequence are performed, and thereby, various settings of the image processing sequence are made and image detection (image processing) for detection of the target such as a marker is realized. As below, the creation of the image processing sequence will be explained.

### (Input of Items of Image Processing Sequence)

For the creation of the image processing sequence, the items of the image processing sequence are input.

The user makes an operation instruction to the icon 601 in the main window 50 shown in Fig. 17. Then, when the input control unit (receiving unit) 115 of the computer 11 receives the operation instruction (image processing sequence creation instruction) to the icon 601 by the user (step S611), the image processing sequence creation part 1115 makes an output command (instruction) of the sub-window 61 (step S612), the display control unit 114 allows the display device (display unit) 41 to display the sub-window 61 shown in Fig. 45 in place of the sub-window for robot operation 51 in the main window 50 shown in Fig. 17.

As shown in Fig. 45, in the sub-window 61, the view part 63, the flowchart display part 62, the two tabs 56, 56, the list 57, the picture image display part 612, the icon 671 used for displaying the group of windows for creation of the image processing sequence, an icon 672 for wizard selection, and the toolbar 615 are displayed. The toolbar 615 includes icons indicating "Detection", "Count", "Inspection", "Image", "Read" and "All Tools".

Then, the user makes an operation instruction to the icon 671 in the sub-window 61 shown in Fig. 45 displayed on the display device 41. Then, when the input control unit 115 receives the operation instruction to the icon 671 by the user, the display control unit 114 allows the display device 41 to display a dialogue box 663.

Then, in the sub-window 61, the user inputs necessary items of the respective items of e.g. "sequence name", "camera used in sequence", "sequence of copy source", etc. (makes an operation instruction) using the dialogue box 663. "Sequence of copy source" is input (designated) when the existing image processing sequence is copied.

When the input control unit 115 of the computer 11 receives the operation instruction by the user, the image processing sequence creation part 1115 starts creation of the image processing sequence.

At the stage, the image processing sequence has been partially created. When the image processing sequence of the copy source is designated, the settings of the image processing sequence of the copy source are copied. Accordingly, the setting details of the image processing sequence of the copy source are displayed in the sub-window 61, a guide window 65, etc. Therefore, when desiring creation of an image processing sequence in which various details of the image processing sequence that has been already set are slightly changed, the user may easily creates the sequence by designating the image processing sequence of the copy source.

Here, a flowchart is displayed in the flowchart display part 62. The currently selected sequence is displayed in the display part 621 on the top (uppermost part) of the flowchart. Further, in the second display part 622 (see Fig. 54) and the subsequent display parts (not shown) of the flowchart, the image processing objects contained in the currently selected sequence are displayed.

In the view part 63, the image processing sequence settings in which the setting details on the image processing sequence have been created and the calibration settings in which the setting details on the calibration have been created are respectively displayed in tree views. Thereby, the user may grasp the types and the number of the existing calibration settings and the types and the number of the existing image processing sequence settings at a glance.

Further, in the view part 63, the calibration settings and the image processing sequence settings correlating with each other are displayed. In the embodiment, the image processing sequence settings are displayed on the upside of the view part 63 and the calibration settings are displayed on the downside of the image processing sequence settings.

All sequences that have been created (set) are displayed in the tree of the image processing sequence settings, and all calibrations that have been created (set) are displayed in the tree of the calibration settings.

When the input control unit 115 receives an operation instruction to "Sequence" of the flowchart or "Sequence" of the tree with respect to the image processing sequence (creation of the image processing sequence) by the user, the display control unit 114 allows the display device 41 to display the list (sequence window) 57. In the list 57, e.g. properties with respect to the image processing sequence, execution results of the image processing sequence, etc. are displayed. Further, settings of the properties with respect to the image processing sequence etc. can be performed using the list 57.

When the input control unit 115 receives an operation instruction to "Object" of the flowchart or "Object" of the tree with respect to the image processing sequence, the display control unit 114 allows the display device 41 to display the list (object window) 57. In the list 57, e.g. properties with respect to the image processing sequence, image processing objects or execution results of the image processing objects when the image processing sequence is executed, etc. are displayed. Further, settings of the properties with respect to the image processing objects etc. can be performed using the list 57.

When the input control unit 115 receives an operation instruction to the tree with respect to the calibration, the display control unit 114 allows the display device 41 to display the list (calibration window) 57. In the list 57, e.g. settings of the calibration and execution results of the calibration, etc. are displayed. Further, settings of the properties of the calibration etc. using the list 57 may be enabled.

### (Addition of Image Processing Object to Image Processing Sequence)

In order to designate image processing in the image processing sequence, a predetermined image processing object is added to the image processing sequence.

In this case, as methods of adding an image processing object, there are two methods, i.e., a method using the toolbar 615 (first method) and a method using guide windows that guide input of information (second method), i.e., a method using an image processing selection wizard (step wizard).

First, the first method will be explained.

The first method is the method of adding the image processing object using the toolbar 615.

In the case using the first method, the user does not give an operation instruction to the icon 672 in the sub-window shown in Fig. 45 displayed on the display device 41. Then, in the case where the input control unit 115 does not receive the operation instruction to the icon 672 by the user, in other words, in the case where the unit receives an instruction to select a predetermined toolbar item from the plurality of toolbar items of the toolbar 615 by the user, which will be described later, the image processing sequence creation part 1115 executes the first method. That is, the image processing sequence creation part 1115 determines whether or not to use the image processing selection wizard (step S613) and, if determining not to use the image processing selection wizard, executes the first method.

In the first method, first, the user selects a type of predetermined image processing from types of image processing (image detection) (types of operation) from a menu of the image processing guide (the plurality of toolbar items of the toolbar 615), and then, selects a predetermined image processing object (a function relating to image processing) from the plurality of image processing objects in the selected type of image processing.

Specifically, first, the user performs an operation of selecting a predetermined toolbar item from the plurality of toolbar items of the toolbar 615 in the sub-window 61. Then, when the input control unit 115 receives an operation instruction to the predetermined toolbar item (selection of the type of image processing) by the user (step S621), the image processing sequence creation part 1115 gives an output command of a list 6540 according to the selected type (step S622). In response to the output command, the display control unit 114 allows the display device 41 to display the corresponding lists 6540 shown in Figs. 46, 47, 48, 49 and 50. The respective items (shown by character strings 6542) in the lists 6540 are specific examples of the image processing objects.

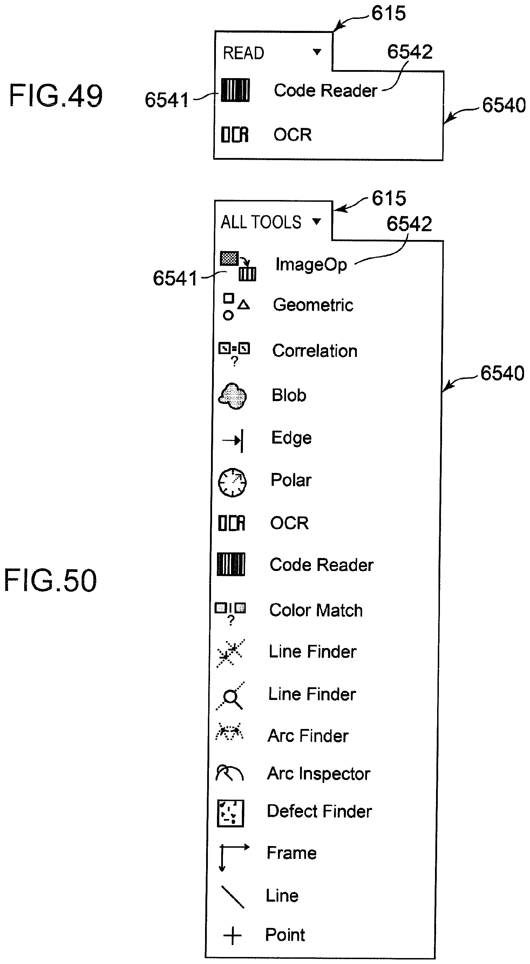

When "Detection" is selected, the list 6540 shown in Fig. 46 is displayed on the display device 41. Or, when "Count" is selected, the list 6540 shown in Fig. 47 is displayed on the display device 41. Or, when "Image" is selected, the list 6540 shown in Fig. 48 is displayed on the display device 41. Or, when "Read" is selected, the list 6540 shown in Fig. 49 is displayed on the display device 41. Or, when "All Tools" is selected, the list 6540 shown in Fig. 50 is displayed on the display device 41.

In the respective lists 6540, items including correlated icons 6541 and character strings 6542 are respectively displayed. As an example, when "Detection" is selected, e.g. a character string 6542 of "Geometric" and an icon 6541 of a predetermined figure are correlated and displayed in the list 6540.

The user selects (designates) an item of the correlated predetermined icon 6541 and character string 6542 using the necessary list 6540 of the respective lists 6540, and thereby, performs an operation of adding an image processing object corresponding to the item. Then, when the input control unit 115 receives the operation instruction by the user (selection of the image processing object) (step S623), the image processing sequence creation part 1115 adds the designated image processing object to the current image processing sequence. In the above described manner, the settings of the image processing sequence are completed. Note that, at the step of adding the image processing object, e.g. model registration (teaching) of the marker (mark) 680 or the like is performed.

Next, the second method will be explained.

The second method is the method of adding an image processing object using the image processing selection wizard (step wizard) . The types of image processing (image detection) includes e.g. detection, count, inspection, read, image processing (image), all tools, etc.

In the case of using the second method, the user gives an operation instruction to the icon 672 in the sub-window 61. Then, when the input control unit 115 receives the operation instruction to the icon 672 by the user, the image processing sequence creation part 1115 executes the second method. That is, the image processing sequence creation part 1115 determines whether or not to use the image processing selection wizard (step S613) and, if determining to use the image processing selection wizard, executes the second method.

In the second method, first, the image processing sequence creation part 1115 gives an output command of the first guide window (step S614), and the display control unit 114 displays the guide window 65 (window) shown in Fig. 51 in the picture image display part 612 of the display device 41. A box 651 is displayed in the guide window 65. In the box 651, types of image processing (types of operation) are displayed, and a type of image processing can be selected in the box 651. The types of image processing are the same as those of the first method.

In the lower part of the guide window 65, a button (icon) 6501 labeled "Cancel", a button (icon) 6502 labeled "Back", a button (icon) 6503 labeled "Next (N)>", and a button (icon) 6504 labeled "Finish (F)" are displayed. In the embodiment, of the buttons 6501, 6502, 6503, 6504, operation instructions (selection) can be made to the buttons 6501, 6503.

The user selects a type of image processing of the plurality of types of image processing, and the case where "Detection" is selected will be representatively explained as below.

When the input control unit 115 receives an operation instruction to select an item 6511 of "'Detection' , 'Set Coordinate Values of Parts '" (selection of the type of image processing) by the user (step S615), the display control unit 114 changes the color of the part of the selected item 6511 to a color different from those of the other parts of the box 651.

Then, when the input control unit 115 receives an operation instruction to the button 6503 labeled "Next (N)>" by the user, the image processing sequence creation part 1115 gives an output command of the second guide window (step S616), and the display control unit 114 displays the guide window 65 shown in Fig. 52 in the picture image display part 612 of the display device 41. A box 652 is displayed in the guide window 65. In the box 652, types of part detection tools (image processing objects) are displayed, and a type of part detection tool can be selected in the box 652. The types of part detection tools are the same as those of the list 6540 of "Detection" in the first method. That is, the image processing objects of the respective lists 6540 are respectively the same as those of the second method.

Further, in the embodiment, of the buttons 6501, 6502, 6503, 6504, operation instructions (selection) can be made to the buttons 6501, 6502, 6503.

The user selects a predetermined type of part detection tool of the plurality of types of part detection tools, and the case where "Geometric" is selected will be representatively explained as below.

When the input control unit 115 receives an operation instruction to select an item 6521 of "'Geometric', 'Detect Part using Geometric Model of Edge Base'" (selection of the image processing object) by the user (step S617), the display control unit 114 changes the color of the part of the selected item 6521 to a color different from those of the other parts of the box 652.

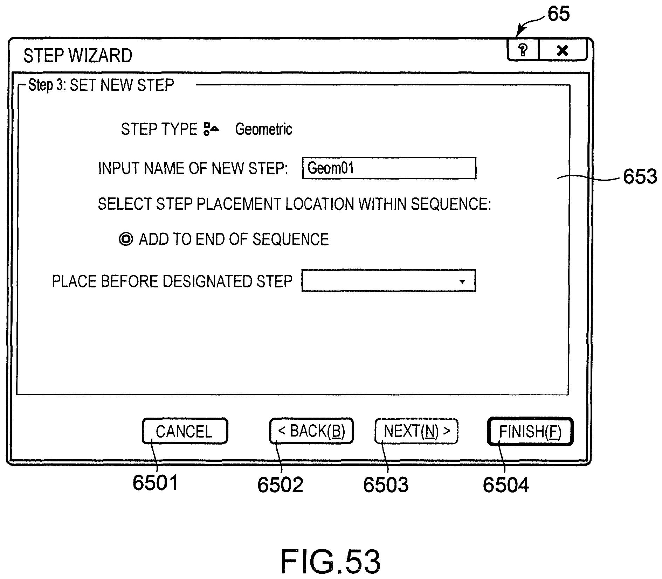

Then, when the input control unit 115 receives an operation instruction to the button 6503 labeled "Next (N)>" by the user, the image processing sequence creation part 1115 gives an output command of the third guide window (step S618), and the display control unit 114 displays the guide window 65 shown in Fig. 53 in the picture image display part 612 of the display device 41. A window 653 in which an input dialogue is provided is displayed in the guide window 65. In the window 653, a new step can be set.

In this manner, the display control unit 114 allows the display device 41 to sequentially display the three guide windows 65 dialogically with the user based on the input received by the input control unit 115. Thereby, the user selects information (items) in the dialogical form according to the sequentially displayed guide windows 65, and may simply, readily, and quickly perform a job of adding the image processing objects without complex operations.

Further, in the embodiment, of the buttons 6501, 6502, 6503, 6504, operation instructions (selection) can be made to the buttons 6501, 6502, 6504.

The user enters a predetermined name in an input dialogue of "Input Name of New Step" and performs an operation of designating an insertion location.

Then, when the input control unit 115 receives an operation instruction to the button 6504 labeled "Finish (F) " (an addition completion instruction of the image processing object) by the user (step S619), the image processing sequence creation part 1115 adds the image processing object designated to the current image processing sequence.

When the addition of the image processing object to the image processing sequence is completed, the image processing sequence creation part 1115 gives an output command of display of the added image processing object (step S620), and the display control unit 114 respectively displays the added image processing object in the tree of the image processing sequence displayed in the view part 63 and the flowchart displayed in the flowchart display part 62.

Here, as described above, the image processing sequence has at least one image processing object. The display control unit 114 can display the image processing object, and the display form of the image processing object without teaching and display form of the image processing object with teaching are different.

Thereby, the user may grasp whether or not the image processing object has been taught at a glance. As below, the specific explanation will be made.

The image processing sequence creation part 1115 determines whether or not teaching has been performed with respect to the added image processing object (step S624), if determining that the teaching has not been performed (untaught), gives an output command of display of untaught (step S625). Then, the display control unit 114 displays untaught with respect to the added untaught image processing object. That is, the display form of the untaught part of the flowchart is made different from that of the taught part. In the embodiment, an icon 6221 of "!" is displayed in the untaught part of the flowchart. Thereby, the user may distinguish the untaught image processing object at a glance.

Note that, in place of the icon 6221 of "!" or with display of the icon 6221 of "!", the color, e.g., the background color of the untaught part of the flowchart may be made different from the taught part.

When the added image processing object is untaught, in other words, teaching is necessary, the user gives an operation instruction to a button (icon) 614 labeled "Teach" with respect to the added image processing object, and performs predetermined teaching.

When the input control unit 115 receives the operation instruction to the button 614 by the user and the instructed teaching is completed with respect to the added untaught image processing object, the image processing sequence creation part 1115 adds a detail of the completed teaching. Thereby, the added image processing object can be executed. In the above described manner, the settings of the image processing sequence are completed.

Note that, in the case of "Geometric search", an example of teaching includes model registration of the marker 680.

When determining that the teaching has been performed (taught) at step S624, the image processing sequence creation part 1115 gives an output command of display of taught (step S626). Then, the display control unit 114 displays taught with respect to the added untaught image processing object. In the embodiment, the icon 6221 of "!" displayed in the flowchart is erased (See Fig. 55). Thereby, the user may distinguish that the untaught image processing object has been taught at a glance.

### (Execution of Image Processing Sequence)

The image processing sequence (creation of the image processing sequence) includes a step of inspection based on the image captured by the imaging unit 3.

Thereby, the object imaged by the imaging unit 3 may be inspected by the image processing sequence. As below, the specific explanation will be made.

First, when the input control unit 115 receives an operation instruction of "Execution of Image Processing Sequence" (execution command of the image processing sequence) by the user (step S627), first, the image processing sequence creation part 1115 transmits the setting details of the image processing sequence to the image processing apparatus 13. In this case, the robot control apparatus 12 may relay the transmission or not.

Then, the image processing apparatus 13 receives the setting details of the image processing sequence. The image processing sequence execution part 1311 reflects the setting details of the image processing sequence.

Then, the image processing sequence creation part 1115 transmits an image processing sequence execution command to execute the image processing sequence to the image processing apparatus 13. In this case, the robot control apparatus 12 may relay the transmission or not.

Then, the image processing apparatus 13 receives the image processing sequence execution command. Then, the image processing sequence execution part 1311 executes the image processing sequence.

In this case, first, the imaging unit 3 is driven by the control of the imaging unit control part 1313. The imaging unit 3 images a predetermined object such as a marker, for example, and transmits image data of the captured image to the image processing apparatus 13. Then, the image processing apparatus 13 receives the image data. Then, the image processing part 1312 performs predetermined image processing based on the image data.

As a specific example, for example, the marker (geometric model: figure) 680 shown in Fig. 54 is imaged as an example of the object, and various kinds of image processing including image recognition of the marker 680 is performed. Further, part or all of an inspection using the marker 680 are performed. That is, the creation of the image processing sequence includes a step of performing the inspection (inspection step) using the marker 680 as an example of the object.

In the embodiment, in the case of the creation of the first image processing sequence, the marker 680 attached to the center of the upper surface of the work 93 is imaged using the mobile camera 31 and predetermined processing is performed. The processing includes e.g. confirmation of detection accuracy.

Or, in the case of the creation of the second image processing sequence, the marker 680 attached to the center of the lower surface of the work 93 is imaged using the fixed camera 32 and predetermined processing is performed.

Or, in the case of the creation of the third image processing sequence, two marks (not shown) attached to the lower surface of the work 93, e.g., two markers 680 placed at a predetermined interval (object) are imaged using the fixed camera 32 and predetermined processing is performed. The processing includes e.g. correlation between the third image processing sequence and the calibration result of the fixed camera 32, inspection, etc.

Further, the specific example of the inspection includes an inspection as to whether or not a distance between a point A and a point B falls within a predetermined threshold value. In this case, the two markers 680 correspond to the point A and the point B in the inspection as to whether or not the distance between the point A and the point B falls within the predetermined threshold value. In the inspection, the distance between the point A and the point B is measured, and whether or not the distance between the point A and the point B falls within the predetermined threshold value is determined based on the calibration result of the fixed camera 32 and the captured image. Then, if the distance between the point A and the point B falls within the predetermined threshold value, "Pass" is determined and, if the distance is not within the predetermined threshold value, Fail is determined.

### (Reflection of Execution Result (Detection Result) of Image Processing Sequence)

The communication unit 116 receives the execution result (detection result) of the image processing sequence transmitted from the image processing apparatus 13 (step S628), and the computer 11 reflects the execution result of the image processing sequence.

Specifically, first, the image processing sequence creation part 1115 transmits an image processing sequence execution result transmission command to transmit the execution result of the image processing sequence to the image processing apparatus 13. In this case, the robot control apparatus 12 may relay the transmission or not.

Then, the image processing apparatus 13 transmits the execution result of the image processing sequence to the computer 11. In this case, the robot control apparatus 12 may relay or not the transmission.

Then, the computer 11 receives the execution result of the image processing sequence using the communication unit 116. Then, the image processing sequence creation part 1115 reflects the execution result of the image processing sequence.

That is, the image processing sequence creation part 1115 gives an output command of display with respect to the execution result of the image processing sequence or the like (step S629), and the display control unit 114 allows the display device 41 to display the execution result of the image processing sequence (reflects the result on the display). Further, the execution result of the image processing sequence is also reflected on the properties etc. The execution result of the image processing sequence includes e.g. image coordinates at which the marker is detected etc.

Note that, in the creation of the image processing sequence, a window for setting distortion correction of the mobile camera 31, fixed camera 32, etc. and a window for setting illumination conditions at imaging may be provided.

Then, processing of tool settings, local settings, calibration and the creation of image processing sequence, etc. using commands will be explained.

First, the summary will be briefly explained in correspondence with the claims, and then, the details will be explained later.

The control unit 110 has the control program creation part 1111 that can create the control program for driving the robot 2. The control program creation part 1111 can insert a command to call up the created image processing sequence (the argument of the command in the embodiment) into the control program.

Thereby, for example, in a control program of allowing the robot 2 to perform a predetermined action and a predetermined job, the existing (created) image processing sequence may be called up. Accordingly, time and effort to create the image processing sequence at each time when the control program is created may be omitted.

Further, the robot control apparatus 12 of the control system (control apparatus) 10 includes the control program execution part 1211 that can execute the control program for driving the robot 2. The control program execution part 1211 executes the setting of the local coordinate system using a command that enables setting of the local coordinate system different from the coordinate system of the robot 2.

Thereby, the setting of the local coordinate system may be made more quickly. In the case where the calibration is regularly and repeatedly executed and the case where the calibration is executed, then, correction of various settings of the calibration including the setting of the local coordinate system based on the execution result is repeated at a plurality of times, use of commands is particularly effective. This is because the correction based on the execution results may be easily and quickly performed.

Further, the control program execution part 1211 uses "Command VEfTool" as an example of the commands that enable tool settings for obtaining offset of the tool attached to the robot 2 to execute the tool settings.

Thereby, the tool settings may be made more quickly. In the case where the calibration is regularly and repeatedly executed and the case where the calibration is executed, then, correction of various settings of the calibration including the tool settings based on the execution result is repeated at a plurality of times, use of commands is particularly effective. This is because the correction based on the execution results may be easily and quickly performed. As below, the specific explanation will be made.

### <Processing using Commands>

The control system 10 may perform processing using commands in place of the above described display processing using the various operation windows.

The commands include action commands for execution of target processing. For example, the commands include a processing command for tool settings to make tool settings (calculate offset) using the execution result of the image processing sequence, a processing command for local settings to make local settings using the execution result of the image processing sequence, a processing command for calibration to perform a calibration using the execution result of the image processing sequence, and a command for driving the robot arm 20 so that e.g. a target within a captured image of the imaging unit 3 may move to a predetermined position using the execution result of the image processing sequence.

Further, the commands have e.g. arguments for designating the parameters.

As below, the tool settings will be representatively explained as an example, however, local settings, calibration and creation of image processing sequence may be performed in the same manner.

### (Program Creation, Input)

The user creates a program using a command and inputs (creates and inputs) the program in the computer 11 using the input device 42. When the input control unit (receiving unit) 115 of the computer 11 receives the program input from the input device 42 and stores the program in the storage unit 113. Note that the creation of program includes the case where a program is newly created and the case where the existing program is rewritten or added.

An example of the program is as follows. Further, the program enables the same settings as the above described tool settings.

### Function Main

### Reset

### Motor On

VDefTool 1, VISION_DEFTOOL_FIXEDNOCAL, TestVisSeq, 180, 5 Fend
"VDefTool 1, VISION_DEFTOOL_FIXEDNOCAL, TestVisSeq, 180, 5" is a command (the respective arguments are examples).

Of the command, "VDefTool" is a command name.

Further, the arguments (argument names) in the command VDefTool includes e.g. the same parameters as the parameters that can be set in the first tool setting window 71a, the second tool setting window (not shown), the third tool setting window 71b, the fourth tool setting window (not shown), and the fifth tool setting window 71c in the above described tool settings. The specific examples include e.g. "toolNumber", "tool DefType", "sequence", "[finalAngle]", "[initialAngle]", "[targetTolerance]".

"toolNumber" is the save number (tool number) for saving the tool setting results. The specific examples include 1 to 15.

Further, "tool DefType" is the tool type. The specific examples are as follows.

VISION_DEFTOOL_FIXEDNOCAL: make tool settings using the fixed camera with no calibration.

VISION_DEFTOOL_J4CAM: calculate image center of the mobile camera provided on the fourth arm.

VISION_DEFTOOL_J6CAM: calculate image center of the mobile camera provided on the sixth arm.

"sequence" is an image processing sequence used for detection of a tool (object).

"[finalAngle]" is an angle to which a tool/camera tool is rotated (final rotation angle).

"[initialAngle]" is an angle to which the tool/camera tool is rotated (initial rotation angle) at tentative tool settings.

"[targetTolerance]" is a pixel distance at which the execution result of the image processing sequence (detection result) is regarded as the same as a target position (tolerance of the target).

### (Build, Transmit Project)

The created program (project) is built and converted (compiled) into a language (data strings) that can be interpreted by the robot control apparatus 12.

In this case, first, when the input control unit 115 receives an operation instruction of "Build" by the user, the control program build part 1112 of the computer 11 builds a program and compiles the program to a language that can be interpreted by the robot control apparatus 12.

Then, the computer 11 transmits the compiled program to the robot control apparatus 12. The robot control apparatus 12 receives the program transmitted from the computer 11 and stores the program in the storage unit 123.

Then, the computer 11 transmits necessary respective information including image processing detection settings to the image processing apparatus 13. In this case, the robot control apparatus 12 may relay the transmission or not. The image processing apparatus 13 receives the image processing detection settings transmitted from the computer 11 and stores the settings in the storage unit 133.

### (Execution of Processing of Tool Settings (Execution of Program)

In the case where the user allows the robot vision system 100 to perform processing of tool settings, the user makes an operation instruction to a predetermined icon (not shown) displayed in the display device 41.

When the input control unit 115 receives an operation instruction of "start selection, execution of main function of program" (execution command of processing of tool settings) by the user, the computer 11 first transmits a command of execution processing of the program to the robot control apparatus 12.

Then, the image processing apparatus 13 receives the command (instruction) of execution processing of the program. Then, the control program execution part 1211 of the image processing apparatus 13 starts the execution processing of the main function of the program. Then, when the control program execution part 1211 finds execution processing of the command VDefTool, the part transmits a command of the execution processing of the command VDefTool (execution command of the processing of tool settings) with the argument of the command VDefTool to the computer 11.

Then, the computer 11 receives the command of the execution processing of the command VDefTool and executes (starts) the processing of the command VDefTool, i.e., the processing of tool settings. Note that the execution of the processing of tool settings is the same as the above described [2B] and the explanation is omitted. Further, the reflection of the tool setting result is the same as the above described [3B] and the explanation is omitted.

Using the above described commands, the respective processing including tool settings may be easily and quickly executed.

In the above described tool settings using the tool setting windows, in the case where the processing of tool setting is executed, at each time, the five tool setting windows are sequentially displayed by the display device 41, various settings are made in the tool settings, and then, the execution of the processing of the tool settings is enabled, and accordingly, time and labor are taken for preparation at each time. On the other hand, using the commands, when the arguments of the commands are once set, the settings are unnecessary in the next processing, and accordingly, the processing of tool settings may be easily and quickly executed.

Further, for example, in the case where the calibration is executed after the execution of the processing of tool settings, using the commands, the processing of tool settings and the calibration may be continuously and automatically executed and the convenience is high.

Furthermore, in the case where various settings in the tool settings are changed, the various settings may be changed by a simple job of changing the corresponding arguments to the commands .

As above, the tool settings are explained as an example, and the local settings, calibration, creation of image processing sequence, etc. may be respectively and similarly executed using commands.

For example, in the local settings, a command that enable setting of a local coordinate system different from the coordinate system of the robot 2 is created. Then, the control program execution part 1211 executes setting of the local coordinate system in response to the command. Note that the setting of the local coordinate system (execution of the processing of local settings) is the same as the above described [2A] and the explanation is omitted. Further, the reflection of the local setting result is the same as the above described [3A] and the explanation is omitted.

The above described robot vision system 100 includes the control system 10 as "control apparatus" and the robot 2 and the imaging unit 3 controlled by the control system 10. According to the robot vision system 100, the system includes the above described control system 10, and thereby, the robot 2 may properly perform the action with respect to the calibration based on the captured image (image data) from the imaging unit 3. Accordingly, the accuracy of the calibration may be improved. As a result, the accuracy of the job of the robot 2 may be improved.

Further, the robot 2 is controlled by the control system 10 as "control apparatus". Accordingly, the robot 2 may properly perform the action with respect to the calibration under the control of the control system 10.

### [Reference Signs List]

2, 2a, 2b... robot, 3... imaging unit, 10... control system, 11... computer, 12... robot control apparatus, 13... image processing apparatus, 20... robot arm, 21... first arm, 22... second arm, 23... third arm, 24... fourth arm, 25... fifth arm, 26... sixth arm, 31... mobile camera, 32... fixed camera, 41... display device, 42... input device, 50... main window, 51... sub-window, 52... panel, 53... tab, 54... jog panel, 56... tab, 57... list, 60... property setting window, 61... sub-window, 62... flowchart display part, 63... view part, 65... guide window, 68... window, 71, 71a, 71b, 71c... tool setting window, 72, 72a, 72b, 72c... local setting window, 73, 73a, 73b, 73c, 73d, 73e, 73f, 73g... calibration creation window, 90... worktable, 91... feed board, 92... calibration plate, 93... work, 94... removal board for pass, 95... removal board for fail, 100... robot vision system, 110... processing unit, 111... control unit, 112... main memory, 113... storage unit, 114... display control unit, 115... input control unit, 116... communication unit, 121... control unit, 122... main memory, 123... storage unit, 126... communication unit, 131... control unit, 132... main memory, 133... storage unit, 136... communication unit, 201... first arm, 202... second arm, 203... spline shaft, 210... base, 270... hand, 280... drive unit, 281... position sensor, 283... motor driver, 290... force detection unit, 502... toolbar, 521... jog motion group, 522... teach group, 601... icon, 612... picture image display part, 613... execution group, 614... button, 615... toolbar, 616... teach group, 621... display part, 622... display part, 651, 652... box, 653... window, 660, 660a, 660b, 660c... flowchart, 661, 662, 662a, 662b... flow, 663... dialogue box, 664, 664a, 664b, 664c...flow, 671, 672... icon, 680... marker, 681, 682... area, 683... OK button, 684... cancel button, 701... icon for tool setting, 702... icon for local setting, 703... icon for calibration creation, 711... radio button, 712... dropdown list, 713... textbox, 714... dropdown list, 720... window, 721... radio button, 722... dropdown list, 723... radio button, 724... jog group, 725... picture image display part, 726... jog & teach panel, 727... textbox, 728... dropdown list, 729... checkbox, 730... window, 733... dropdown list, 801... command input icon, 1110... calibration control part, 1111... control program creation part, 1112... control program build part, 1113... calibration creation part, 1114... calibration execution part, 1115... image processing sequence creation part, 1211... control program execution part, 1212... robot control part, 1311... image processing sequence execution part, 1312... image processing part, 1313... imaging unit control part, 5212... button, 6151... teach button, 6152... calibration execution button, 6221... icon, 6501, 6502, 6503, 6504... button, 6511, 6521... item, 6540... list, 6541... icon, 6542... character string, 7101, 7102, 7103, 7104, 7105, 7106, 7201, 7202, 7203, 7204, 7205... button, 7206... teach button, 7208, 7241, 7301, 7302, 7303, 7304... button, 7305... OK button, 7306... cancel button, 7307... button, 7311, 7312, 7313... dropdown list, 7321... radio button, 7322... dropdown list, 7323... group, 7324... radio button, 7341... local wizard button, 7342... dropdown list, 7351... tool wizard button, 7352... dropdown list, 7353... radio button, 7354... checkbox, 7361... checkbox, 7371... textbox, 7372... checkbox, 7373... teach button, A31, A32... optical axis, J3... axis, O6, rotation axis, P... tool center point, S111, S112, S113, S114, S115, S116, S117, S118, S119, S120, S121, S122, S123, S124, S125, S126, S127, S128, S129, S130, S131, S132, S211, S212, S213, S214, S215, S216, S217, S218, S219, S220, S221, S222, S223, S224, S225, S226a, S226b, S227, S228, S229, S31, S311, S312, S313, S314, S315, S316, S317, S318, S319, S320, S321, S322, S3323, S324, S325, S326, S327, S328, S329, S33, S33, S330, S41, S411, S412, S413, S414, S415, S416, S417, S418, S419, S42, S420, S421, S422, S423, S424, S425, S426, S427, S428, S429, S43, S430, S51, S511, S512, S513, S514, S515, S516, S517, S518, S519, S52, S520, S521, S522, S523, S524, S525, S526, S527, S528, S529, S530, S531, S532, S533, S534, S535, S536, S537, S538, S539, S54, S540, S541, S542, S543, S544, S545, S546, S547, S611, S612, S613, S614, S615, S616, S617, S618, S619, S620, S621, S622, S623, S624, S625, S626, S627, S628, S629... step

## Claims

1. A control apparatus (12) that can control driving of a robot (2) and an imaging unit (3), the control apparatus comprises a processing unit (110) having:
an image processing sequence creation part (1115) that creates setting details on an image processing sequence containing image processing of a captured image captured by the imaging unit; and
a calibration creation part (1113) that creates setting details on a calibration of correlating a robot coordinate system and an imaging unit coordinate system,
wherein the processing unit can call up the image processing sequence created by the image processing sequence creation part in creation of the setting details on the calibration by the calibration creation part,
**characterized in that**
the processing unit (110) has a display control part (114) that controls driving of a display unit (41), and
the display control part displays a plurality of image processing sequences created by the image processing sequence creation part in a calibration guide window (73c) that guides input of the setting details on the calibration,
wherein the display control part displays the created plurality of image processing sequences in a dropdown list (733) in the calibration guide window (73c).

2. The control apparatus (12) according to claim 1, wherein the processing unit has a control program creation part (1111) that can create a control program for driving the robot, and
the control program creation part can insert a command to call up the created image processing sequence into the control program.

3. The control apparatus (12) according to claim 1 or 2, wherein the image processing sequence contains a step of inspection based on an image captured by the imaging unit.

4. The control apparatus (12) according to claim 1, wherein
the display control part allows the display unit to display calibration settings in which the setting details on the calibration have been created and image processing sequence settings in which the setting details on the image processing sequence have been created in the same window.

5. The control apparatus (12) according to claim 4, wherein the display control part displays the calibration settings and the image processing sequence settings in tree views.

6. The control apparatus (12) according to claim 4 or 5, wherein the display control part displays the calibration settings and the image processing sequence settings correlating with each other.

7. The control apparatus (12) according to any one of claims 4 to 6, wherein the image processing sequence has at least one image processing object,
the display control part can display the image processing object, and
a display form of the image processing object that has not been taught and a display form of the image processing object that has been taught are different.

8. A robot (2) controlled by the control apparatus (12) according to any one of claims 1 to 7.

9. A robot system (100) comprising the control apparatus (12) according to any one of claims 1 to 7, and a robot (2) and an imaging unit (3) controlled by the control apparatus (12).

## Patentansprüche

1. Steuereinrichtung (12), die Antrieb eines Roboters (2) und einer Bildgebungseinheit (3) steuern kann, wobei die Steuereinrichtung eine Verarbeitungseinheit (110) umfasst, die aufweist:
ein Bildverarbeitungssequenzerstellungsteil (1115), das Einstellungsdetails zu einer Bildverarbeitungssequenz erstellt, die Bildverarbeitung eines aufgenommenen Bilds enthält, das durch die Bildgebungseinheit aufgenommen wird; und
ein Kalibrierungserstellungsteil (1113), das Einstellungsdetails zu einer Kalibrierung einer Korrelation eines Roboterkoordinatensystems und eines Bildeinheitskoordinatensystems erstellt,
wobei die Verarbeitungseinheit bei der Erstellung der Einstellungsdetails zu der Kalibrierung durch das Kalibrierungserstellungsteil die Bildverarbeitungssequenz aufrufen kann, die durch das Bildverarbeitungssequenzerstellungsteil erstellt wird,
**dadurch gekennzeichnet, dass**
die Verarbeitungseinheit (110) ein Anzeigesteuerteil (114) aufweist, das Antrieb einer Anzeigeeinheit (41) steuert, und
das Anzeigesteuerteil eine Vielzahl von Bildverarbeitungssequenzen, die durch das Bildverarbeitungssequenzerstellungsteil erstellt werden, in einem Kalibrierungsführungsfenster (73c) anzeigt, das Eingabe der Einstellungsdetails zu der Kalibrierung führt,
wobei das Anzeigesteuerteil die erstellte Vielzahl von Bildverarbeitungssequenzen in einer Dropdown-Liste (733) in dem Kalibrierungsführungsfenster (73c) anzeigt.

2. Steuereinrichtung (12) nach Anspruch 1, wobei die Verarbeitungseinheit ein Steuerprogrammerstellungsteil (1111) aufweist, das ein Steuerprogramm zum Antreiben des Roboters erstellen kann, und
das Steuerprogrammerstellungsteil einen Befehl in das Steuerprogramm einsetzen kann, um die erstellte Bildverarbeitungssequenz aufzurufen.

3. Steuereinrichtung (12) nach Anspruch 1 oder 2, wobei die Bildverarbeitungssequenz einen Schritt zur Überprüfung basierend auf einem Bild, das durch die Bildgebungseinheit aufgenommen wird, enthält.

4. Steuereinrichtung (12) nach Anspruch 1, wobei
das Anzeigesteuerteil der Anzeigeeinheit ermöglicht, Kalibrierungseinstellungen, in welchen die Einstellungsdetails zu der Kalibrierung erstellt wurden, und Bildverarbeitungssequenzeinstellungen, in welchen die Einstellungsdetails zu der Bildverarbeitungssequenz erstellt wurden, in demselben Fenster anzuzeigen.

5. Steuereinrichtung (12) nach Anspruch 4, wobei das Anzeigesteuerteil die Kalibrierungseinstellungen und die Bildverarbeitungssequenzeinstellungen in Baumansichten anzeigt.

6. Steuereinrichtung (12) nach Anspruch 4 oder 5, wobei das Anzeigesteuerteil die Kalibrierungseinstellungen und die Bildverarbeitungssequenzeinstellungen miteinander korreliert anzeigt.

7. Steuereinrichtung (12) nach einem der Ansprüche 4 bis 6, wobei die Bildverarbeitungssequenz mindestens ein Bildverarbeitungsobjekt aufweist,
das Anzeigesteuerteil das Bildverarbeitungsobjekt anzeigen kann und
eine Anzeigeform des Bildverarbeitungsobjekts, das nicht gelehrt wurde, und eine Anzeigeform des Bildverarbeitungsobjekts, das gelehrt wurde, unterschiedlich sind.

8. Roboter (2), der durch die Steuereinrichtung (12) nach einem der Ansprüche 1 bis 7 gesteuert wird.

9. Robotersystem (100), umfassend die Steuereinrichtung (12) nach einem der Ansprüche 1 bis 7 und einen Roboter (2) und eine Bildgebungseinheit (3), die durch die Steuereinrichtung (12) gesteuert werden.

## Revendications

1. Appareil de commande (12) qui peut commander l'entraînement d'un robot (2) et d'une unité d'imagerie (3), l'appareil de commande comprend une unité de traitement (110) présentant :
une partie de création de séquence de traitement d'image (1115) qui crée des détails de réglage concernant une séquence de traitement d'image contenant un traitement d'image d'une image capturée capturée par l'unité d'imagerie ; et
une partie de création d'étalonnage (1113) qui crée des détails de réglage concernant un étalonnage de corrélation d'un système de coordonnées de robot et d'un système de coordonnées d'unité d'imagerie,
dans lequel l'unité de traitement peut appeler la séquence de traitement d'image créée par la partie de création de séquence de traitement d'image lors de la création des détails de réglage concernant l'étalonnage par la partie de création d'étalonnage,
**caractérisé en ce que**
l'unité de traitement (110) présente une partie de commande d'affichage (114) qui commande l'entraînement d'une unité d'affichage (41), et
la partie de commande d'affichage affiche une pluralité de séquences de traitement d'image créées par la partie de création de séquence de traitement d'image dans une fenêtre de guidage d'étalonnage (73c) qui guide l'entrée des détails de réglage concernant l'étalonnage,
dans lequel la partie de commande d'affichage affiche la pluralité de séquences de traitement d'image créées dans une liste déroulante (733) dans la fenêtre de guidage d'étalonnage (73c).

2. Appareil de commande (12) selon la revendication 1, dans lequel l'unité de traitement présente une partie de création de programme de commande (1111) qui peut créer un programme de commande pour entraîner le robot, et
la partie de création de programme de commande peut insérer une instruction pour appeler la séquence de traitement d'image créée dans le programme de commande.

3. Appareil de commande (12) selon la revendication 1 ou 2, dans lequel la séquence de traitement d'image contient une étape d'inspection basée sur une image capturée par l'unité d'imagerie.

4. Appareil de commande (12) selon la revendication 1, dans lequel
la partie de commande d'affichage permet à l'unité d'affichage d'afficher des réglages d'étalonnage dans lesquels les détails de réglage concernant l'étalonnage ont été créés et des réglages de séquence de traitement d'image dans lesquels les détails de réglage concernant la séquence de traitement d'image ont été créés dans la même fenêtre.

5. Appareil de commande (12) selon la revendication 4, dans lequel la partie de commande d'affichage affiche les réglages d'étalonnage et les réglages de séquence de traitement d'image sur des arborescences.

6. Appareil de commande (12) selon la revendication 4 ou 5, dans lequel la partie de commande d'affichage affiche les réglages d'étalonnage et les réglages de séquence de traitement d'image se corrélant entre eux.

7. Appareil de commande (12) selon l'une quelconque des revendications 4 à 6, dans lequel la séquence de traitement d'image présente au moins un objet de traitement d'image,
la partie de commande d'affichage peut afficher l'objet de traitement d'image, et
une forme d'affichage de l'objet de traitement d'image qui n'a pas été enseigné et une forme d'affichage de l'objet de traitement d'image qui a été enseigné sont différentes.

8. Robot (2) commandé par l'appareil de commande (12) selon l'une quelconque des revendications 1 à 7.

9. Système de robot (100) comprenant l'appareil de commande (12) selon l'une quelconque des revendications 1 à 7, et un robot (2) et une unité d'imagerie (3) commandés par l'appareil de commande (12).
